(19) Europäisches Patentamt
European Patent Office
Office européen des brevets

(11) EP 0 609 099 B1

(12) **EUROPEAN PATENT SPECIFICATION**

(45) Date of publication and mention of the grant of the patent:
**26.03.1997 Bulletin 1997/13**

(21) Application number: **94300667.6**

(22) Date of filing: **28.01.1994**

(51) Int. Cl.$^6$: **A01N 55/10**, A01C 1/06
// (A01N55/00, 43:80, 35:02, 43:08, 33:12, 31:08, 37:40, 47:38, 47:18, 43:78, 47:34, 43:653, 55:00, 43:84, 59:20)

(54) **Antimicrobial and antifungal compositions comprising silicon-compounds, and their use in agriculture and horticulture**

Antimikrobielle und fungizide Zusammensetzungen enthaltend Siliziumverbindungen, und ihre Verwendung in der Landwirtschaft und in Gartenbau

Compositions antimicrobiennes et antifongique contenant composés de silicium, et leur utilisation par l'agriculture et l'horticulture

(84) Designated Contracting States:
**AT BE CH DE DK ES FR GB GR IE IT LI NL PT SE**

(30) Priority: **28.01.1993 JP 12453/93**
**16.02.1993 JP 26623/93**
**16.02.1993 JP 26624/93**
**06.05.1993 JP 105237/93**
**29.09.1993 JP 242462/93**

(43) Date of publication of application:
**03.08.1994 Bulletin 1994/31**

(73) Proprietor: **SANKYO COMPANY LIMITED**
**Chuo-ku, Tokyo 103 (JP)**

(72) Inventors:
- **Takahi, Yukiyoshi, c/o Sankyo Company Limited Yasu-gun, Shiga-ken (JP)**
- **Takeshiba, Hideo, c/o Sankyo Company Limited Yasu-gun, Shiga-ken (JP)**
- **Kato, Shigehiro, c/o Sankyo Company Limited Yasu-gun, Shiga-ken (JP)**
- **Tobitsuka, Junzo, c/o Sankyo Company Limited Yasu-gun, Shiga-ken (JP)**
- **Ohkouchi, Takeo, c/o Sankyo Company Limited Yasu-gun, Shiga-ken (JP)**
- **Kondo, Yasuhiko, c/o Sankyo Company Limited Yasu-gun, Shiga-ken (JP)**
- **Tsuda, Mikio, c/o Sankyo Company Limited Yasu-gun, Shiga-ken (JP)**
- **Ohta, Hiroshi, c/o Sankyo Company Limited Yasu-gun, Shiga-ken (JP)**

(74) Representative: **Gibson, Christian John Robert et al**
**MARKS & CLERK,**
**57/60 Lincoln's Inn Fields**
**London WC2A 3LS (GB)**

(56) References cited:
**EP-A- 0 537 957**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 609 099 B1

## Description

The present invention relates to antimicrobial and antifungal compositions for use in agriculture and horticulture, and which contain at least one 3-(1,2,4-triazol-1-yl or imidazol-1-yl)-2-hydroxy-2-(optionally substituted phenyl)-1-(trisubstituted silyl)propane derivative together with at least one further antifungal and/or antimicrobial compound.

Compounds of formula (I) which are used in the formulations of the present invention are disclosed in EP-A-537 957.

The compounds of formula (I) are highly effective against various fungal crop diseases. For example, these compounds are useful against important rice diseases, such as blast and sheath blight, and these diseases can be controlled effectively by either foliar application or submerged application of the compound.

The compounds of formula (I) are also effective against other fungal diseases of plants, and can be used to treat the soil directly, or can be used as seed coatings, for example, in order to control such diverse diseases as: damping-off caused by Rhizoctonia sp. in various crops, including sugar-beet, cotton-plant, wheat, cucurbitaceous crops and leguminous crops; and soil-borne diseases, such as southern blight in eggplant and cucurbitaceous crops, black scurf in potatoes and eye spot in wheat.

The use of 3-hydroxy-5-methylisoxazole and its salts as agricultural and horticultural fungicides is well known. 3-Hydroxy-5-methylisoxazole is also known by the common name "hymexazol" and is sold by Sankyo Co. Ltd. under the trade name "Tachigaren", and is disclosed, inter alia, in GB-A-1 113 618. Subsequent British Patents No. 1 199 737 and 1 256 835 disclose other methods of preparing it, as well as disclosing its alkali metal salts. Japanese Patent Applications No. Sho 45-38953, Sho 45-72625, Sho 39-73350, Sho 45-29263, Sho 45-108798, Sho 42-2440 and Sho 48-38148 disclose various specific uses for this compound for the treatment or prevention of various plant diseases or as a plant growth regulator, including its use as a soil fungicide. A complete review of the uses and activities of 3-hydroxy-5-methylisoxazole appears in Ann. Sankyo Res. Lab., 25, 1 - 51 (1973).

The calcium salt and the hydrated calcium salt of 3-hydroxy-5-methylisoxazole show greater stability than the parent compound, but are still broken down by microbial action in the soil. The calcium salt is disclosed in Japanese Patent Publication Sho 48-38148, and the hydrated salt is disclosed in EP-A-569 210.

Soil-borne diseases affecting various kinds of crops and caused by soil-inhabiting pathogens have resulted in major problems for a long time in crop culture and agricultural administration, because they cause considerable damage and because they are difficult to control adequately. These problems have been made worse by the tendency, in recent years, to adopt schemes of intensive or mono- culture which result in a single type of crops being cultivated for many years continuously on the same soil, either in greenhouses or in open fields. As a consequence, occurrences of soil-borne diseases have greatly increased, and these have resulted in much damage and financial losses, since they can lead to a reduced or non-existent harvest. Typical soil inhabiting pathogens causing such soil-borne diseases include microorganisms belonging to the genera Fusarium, Pythium, Aphanomyces and Rhizoctonia.

3-Hydroxy-5-methylisoxazole is at present widely used to prevent a wide range of such soil-borne diseases caused by soil inhabiting pathogens because it is both effective and highly safe. For example, it is used for the prevention of seedling damping-off of rice and other crops caused by Pythium and Fusarium spp., Fusarium wilts of various crops caused by Fusarium sp. and sugar beat damping-off caused by Aphanomyces sp. Other diseases against which 3-hydroxy-5-methylizoxazole is effective include murenae disease (rice) and gummy stem blight (cucumber). As with the compounds of formula (I), 3-hydroxy-5-methylisoxazole can prevent these soil-borne diseases not only by direct application to the soil, but also by treatment of seeds of potentially affected plants.

The compounds of formula (I) are not commercially useful against crop diseases caused by the Phycomycetes, particularly those caused by Pythium sp. and Aphanomyces sp. In addition, if these compounds are used in large quantities, there is some danger of poisoning subsequent harvests. On the other hand, 3-hydroxy-5-methylisoxazole is rapidly broken down by microbial action, so that its use, alone, is of strictly limited value.

The benzimidazole series of compounds has proven extremely effective against a broad spectrum of infections, and these compounds are still widely used. However, the heavy use of these compounds has led to the occurrence of resistant strains of pathogenic microorganism.

Ergosterol biosynthesis inhibitors, including the compounds of formula (I), were developed to follow the benzimidazoles, and these have also proven extremely useful. However, the problem with inhibitors of ergosterol biosynthesis is that they are not effective against as many infections as the benzimidazole compounds, particularly not against some fungi and not against bacteria in general.

Certain compounds related to benzimidazole, and which may be used in the compositions of the present invention, are as follows:

methyl 1-(butylcarbamoyl)-2-benzimidazolecarbamate ["benomyl"];
methyl 2-benzimidazolecarbamate ["MBC", "carbendazim"];
2-(4-thiazolyl)-1H-benzimidazole ["TBZ", "thiabendazole"]; and
1,2-bis(3-methoxycarbonyl-2-thioureido)benzene ["thiophanate-methyl"].

These compounds are well known as fungicidal agents in the agricultural and horticultural fields, and may be used as foliar spray formulations, soil treatments or seed treatments to prevent various diseases such as blights of vegetables, fruit trees and grain crops.

The above benzimidazole-related compounds have excellent activity against an extended spectrum of fungi and cause little or no chemical damage to crops [c.f. British Patent Nos. 1071421A and 1191406A; Japanese Patent Publication No's Sho 45-250720 and Sho 45-11319; and "Pesticide Manual", 9th Edition (1991) Published by The British Crop Protection Council].

Despite the high activity of these compounds, resistant strains of fungi have appeared, and it is currently difficult to prevent powdery mildew and gray mould in crops, Cercospora leaf spot in beet, eye spot in wheat and bakanae disease in rice, owing to the prevalence of resistant pathogens.

Certain inhibitors of ergosterol biosynthesis which are useful in the formulations of the present invention are as follows:

(1RS,2RS;1RS,2SR)-1-(4-chlorophenoxy)-3,3-dimethyl-1-(1H-1,2,4-triazol-1-yl)butan-2-ol ["triadimenol"];
1-{[2-(2,4-dichlorophenyl)-4-propyl-1,3-dioxolan-2-yl]-methyl}-1H-1,2,4-triazole ["propiconazole"];
(RS)-2-(2,4-dichlorophenyl)-1-(1H-1,2,4-triazol-1-yl)hexan-2-ol;
bis(4-fluorophenyl)methyl(1H-1,2,4-triazol-1-ylmethyl)silane ["flusilazole"];
(E)-4-chloro-α,α,α-trifluoro-N-(1-imidazol-1-yl-2-propoxyethylidene)-O-toluidine ["triflumizole"];
N-propyl-N-[2-(2,4,6-trichlorophenoxy)ethyl]-1H-imidazole-1-carboxamide ["prochloraz"];
cis-4-[3-(4-tert-butylphenyl)-2-methylpropyl]-2,6-dimethylmorpholine ["fenpropimorph"];
(1RS,5RS;1RS,5SR)-5-(4-chlorobenzyl)-2,2-dimethyl-1-(1H-1,2,4-triazol-1-ylmethyl)cyclopentanol;
2,2-dimethyl-4-chloro-5-(4-chlorobenzylidene)-1-cyclopentanone;
(2RS,3RS;2RS,3SR)-2-(4-chlorophenyl)-3-cyclopropyl-1-(1H-1,2,4-triazol-1-yl)butan-2-ol;
4-chlorobenzyl N-2,4-dichlorophenyl-2-(1H-1,2,4-triazol-1-yl)thioacetamidate;
2-(4-chlorophenyl)-2-(1H-1,2,4-triazol-1-ylmethyl)hexanenitrile ["myclobutanil"];
pent-4-enyl N-furfuryl-N-imidazol-1-ylcarbonyl-DL-homoalaninate ["pefurazoate"];
2',4'-dichloro-2-(3-pyridyl)acetophenone-O-methyloxime ["pyrifenox"];
(RS)-1-(4-chlorophenyl)-4,4-dimethyl-3-(1H-1,2,4-triazol-1-ylmethyl)pentan-3-ol;
1-(4-chlorophenoxy)-3,3-dimethyl-1-(1H-1,2,4-triazol-1-yl)-2-butanone ["triadimefon"]; and
2,6-dimethyl-4-tridecylmorpholine ["tridemorph"].

The above compounds and other inhibitors of ergosterol biosynthesis are well known as agricultural and horticultural fungicides, and can be used for the prevention of various diseases in vegetables, fruit trees and grain crops by spraying, seed treatment or soil treatment, for example. One advantage of these compounds is their minimal phytotoxicity when used in antifungal concentrations.

Unfortunately, there is some danger of phytotoxicity occurring after prolonged use of ergosterol biosynthesis inhibitors but, again, a major problem is that resistant pathogens start to appear after repeated application. As with the benzimidazole-related compounds, it has now become difficult to prevent powdery mildew in grain and vegetable crops, and bakanae disease in rice, which diseases were previously treatable by inhibitors of ergosterol biosynthesis.

Other compounds which are useful in the compositions of the present invention include 1,2-benzisothiazolin-3-one (a commercially available antibacterial and antifungal agent) and cupric hydroxide, which is also commercially available and is often used as an agricultural and horticultural fungicide.

From the foregoing, it will be appreciated that there is a requirement to find treatments which are effective against plant pathogens and which will not lead to the development of resistance. There is also a requirement for treatments effective against benzimidazole-resistant pathogens.

We have now found that compositions containing compounds of formula (I) in combination with a further antifungal and/or antimicrobial agent, such as are exemplified above and as defined below, have enhanced efficacy when compared with any of the components singly, and that the duration of activity is often prolonged. In addition, many such compositions seem to act synergistically, so that the efficacy of the compositions is far greater than could be predicted from the activities of the individual components. Furthermore, the compositions of the present invention can often be used in very small quantities, and can often be used against resistant pathogens.

Accordingly, in one aspect, the present invention provides an agrochemical composition which comprises at least one compound of formula (I):

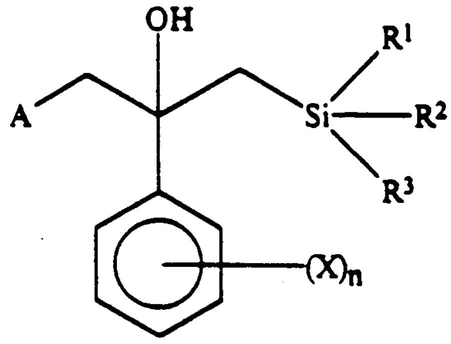

(I)

[wherein:

A represents a 1,2,4-triazol-1-yl group or an imidazol-1-yl group;

n represents 0, 1, 2 or 3, and, when n represents 2 or 3, the groups represented by X may be the same or different;

X represents a halogen atom, a phenyl group, an alkyl group having from 1 to 6 carbon atoms, a haloalkyl group having from 1 to 6 carbon atoms and having at least one halogen atom, an alkoxy group having from 1 to 6 carbon atoms, or a haloalkoxy group having from 1 to 6 carbon atoms and having at least one halogen atom, or $(X)_n$ represents an alkylenedioxy group having 1 or 2 carbon atoms;

$R^1$ represents an alkyl group having from 1 to 4 carbon atoms or a phenyl group which is unsubstituted or is substituted by at least one halogen atom; and

$R^2$ and $R^3$ are the same or different and each represents an alkyl group having from 1 to 4 carbon atoms;

or a salt thereof]

in admixture with or in association with at least one antimicrobial agent and/or further antifungal agent other than a compound of formula (I).

The present invention also provides an agricultural composition for the protection of plants and plant reproductive matter from fungal and/or microbial attack, which composition comprises cidally or statically effective amounts of the compounds defined above in admixture with an agricultural carrier or diluent.

The present invention further provides the use of a combination of compounds as described above in the manufacture of an agricultural preparation for the treatment and/or prophylaxis of fungal and/or microbial infections of plants.

The present invention still further provides a method of protecting plants and plant reproductive matter from fungal or microbial attack, which method comprises applying to said plants or plant reproductive matter or to a locus including the same cidally or statically effective amounts of compounds as defined above.

The present invention particularly provides compositions as defined above wherein the combination of components is synergistic in its antifungal and/or antimicrobial action.

As used herein, the term "antimicrobial", and associated terms, relates to cidal or static activity against microbes, particularly plant pathogens, and especially pathogenic bacteria.

The compositions of the present invention are effective against a wide range of microorganisms. In addition, the majority exhibit a synergistic effect against plant pathogens, especially fungal pathogens.

The antimicrobial and/or antifungal agents may be selected from a wide range of such compounds using criteria well recognised in the art. We prefer to use an antibacterial or antifungal compound which is known to be very safe for industrial use, or a bactericidal or fungicidal compound known for agricultural use.

Examples of suitable antimicrobial agents for use in the compositions of the present invention include: aldehydes and compounds capable of releasing aldehydes during use (i.e. when applied to the soil, water, plants, plant material or other material to be treated), alcohols including halogen-substituted nitro-alcohol derivatives and alcohols having an

aryl substituent, quaternary ammonium salts, lipophilic weak acids (including benzoic acid, substituted benzoic acids, esters of these acids and phenols), thiazole derivatives (including isothiazolones), epoxides, substituted benzene and pyridine derivatives (especially the halogenated derivatives), compounds capable of releasing carbon disulphide during use including the tetrahydro-thiadiazine thiones, guanidines and biguanides, antimicrobial halogen-substituted amides, organic and inorganic copper compounds, arsenic compounds including arsines, and various other antimicrobial agents including other fungicides and anthelmintics.

Preferred groups of antifungal and/or antimicrobial compounds for use in combination with the compounds of formula (I) in the compositions of the present invention are as follows:

A) 3-Hydroxy-5-methylisoxazole and its salts. These compounds are antifungal agents, and may be represented by the formula (A):

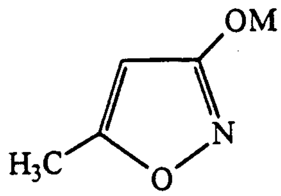

**(A)**

wherein M represents a hydrogen atom or a salt-forming moiety.

Where a salt is used, the nature of the salt is not critical to the present invention, and any agriculturally acceptable salt may be employed, as is well known in the art. Examples of suitable salts include those described in Japanese Patent Application Kokai No's Sho 48-38148 and Sho 46-32181, especially metal salts or ammonium salts, for example: alkali metal salts, such as the sodium or potassium salts; alkaline earth metal salts, such as the calcium salt; other metal salts, such as the magnesium, manganese, ferrous, copper and zinc salts; and organic salts and inorganic salts, such as the ammonium salt. Of these, we particularly prefer the calcium salt, and most especially the dihydrate of the calcium salt of 3-hydroxy-5-methylisoxazole.

B) Compounds IIa - IIi. These compounds are antimicrobial agents consisting of the following compounds:

IIa. 1,5-pentanedial;
IIb. 2,5-dimethoxytetrahydrofuran;
IIc. glyoxal;
IId. benzalkonium chloride;
IIe. 1,2-benzisothiazolin-3-one;
IIf. cupric hydroxide;
IIg. 4-chloro-2-xylenol;
IIh. 4-chloro-2-cresol; and
IIi. p-hydroxybenzoic acid ethyl ester.

We particularly prefer to use Compounds IIa, IIe and/or IIf.

C) Benzimidazole-related compounds. These are also antimicrobial agents, and the preferred benzimidazole compounds are:

methyl 1-(butylcarbamoyl)-2-benzimidazolecarbamate ["benomyl"];
methyl 2-benzimidazolecarbamate ["MBC", "carbendazim"];
2-(4-thiazolyl)-1H-benzimidazole ["TBZ", "thiabendazole"]; and
1,2-bis(3-methoxycarbonyl-2-thioureido)benzene ["thiophanate-methyl"].

D) Ergosterol biosynthesis inhibitors. Of these, we especially prefer:

(1RS,2RS;1RS,2SR)-1-(4-chlorophenoxy)-3,3-dimethyl-1-(1H-1,2,4-triazol-1-yl)butan-2-ol ["triadimenol"];
1-{[2-(2,4-dichlorophenyl)-4-propyl-1,3-dioxolan-2-yl]methyl}-1H-1,2,4-triazole ["propiconazole"];
(RS)-2-(2,4-dichlorophenyl)-1-(1H-1,2,4-triazol-1-yl)hexan-2-ol;
bis(4-fluorophenyl)methyl(1H-1,2,4-triazol-1-ylmethyl)silane ["flusilazole"];
(E)-4-chloro-α,α,α-trifluoro-N-(1-imidazol-1-yl-2-propoxyethylidene)-O-toluidine ["triflumizole"];

N-propyl-N-[2-(2,4,6-trichlorophenoxy)ethyl]-1H-imidazole-1-carboxamide ["prochloraz"];
cis-4-[3-(4-tert-butylphenyl)-2-methylpropyl]-2,6-dimethylmorpholine ["fenpropimorph"];
(1RS,5RS;1RS,5SR)-5-(4-chlorobenzyl)-2,2-dimethyl-1-(1H-1,2,4-triazol-1-ylmethyl) cyclopentanol;
2,2-dimethyl-4-chloro-5-(4-chlorobenzylidene)-1-cyclopentanone;
(2RS,3RS;2RS,3SR)-2-(4-chlorophenyl)-3-cyclopropyl-1-(1H-1,2,4-triazol-1-yl)butan-2-ol;
4-chlorobenzyl N-2,4-dichlorophenyl-2-(1H-1,2,4-triazol-1-yl) thioacetamidate;
2-(4-chlorophenyl)-2-(1H-1,2,4-triazol-1-ylmethyl)hexanenitrile ["myclobutanil"];
pent-4-enyl N-furfuryl-N-imidazol-1-ylcarbonyl-DL-homoalaninate ["pefurazoate"];
2',4'-dichloro-2-(3-pyridyl)acetophenone-O-methyloxime ["pyrifenox"];
(RS)-1-(4-chlorophenyl)-4,4-dimethyl-3-(1H-1,2,4-triazol-1-ylmethyl)pentan-3-ol;
1-(4-chlorophenoxy)-3,3-dimethyl-1-(1H-1,2,4-triazol-1-yl)-2-butanone ["triadimefon"]; and
2,6-dimethyl-4-tridecylmorpholine ["tridemorph"].

E) We have further discovered that the incorporation of 1,2-benzisothiazolin-3-one and/or at least one copper compound greatly enhances the antifungal and/or antimicrobial activity of the compositions of the present invention.

Accordingly, the present invention also embraces compositions and uses thereof as defined above, wherein the compositions further comprise 1,2-benzisothiazolin-3-one and/or at least one copper compound selected from cupric hydroxide, copper sulphate and copper-8-quinolate, provided that, where the composition already comprises a copper compound, then the composition comprises 1,2-benzisothiazolin-3-one.

We particularly prefer those compositions, and the uses thereof, which comprise at least one compound of formula (I), 3-hydroxy-5-methylisoxazole or a salt thereof, and 1,2-benzisothiazolin-3-one and/or at least one copper compound selected from cupric hydroxide, copper sulphate and copper-8-quinolate.

In the compounds of formula (I), where X represents a halogen atom, this may be a fluorine, chlorine, bromine or iodine atom, and is more preferably a fluorine or chlorine atom, and most preferably a fluorine atom.

Where X represents an alkyl group having from 1 to 6 carbon atoms, this may be a straight or branched chain group having from 1 to 6, preferably from 1 to 4, carbon atoms, and examples include the methyl, ethyl, propyl, isopropyl, butyl, isobutyl, sec-butyl, t-butyl, pentyl, isopentyl, neopentyl, 2-methylbutyl, 1-ethylpropyl, 4-methylpentyl, 3-methylpentyl, 2-methylpentyl, 1-methylpentyl, 3,3-dimethylbutyl, 2,2-dimethylbutyl, 1,1-dimethylbutyl, 1,2-dimethylbutyl, 1,3-dimethylbutyl, 2,3-dimethylbutyl, 2-ethylbutyl and hexyl groups. Of these, we prefer those alkyl groups having from 1 to 4 carbon atoms, preferably the methyl, ethyl, propyl, isopropyl, butyl and isobutyl groups, and most preferably the methyl and ethyl groups.

Where X represents a haloalkyl group, this has from 1 to 6 carbon atoms and may be a straight or branched chain alkyl group having one or more, preferably from 1 to 5 (or less if there are fewer substitutable positions), more preferably from 1 to 3, halogen substituents. Examples include any of the alkyl groups exemplified above, but more preferably those having from 1 to 4 and most preferably 1 or 2 carbon atoms, in which one or more hydrogen atoms is replaced by a halogen atom (e.g. a fluorine, chlorine, bromine or iodine atom). Specific examples include the trifluoromethyl, trichloromethyl, difluoromethyl, dichloromethyl, dibromomethyl, fluoromethyl, chloromethyl, bromomethyl, iodomethyl, 2,2,2-trichloroethyl, 2,2,2-trifluoroethyl, 2-bromoethyl, 2-chloroethyl, 2-fluoroethyl, 2,2-dibromoethyl, 3-chloropropyl, 3,3,3-trifluoropropyl, 4-fluorobutyl, 5,5,5-trichloropentyl and 6,6,6-trifluorohexyl, groups, of which we prefer alkyl groups having from 1 to 3 carbon atoms which are substituted by from 1 to 3 halogen atoms (and, where there are 2 or 3 halogen atoms, these are the same), more preferably the methyl or ethyl groups which are substituted by from 1 to 3 fluorine or chlorine atoms. More preferred specific groups are the trifluoromethyl, trichloromethyl, difluoromethyl, 2-bromoethyl, 2-chloroethyl and 2-fluoroethyl groups, especially the trifluoromethyl group.

Where X represents an alkoxy group, this may be a straight or branched chain alkoxy group having from 1 to 6 carbon atoms. Examples of such groups include the methoxy, ethoxy, propoxy, isopropoxy, butoxy, isobutoxy, sec-butoxy, t-butoxy, pentyloxy, isopentyloxy, t-pentyloxy, neopentyloxy, hexyloxy, 2-methylbutoxy, 1-ethylpropoxy, 4-methylpentyloxy, 3-methylpentyloxy, 2-methylpentyloxy, 1-methylpentyloxy, 3,3-dimethylbutoxy, 2,2-dimethylbutoxy, 1,1-dimethylbutoxy, 1,2-dimethylbutoxy, 1,3-dimethylbutoxy, 2,3-dimethylbutoxy and 2-ethylbutoxy groups. Of these, we prefer those alkoxy groups containing from 1 to 4 carbon atoms, especially the methoxy and ethoxy groups.

Where X represents a halogenated alkoxy group, this has from 1 to 6 carbon atoms and may be a straight or branched chain alkoxy group having one or more, preferably from 1 to 5 (or less if there are fewer substitutable positions), more preferably from 1 to 3, halogen substituents. Examples include any of the alkoxy groups exemplified above in which one or more hydrogen atoms is replaced by a halogen atom (e.g. a fluorine, chlorine, bromine or iodine atom). Specific examples include the trifluoromethoxy, trichloromethoxy, difluoromethoxy, dichloromethoxy, dibromomethoxy, fluoromethoxy, chloromethoxy, bromomethoxy, iodomethoxy, bromodifluoromethoxy, chlorodifluoromethoxy, 2,2,2-trichloroethoxy, 2,2,2-trifluoroethoxy, 2-bromoethoxy, 2-chloroethoxy, 2-fluoroethoxy, 2,2-dibromoethoxy, 3-chloropropoxy, 3,3,3-trifluoropropoxy, 4-fluorobutoxy, 5,5,5-trichloropentyloxy and 6,6,6-trifluorohexyloxy groups, of which we prefer the trifluoromethoxy group.

Alternatively, $(X)_n$ may represent an alkylenedioxy group having 1 or 2 carbon atoms, that is a methylenedioxy, ethylenedioxy or ethylidenedioxy group, to form with the two, preferably contiguous, carbon atoms of the benzene ring to which they are attached a 5- or 6- membered heterocyclic ring, i.e. a dioxolane or dioxane ring fused to the benzene ring, of which the 5-membered ring, that is the dioxolane ring, is preferred.

In the compounds of formula (I), A may represent a 1,2,4-triazol-1-yl group or an imidazol-1-yl group, preferably a 1,2,4-triazol-1-yl group.

In the compounds of formula (I), n may be 0, 1, 2 or 3, but is preferably 0, 1 or 2, more preferably 1 or 2, and most preferably 1.

In these compounds, where n is 0, the benzene ring is unsubstituted. Alternatively, where n is 1, 2 or 3, X preferably represents a fluorine atom, a chlorine atom, a bromine atom, an unsubstituted alkyl group having from 1 to 4 carbon atoms, a substituted alkyl group having from 1 to 4 carbon atoms and having from 1 to 3 halogen substituents, an unsubstituted alkoxy group having from 1 to 4 carbon atoms, or a substituted alkoxy group having from 1 to 4 carbon atoms and having from 1 to 3 halogen substituents. More preferably, where n is 1, 2 or 3, X represents a fluorine atom, a chlorine atom, a trifluoromethyl group or a methoxy group, or n may be 0. Still more preferably, n is 1 or 2 and X represents a fluorine atom or a chlorine atom, or n is 0. Most preferably, n is 1 or 2 and X represents a fluorine atom or a chlorine atom, especially a fluorine atom.

In the compounds of formula (I): where n is 3, X is preferably at the 2, 4 and 6 positions on the benzene ring; where n is 2, X is preferably at the 2 and 4 positions on the benzene ring; and where n is 1, X is preferably at the 2 or the 4 position on the benzene ring, more preferably the 4 position.

In the compounds of formula (I), where $R^1$, $R^2$ or $R^3$ represents an alkyl group having from 1 to 4 carbon atoms, this may be a straight or branched chain group having from 1 to 4 carbon atoms, and examples include the methyl, ethyl, propyl, isopropyl, butyl, isobutyl, sec-butyl and t-butyl groups, more preferably the methyl and ethyl groups, and most preferably the methyl group. It is particularly preferred that each of $R^1$, $R^2$ and $R^3$ represents a methyl group.

Alternatively, $R^1$ may represent a phenyl group which may be unsubstituted or may be substituted by at least one halogen atom. There is no limit to the number of halogen substituents, except that imposed by the number of substitutable positions, that is 5. However, in general, we prefer from 1 to 3 substituents, more preferably 1 or 2, and most preferably 1. Nonetheless, we most prefer the unsubstituted phenyl group. Examples of such groups include the phenyl, 2-chlorophenyl, 3-chlorophenyl, 4-chlorophenyl, 2-fluorophenyl, 3-fluorophenyl, 4-fluorophenyl, 4-bromophenyl, 2,4-difluorophenyl, 2,6-difluorophenyl, 2,4-dichlorophenyl, 2,6-dichlorophenyl, 2-chloro-4-fluorophenyl, 4-chloro-2-fluorophenyl, 6-chloro-2-fluorophenyl, 2,4,6-trifluorophenyl and 2,4,6-trichlorophenyl groups, of which the 4-chlorophenyl, 4-fluorophenyl, 2,4-difluorophenyl, 2,4-dichlorophenyl, 2-chloro-4-fluorophenyl, 4-chloro-2-fluorophenyl and phenyl groups are preferred and the phenyl group itself is most preferred.

The following classes of compounds of formula (I) and salts thereof are preferred and are listed in increasing order of preference:

(1) Those compounds in which:

A represents a 1,2,4-triazol-1-yl group;

n is 1 or 2, and X represents a fluorine atom, a chlorine atom, a bromine atom, an unsubstituted alkyl group having from 1 to 4 carbon atoms, a substituted alkyl group which has from 1 to 4 carbon atoms and which is substituted by from 1 to 3 halogen atoms, an unsubstituted alkoxy group having from 1 to 4 carbon atoms, or a substituted alkoxy group which has from 1 to 4 carbon atoms and which is substituted by from 1 to 3 halogen atoms;

or

n is 0; and

$R^1$, $R^2$ and $R^3$ are independently selected from alkyl groups having 1 to 4 carbon atoms.

(2) Those compounds in which:

A represents a 1,2,4-triazol-1-yl group;

n is 1 or 2, and X represents a fluorine atom, a chlorine atom, a bromine atom, a trifluoromethyl group or a methoxy group, and the substituent represented by X is at the 2-position and/or the 4-position of the benzene ring;

or

n is 0; and

$R^1$, $R^2$ and $R^3$ are independently selected from methyl groups and ethyl groups.

(3) Those compounds in which:

A represents a 1,2,4-triazol-1-yl group;

n is 1 or 2, and X represents a fluorine atom, a chlorine atom or a bromine atom, and the substituent represented by X is at the 2-position and/or the 4-position of the benzene ring;
or

n is 0; and

$R^1$, $R^2$ and $R^3$ are independently selected from methyl groups and ethyl groups.

(4) Those compounds in which:

A represents a 1,2,4-triazol-1-yl group;

n is 1 or 2, and X represents a fluorine atom, or a chlorine atom, and the substituent represented by X is at the 2-position and/or the 4-position of the benzene ring;
or

n is 0; and

$R^1$, $R^2$ and $R^3$ are all methyl groups.

It is preferred that the compounds of formula (I) are not derivatised, that is they are not in the form of salts or other adducts. However, the compounds of formula (I) contain basic nitrogen atoms, and can thus form salts. Examples of such salts include: salts with mineral acids, especially hydrohalic acids (such as hydrofluoric acid, hydrobromic acid, hydroiodic acid or hydrochloric acid), nitric acid, perchloric acid, carbonic acid, sulphuric acid or phosphoric acid; salts with lower alkylsulphonic acids, such as methanesulphonic acid, trifluoromethanesulphonic acid or ethanesulphonic acid; salts with arylsulphonic acids, such as benzenesulphonic acid or p-toluenesulphonic acid; salts with organic carboxylic acids, such as acetic acid, fumaric acid, tartaric acid, oxalic acid, maleic acid, malic acid, succinic acid, benzoic acid, mandelic acid, ascorbic acid, lactic acid, gluconic acid or citric acid. The compounds of formula (I) can also form adducts with organic acid amides, such as saccharin. Such salts and adducts are embraced by the present invention.

Specific examples of compounds of formula (I) are shown in the following Table 1, in which the various substituent groups are as defined above. In addition, W (when present) represents a salt or adduct, as exemplified above. In Table 1, the following abbreviations are used:

| | |
|---|---|
| Bu | butyl |
| Et | ethyl |
| Imid | imidazol-1-yl |
| Me | methyl |
| Ph | phenyl |
| Pr | propyl |
| iPr | isopropyl |
| Triz | 1,2,4-triazol-1-yl |

Table 1

| Cpd. No. | A | $(X)_n$ | $R^1$ | $R^2$ | $R^3$ | W |
|---|---|---|---|---|---|---|
| 1 | Triz | H | Me | Me | Me | - |
| 2 | Triz | 4-Cl | Me | Me | Me | - |
| 3 | Triz | 4-F | Me | Me | Me | - |
| 4 | Triz | 4-Br | Me | Me | Me | - |
| 5 | Triz | 4-Me | Me | Me | Me | - |
| 6 | Triz | 4-$CF_3$ | Me | Me | Me | - |
| 7 | Triz | 4-OMe | Me | Me | Me | - |
| 8 | Triz | 4-Ph | Me | Me | Me | - |
| 9 | Triz | 4-$OCF_3$ | Me | Me | Me | - |
| 10 | Triz | 4-Et | Me | Me | Me | - |
| 11 | Triz | 2,4-diCl | Me | Me | Me | - |
| 12 | Triz | 2,4-diF | Me | Me | Me | - |
| 13 | Triz | 2-Cl,4-F | Me | Me | Me | - |
| 14 | Triz | 2-F,4-Cl | Me | Me | Me | - |
| 15 | Triz | 2-OMe | Me | Me | Me | - |
| 16 | Triz | 2-Cl | Me | Me | Me | - |
| 17 | Triz | 2-F | Me | Me | Me | - |
| 18 | Triz | 2,6-diCl | Me | Me | Me | - |
| 19 | Triz | 2,6-diF | Me | Me | Me | - |
| 20 | Triz | 2-Cl,6-F | Me | Me | Me | - |
| 21 | Triz | 3-OMe | Me | Me | Me | - |
| 22 | Triz | 3-Cl | Me | Me | Me | - |
| 23 | Triz | 2,4,6-triCl | Me | Me | Me | - |
| 24 | Triz | 2,4,6-triMe | Me | Me | Me | - |
| 25 | Triz | 4-iPr | Me | Me | Me | - |
| 26 | Triz | 4-Pr | Me | Me | Me | - |
| 27 | Triz | 4-Bu | Me | Me | Me | - |
| 28 | Triz | 4-$OCF_2CF_3$ | Me | Me | Me | - |
| 29 | Triz | 3,4-diCl | Me | Me | Me | - |

Table 1 (cont.)

| Cpd. No. | A | $(X)_n$ | $R^1$ | $R^2$ | $R^3$ | W |
|---|---|---|---|---|---|---|
| 30 | Triz | 3,4-diF | Me | Me | Me | - |
| 31 | Triz | 3,4-diBr | Me | Me | Me | - |
| 32 | Triz | 4-$CH_2F$ | Me | Me | Me | - |
| 33 | Triz | 4-$CHF_2$ | Me | Me | Me | - |
| 34 | Triz | 4-$OCH_2F$ | Me | Me | Me | - |
| 35 | Triz | 4-$OCHF_2$ | Me | Me | Me | - |
| 36 | Triz | 4-$OCF_2Br$ | Me | Me | Me | - |
| 37 | Triz | 4-$CF_2Cl$ | Me | Me | Me | - |
| 38 | Triz | 3,5-diCl,4-$OCF_3$ | Me | Me | Me | - |
| 39 | Imid | H | Me | Me | Me | - |
| 40 | Imid | 4-Cl | Me | Me | Me | - |
| 41 | Imid | 4-F | Me | Me | Me | - |
| 42 | Imid | 4-Br | Me | Me | Me | - |
| 43 | Imid | 4-Me | Me | Me | Me | - |
| 44 | Imid | 4-$CF_3$ | Me | Me | Me | - |
| 45 | Imid | 4-OMe | Me | Me | Me | - |
| 46 | Imid | 4-Ph | Me | Me | Me | - |
| 47 | Imid | 4-$OCF_3$ | Me | Me | Me | - |
| 48 | Imid | 4-Et | Me | Me | Me | - |
| 49 | Imid | 2,4-diCl | Me | Me | Me | - |
| 50 | Imid | 2,4-diF | Me | Me | Me | - |
| 51 | Imid | 2-Cl,4-F | Me | Me | Me | - |
| 52 | Imid | 2-F,4-Cl | Me | Me | Me | - |
| 53 | Imid | 2-OMe | Me | Me | Me | - |
| 54 | Imid | 2-Cl | Me | Me | Me | - |
| 55 | Imid | 2-F | Me | Me | Me | - |
| 56 | Imid | 2,6-diCl | Me | Me | Me | - |
| 57 | Imid | 2,6-diF | Me | Me | Me | - |
| 58 | Imid | 2-Cl,6-F | Me | Me | Me | - |

Table 1 (cont.)

| Cpd. No. | A | $(X)_n$ | $R^1$ | $R^2$ | $R^3$ | W |
|---|---|---|---|---|---|---|
| 59 | Imid | 3-OMe | Me | Me | Me | - |
| 60 | Imid | 3-Cl | Me | Me | Me | - |
| 61 | Triz | 3-Br | Me | Me | Me | - |
| 62 | Triz | 3-Me | Me | Me | Me | - |
| 63 | Triz | 2,5-diCl | Me | Me | Me | - |
| 64 | Triz | 2,3,4-triCl | Me | Me | Me | - |
| 65 | Triz | 2,4,5-triCl | Me | Me | Me | - |
| 66 | Triz | 3,4-$OCH_2O$- | Me | Me | Me | - |
| 67 | Triz | 4-Cl | Ph | Me | Me | - |
| 68 | Triz | 4-F | Ph | Me | Me | - |
| 69 | Triz | 4-F | 4-Cl-Ph | Me | Me | - |
| 70 | Triz | 4-F | Et | Me | Me | - |
| 71 | Triz | 4-F | Pr | Me | Me | - |
| 72 | Triz | 4-F | iPr | Me | Me | - |
| 73 | Triz | 4-F | Bu | Me | Me | - |
| 74 | Triz | 4-F | Me | Me | Me | $1/2[(COOH)_2]$ |
| 75 | Triz | 4-F | Me | Me | Me | $HNO_3$ |
| 76 | Triz | 4-F | Me | Me | Me | $1/2(H_2SO_4)$ |
| 77 | Triz | 4-F | Me | Me | Me | HCl |
| 78 | Triz | 4-F | Me | Me | Me | saccharin |
| 79 | Triz | 4-Cl | Me | Me | Me | $1/2[(COOH)_2]$ |
| 80 | Triz | 4-Cl | Me | Me | Me | $HNO_3$ |
| 81 | Triz | 4-Cl | Me | Me | Me | $1/2(H_2SO_4)$ |
| 82 | Triz | 4-Cl | Me | Me | Me | HCl |
| 83 | Triz | 4-Cl | Me | Me | Me | saccharin |
| 84 | Imid | 4-F | Me | Me | Me | saccharin |
| 85 | Imid | 4-Cl | Me | Me | Me | saccharin |
| 86 | Triz | 4-F | Et | Et | Et | - |

Of the compounds listed above, the following are preferred, that is to say Compounds Nos. 1, 2, 3, 4, 5, 6, 9, 11, 12, 13, 14, 15, 16, 17, 18 and 19; more preferred compounds are Compounds Nos. 1, 2, 3, 6, 11, 12, 13 and 14; and the most preferred compounds are Compounds No.:

2. 2-(4-chlorophenyl)-1-(1H-1,2,4-triazol-1-yl)-3-trimethylsilyl-2-propanol;

3. 2-(4-fluorophenyl)-1-(1H-1,2,4-triazol-1-yl)-3-trimethylsilyl-2-propanol;

12. 2-(2,4-difluorophenyl)-1-(1H-1,2,4-triazole-1-yl)-3-trimethylsilyl-2-propanol; and especially

3. 2-(4-fluorophenyl)-1-(1H-1,2,4-triazol-1-yl)-3-trimethylsilyl-2-propanol.

The compounds of formula (I) can be prepared by a variety of methods, whose general techniques are known in the art for the preparation of compounds of this type. Suitable methods are disclosed in EP-A-537 957, incorporated in its entirety herein by reference.

By way of example, the compounds of formula (I) may be prepared as illustrated in the following Reaction Schemes:

***Reaction Scheme A:***

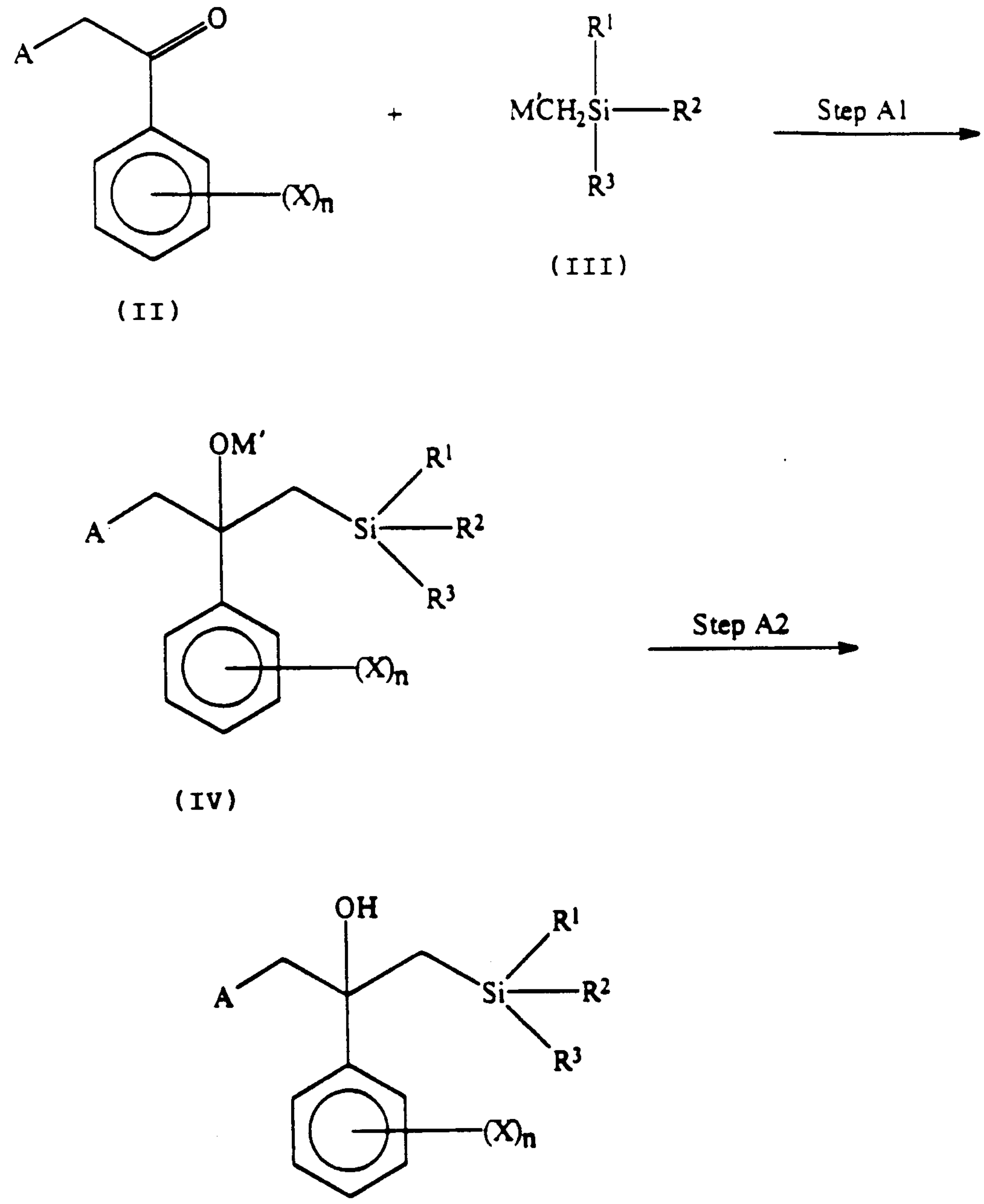


(II)

(III)

(IV)

(I)

**Reaction Scheme B:**

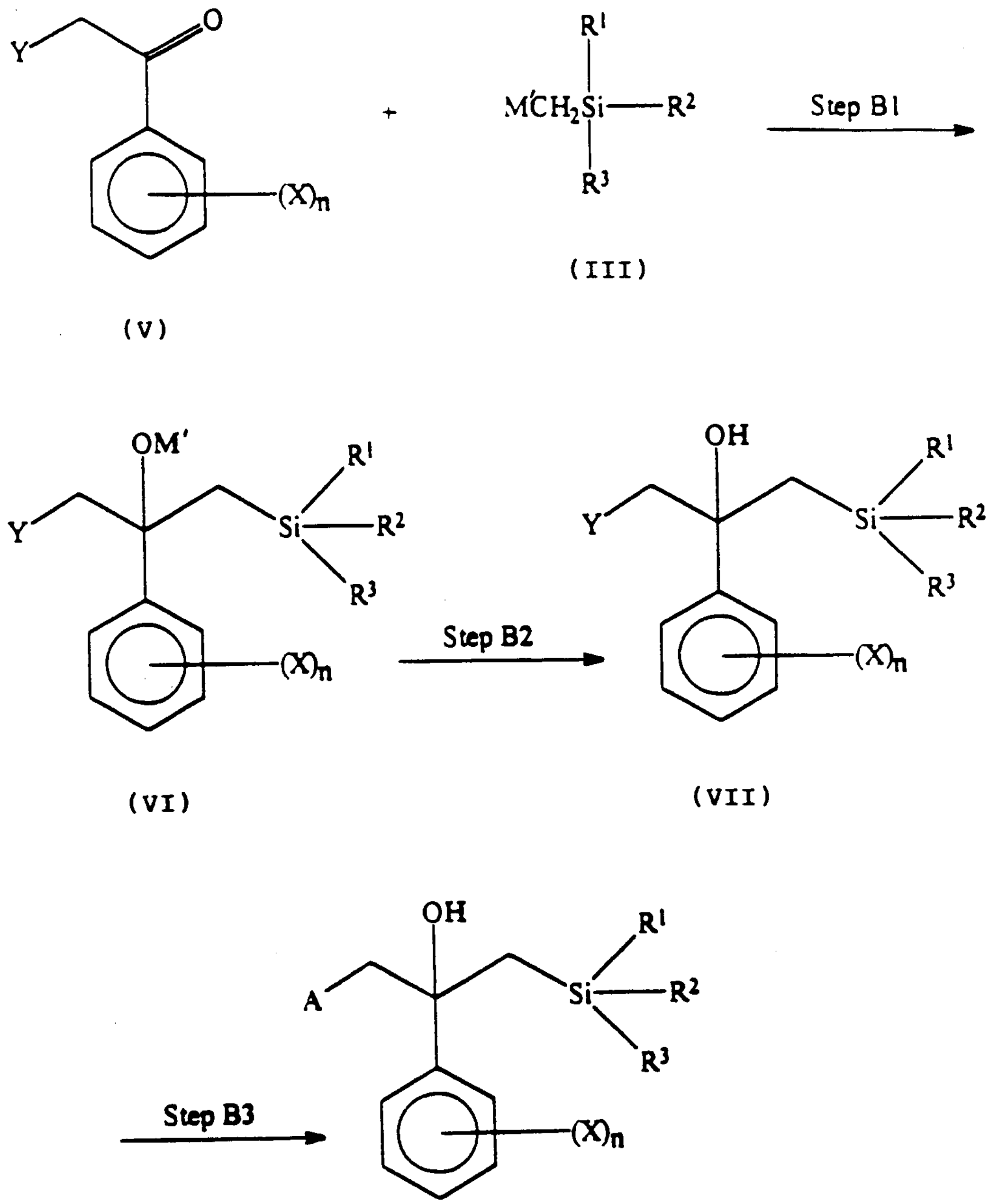


(V) (III) (VI) (VII) (I)

In the above formulae, X, n, $R^1$, $R^2$ and $R^3$ are as defined above, M' represents a lithium atom, a group of formula MgCl or a group of formula MgBr, and Y represents a fluorine, chlorine, bromine or iodine atom, preferably a chlorine or bromine atom, and more preferably a chlorine atom.

Reaction Scheme A

Step A1:

In this step of Reaction Scheme A, an adduct of formula (IV) is prepared by the addition of a silyl compound of formula (III) to a ketone compound of formula (II).

The ketone compound of formula (II), which is used as a starting material in this reaction, can be prepared by the method described in Japanese Patent Publication No. Sho 63-46075.

The silyl compound of formula (III), which is the other starting material in this reaction, can be obtained from a halomethyltrimethylsilyl and metallic magnesium or lithium by conventional means.

The amount of the organic metal silyl compound of formula (III) employed in this step is preferably from 1 to 10 moles per mole of the ketone compound of formula (II), more preferably from 1 to 2 moles.

The reaction is normally and preferably effected in the presence of a solvent. There is no particular restriction on the nature of the solvent to be employed, provided that it has no adverse effect on the reaction or on the reagents involved and that it can dissolve the reagents, at least to some extent. Examples of suitable solvents include: hydrocarbons, which may be aliphatic, cycloaliphatic or aromatic hydrocarbons, such as hexane, cyclohexane, benzene or toluene; halogenated hydrocarbons, especially halogenated aliphatic hydrocarbons, such as methylene chloride, chloroform, dichloroethane or tetrachloroethane; ethers, such as dioxane, diethyl ether, tetrahydrofuran or ethylene glycol dimethyl ether; and amides, such as dimethylformamide, dimethylacetamide or hexamethylphosphoric triamide. A single one of these solvents may be used or a mixture of any two or more may be used. Of these solvents, we prefer the ethers.

The reaction can take place over a wide range of temperatures, and the precise reaction temperature is not critical to the present invention. In general, we find it convenient to carry out the reaction at a temperature of from -20°C to 80°C, more preferably from 10°C to 40°C. The time required for the reaction may also vary widely, depending on many factors, notably the reaction temperature and the nature of the reagents and solvent employed. However, provided that the reaction is effected under the preferred conditions outlined above, a period of from 5 minutes to 24 hours, more preferably from 3 hours to 10 hours will usually suffice.

Step A2:

In this step, the atom or group represented by M' is removed, to liberate a compound of formula (I). The reaction is effected by treating the adduct of formula (IV) with a weak acid. This is conveniently carried out by dissolving the reaction mixture from Step A1 in water, adding an appropriate amount of a saturated aqueous solution of ammonium chloride, and extracting the reaction mixture with a suitable solvent.

Reaction Scheme B

Step B1:

In this step, an adduct of formula (VI) is prepared by the addition of a metal silyl compound of formula (III) to a ketone compound of formula (V). The reaction is essentially the same as, and may be carried out in a similar manner to that described in, Step A1 of Reaction Scheme A.

Step B2:

In this step, a compound of formula (VII) is prepared from the adduct of formula (VI). The reaction is essentially the same as, and may be carried out in a similar manner to that described in, Step A2 of Reaction Scheme A.

Step B3:

In this step, a compound of formula (I) is prepared by reacting the compound of formula (VII), which may have been prepared as described in step B2, with an excess of 1,2,4-triazole or imidazole in the presence of a base.

The reaction is carried out by reacting the compound of formula (VII) with at least 1 mole [per mole of the compound of formula (VII)] of either 1,2,4-triazole or imidazole in a solvent in the presence of at least 1 mole of a base; or by reacting the compound of formula (VII) with at least 1 mole [per mole of the compound of formula (VII)] of a salt of either 1,2,4-triazole or imidazole with a base.

The reaction is normally and preferably effected in the presence of a solvent. There is no particular restriction on the nature of the solvent to be employed, provided that it has no adverse effect on the reaction or on the reagents involved and that it can dissolve the reagents, at least to some extent. Examples of suitable solvents include: aliphatic

hydrocarbons, such as hexane, heptane, ligroin or petroleum ether; aromatic hydrocarbons, such as benzene, toluene or xylene; halogenated hydrocarbons, such as methylene chloride, chloroform, carbon tetrachloride, dichloroethane, chlorobenzene or dichlorobenzene; ethers, such as diethyl ether, diisopropyl ether, tetrahydrofuran, dioxane, dimethoxyethane or diethylene glycol dimethyl ether; alcohols, such as methanol, ethanol, propanol, isopropanol, butanol, isobutanol, t-butanol, isoamyl alcohol, diethylene glycol, glycerol, octanol, cyclohexanol or ethylene glycol monomethyl ether; nitro compounds, such as nitroethane or nitrobenzene; nitriles, such as acetonitrile or isobutyronitrile; amides, such as formamide, dimethylformamide, dimethylacetamide, hexamethylphosphoric triamide or 1,3-dimethyl-2-imidazolidinone; and sulphoxides, such as dimethyl sulphoxide or sulpholane. Of these, we prefer the amides, such as formamide, dimethylformamide, dimethylacetamide, hexamethylphosphoric triamide or 1,3-dimethyl-2-imidazolidinone.

There is likewise no particular limitation on the nature of the base employed, provided that it does not have any adverse effect on any part of the molecule of the compound of formula (VII), and any base commonly used for conventional reactions of this type may equally be used here. Examples of preferred bases include: alkali metal carbonates, such as sodium carbonate or potassium carbonate; alkali metal hydrogencarbonates, such as sodium hydrogencarbonate or potassium hydrogencarbonate; alkali metal hydrides, such as lithium hydride, sodium hydride or potassium hydride; alkali metal hydroxides, such as sodium hydroxide, potassium hydroxide or barium hydroxide; alkali metal alkoxides, such as sodium methoxide, sodium ethoxide or potassium t-butoxide; organic bases, such as triethylamine, tributylamine, diisopropylethylamine, N-methylmorpholine, pyridine, 4-(N,N-dimethylamino)-pyridine, N,N-dimethylaniline, N,N-diethylaniline, 1,5-diazabicyclo[4.3.0]nona-5-ene, 1,4-diazabicyclo[2.2.2]octane (DABCO) or 1,8-diazabicylo[5.4.0]undec-7-ene (DBU); and organic metal bases, such as butyllithium or lithium diisopropylamide. Of these, we prefer the alkali metal carbonates, such as sodium carbonate or potassium carbonate.

The reaction may be carried out more effectively if it takes place in the presence of one or more of the following compounds: quaternary ammonium salts, such as benzyltriethylammonium chloride or tetrabutylammonium chloride; alkali metal halides, such as sodium iodide, sodium bromide or lithium bromide; crown ethers, such as dibenzo-18-crown-6; or molecular sieve 3A or 4A, which may be employed for drying the solvent.

The reaction can take place over a wide range of temperatures, and the precise reaction temperature is not critical to the present invention. In general, we find it convenient to carry out the reaction at a temperature of from -78°C to 200°C, more preferably from -20°C to 150°C. The time required for the reaction may also vary widely, depending on many factors, notably the reaction temperature and the nature of the reagents and solvent employed. However, provided that the reaction is effected under the preferred conditions outlined above, a period of from 1 hour to 24 hours, more preferably from 2 hours to 10 hours, will usually suffice.

The ketone compound of formula (V) can be prepared by the method described in Beilsteins Handbuch der Organischen Chemie 7, 285; 7, 283.

After completion of the reaction in each of the above Steps of Reaction Schemes A and B, the reaction product may be collected from the reaction mixture by conventional means. For example, the desired product can be obtained by adding a water-immiscible organic solvent to the reaction mixture, washing the mixture with water, and then removing the solvent, preferably by evaporation. The desired compound thus obtained may be further purified, if necessary, by conventional means, such as recrystallisation, reprecipitation or the various chromatography techniques, notably column chromatography.

Salts of the compounds of formula (I) may be prepared by conventional means, preferably simply by adding an acid to a solution of the compound, e.g. a solution prepared by dissolving a condensate of the extract from a reaction mixture containing the compound of formula (I), which may have been prepared as described in either of Reaction Schemes A and B, in an appropriate solvent, or prepared by dissolving the previously isolated compound of formula (I) in an appropriate solvent. The acid employed will, of course, depend on the salt which is to be prepared. By way of example, suitable acids include: inorganic acids, such as the hydrohalic acids (for example hydrofluoric acid, hydrochloric acid, hydrobromic acid or hydroiodic acid), nitric acid, perchloric acid, sulphuric acid or phosphoric acid; organic acids, such as the lower alkylsulphonic acids (for example methanesulphonic acid, trifluoromethansulphonic acid or ethanesulphonic acid), arylsulphonic acids (for example benzenesulphonic acid or p-toluenesulphonic acid), or organic carboxylic acids (for example succinic acid or oxalic acid); and organic acid amide compounds, such as saccharin.

In general, it is best to use the acid in an amount at least equimolar with respect to the compound of formula (I), preferably in an amount of from 1 to 10, more preferably from 1 to 5, moles per mole of the compound of formula (I).

The reaction is normally and preferably effected in the presence of a solvent. There is no particular restriction on the nature of the solvent to be employed, provided that it has no adverse effect on the reaction or on the reagents involved and that it can dissolve the reagents, at least to some extent. Examples of suitable solvents include: ethers, such as diethyl ether, diisopropyl ether, tetrahydrofuran or dioxane; and alcohols, such as methanol or ethanol.

The reaction can take place over a wide range of temperatures, and the precise reaction temperature is not critical to the present invention. In general, we find it convenient to carry out the reaction at a temperature of from -20°C to 50°C, more preferably from -10°C to 30°C. The time required for the reaction may also vary widely, depending on many factors, notably the reaction temperature and the nature of the reagents and solvent employed. However, provided that the reaction is effected under the preferred conditions outlined above, a period of from 10 minutes to 1 hour will usually

suffice.

The salt formed may be isolated by conventional means. Specifically, where the salt is precipitated as crystals, it may be isolated by filtration, or, when it is a water-soluble salt, it may be isolated as an aqueous solution by separation using an organic solvent and water.

The dihydrate of the calcium salt of 3-hydroxy-5-methylisoxazole can be prepared, for example, by reacting a calcium compound with 3-hydroxy-5-methylisoxazole, and then recovering the desired calcium salt of 3-hydroxy-5-methylisoxazole under conditions favoring the formation of the dihydrate. For example, it may be obtained by the following procedure: one part (molar) of calcium hydroxide and 2 parts (molar) of 3-hydroxy-5-methylisoxazole are added to water and dissolved at a relatively high temperature, preferably from 70 to 90°C, more preferably approximately 80°C; the resulting solution is then filtered whilst still warm, after which the filtrate is cooled to a suitable temperature to promote the formation of crystals of the dihydrate, suitably approximately 0°C; the deposited crystals are then removed by filtration and dried, for example at 50 - 60°C.

The compositions of the present invention are useful against a variety of plant diseases, whether soil-borne, airborne, water-borne or seed-borne.

The compositions of the present invention may be used not only for foliar application but also for submerged application. They can, in particular, strongly prevent various sclerotial diseases, including sheath blight of rice plants (Rhizoctonia Sasakii), and rice blast (Piricularia oryzae), which are the main diseases in rice culture.

On the other hand, the use of the compositions of the present invention as fungicides for soil treatment or as fungicides for seed treatment is particularly effective against damping-off of various crops, such as rice, wheat, barley, sugar beet, cotton and other vegetables, and against black scurf (Corticium vagum), which are caused by Rhizoctonia spp. Furthermore, they can effectively control soil-mediated and seed-mediated infectious diseases, such as Fusarium diseases and Particilium diseases of various crops, eye spot of cereals, damping-off, smut and septoria.

The use of the compositions of the present invention as fungicides for foliar application is, in addition, effective against many kinds of air-mediated infectious diseases, such as powdery mildew, rust and scab.

A representative range of microorganisms against which the compositions of the present invention may be used is illustrated below:

Ascomycetes:

Erysiphe, Sphaerotheca, Podosphaera, Gibberella, Pyrenophora, Venturia, Cochliobolus, Sclerotinia, Monilinia, Helminthosporium, Pseudocercosporella, Gaeumannomycetes

Basidiomycetes:

Ustilago, Puccinia, Tilletia, Rhizoctonia, Gymnosporangium, Uromyces, Corticium, Pellicularia, Typhula,

Phycomycetes:

Pythium, Aphanomyces, Achlya

Fungi Imperfecti:

Fusarium, Septoria, Phoma, Alternaria, Ascochyta, Phomopsis, Colletorichum, Pestalotia, Monilia, Verticillium, Helminthosporium, Rhizoctonia, Sclerotium, Pyricularia

Of the above microorganisms, compositions comprising the compounds of groups A) and/or E) defined above are particularly useful against:

Ascomycetes:

Erysiphe, Sclerotinia, Monilinia, Helminthosporium, Pyrenophora, Pseudocercosporella, Gaeumannomycetes

Basidiomycetes:

Ustilago, Puccinia, Tilletia, Rhizoctonia

Phycomycetes:

Pythium, Aphanomyces, Achlya

Fungi Imperfecti:

Fusarium, Septoria, Phoma, Alternaria

Of the microorganisms listed above, compositions comprising the compounds of groups C) and/or D) defined above are particularly useful against:

Ascomycetes:

Erysiphe, Sphaerotheca, Podosphaera, Gibberella, Pyrenophora, Venturia, Cochliobolus, Sclerotinia, Monilinia,

Basidiomycetes:

Ustilago, Tilletia, Puccinia, Gymnosporangium, Uromyces, Corticium, Pellicularia, Typhula,

Fungi Imperfecti:

Phoma, Ascochyta, Septoria, Phomopsis, Colletorichum, Pestalotia, Monilia, Verticillium, Helminthosporium, Alternaria, Fusarium, Rhizoctonia, Sclerotium, Pyricularia

Some representative plant diseases and their causative microbes against which the compositions of the present invention may be used are listed below:

Rice Diseases - sheath blight (Rhizoctonia solani), blast (Pyricularia oryzae), sheath blight like diseases (Rhizoctonia solani III-B, Rhizoctonia oryzae, Sclerotium oryzae-sativae, Sclerotium fumigatum), ear blight (Cochliobolus miyabeanus, Helminthosporium sigmoideum var. irregulare, Sphaerulina oryzina), bakanae disease (Gibberella fujikuroi), bacterial glumae (Pseudomonas glumae) and bacterial seedling blight (Pseudomonas plantarii);

Wheat and Barley Diseases - (Erysiphe graminis), (Puccinia recondita, P. graminis, P. hordei, P. striiformis), eye spot (Pseudocercosporella herpotrichoides), foot-rot (Rhizoctonia cerealis) and loose smut (Ustilago tritici, U. nuda), (Pyrenophora teres);

Diseases of the Cucurbitae - fusarium wilt (Fusarium oxysporum) and damping-off (Pythium debaryanum);

Grass Diseases - brown patch (Rhizoctonia solani) and snow blight (Pythium spp., Fusarium nivale, etc.).

The above diseases are generally treatable using the compositions of the present invention, but are particularly treatable by those compositions comprising compounds of group B) as defined above.

Crops such as rice, wheat, barley, tomato, potato, cotton, egg-plant, cucumber and kidney bean, are not damaged by the use of the compositions of the present invention at effective and practical doses.

Furthermore, the compositions can also be applied to upland pastures and fields, orchards, non-farm areas, lawns, forests and the like. The compositions can also be used as anti-fungal and preservative agents for the treatment of wood and in hydroponics.

The compositions of the present invention may optionally contain one or more carriers and other auxiliary agents, if necessary. These compositions may be formulated as preparations of the type commonly employed for agricultural or horticultural use, for instance as dusts, coarse dusts, microgranules, fine microgranules, wettable powders, emulsifiable concentrates, pastes, solutions, aqueous or oily suspensions, capsules and water-soluble packs.

The compositions may usefully be prepared in such a manner as to permit the preparation of solutions or suspensions which can be sprayed. These formulations may be applied to seeds or soil directly or after dilution to a suitable concentration depending on the purpose. Other formulations may be used as dusts or granules, for example, to apply directly to seed, or to spread onto the surface of soil or water, dusted directly onto the plants, or mixed with soil. Seed treatments may comprise dusts or soaks. In one preferred formulation for use in paddy fields, for example, the composition may be prepared in a package of water-soluble material which can be thrown onto the water surface, allowing dissolution of the package and dispersal of the contents. Such packages may contain, if desired, any suitable water repellent agents, foaming agents and/or spreaders. If used for hydroponic culture, direct addition to the nutrient solution may be possible.

The timing of the application is not particularly critical, and the formulations can be applied at seeding or at transplanting time. No injury will be caused to crops, even if the formulations are applied during crop growing stages.

It is, of course, not necessary to use a completely pure form of the compound of the present invention in the composition and, of course, purification can be suspended at any stage and the resulting crude substance may be used as the active ingredient of the composition.

The components of the compositions of the present invention may be employed in admixture with or in association with each other. It will, of course, be appreciated that the main active compounds in the composition of the present invention can, and preferably are, supplied to the end user in admixture. However, this is not essential and the benefits

of the present invention will also be achieved if the components are supplied separately and applied together, or at least within the active lifetime of the first compound applied. Accordingly, the present invention also embraces the concurrent or essentially concurrent use of the active ingredients of the compositions of the present invention for the treatment of soil, plants water or parts, especially the reproductive matter, of plants, as well as the concurrent or effectively concurrent supply of the active ingredients of the compositions of the present invention for the treatment of soil, plants water or parts, especially the reproductive matter, of plants.

Examples of methods which may be used to prepare suitable formulations are as follows.

A dust coating formulation can be obtained by mixing the active ingredients with any other conventional additives, optionally after adding a filler. Examples of fillers which may be employed for the preparation of a dust coating formulation include: fine dusts of a mineral substance less than 45 μm in diameter, such as clay, talc, calcium carbonate, white carbon or titanium dioxide; a starch derivative, such as starch or an esterified starch; or a sugar, such as dextrin, glucose, fructose or saccharose. Additives which may be used for the preparation of dust coating formulations include surfactants, such as the non-ionic surfactant and anionic surfactants exemplified above; binders and thermoplastic resin powders. Examples of binders which may be employed for maintaining and binding the active ingredients onto the surfaces of seeds, include water-soluble high molecular weight compounds, for example, water-soluble polysaccharides, such as alginic acid and salts thereof, carboxymethylcellulose and salts thereof, methylcellulose, polyvinyl alcohol, sodium polyacrylate, polyethylene oxide, polyvinylpyrrolidone or xanthan gum. Examples of thermoplastic resin powders having a membrane-forming capacity which may be employed include ethylene - vinyl chloride copolymer resin powder, ethylene - vinyl acetate copolymer resin powder and vinyl chloride resin powder. The dust coating formulation may be prepared by combining the active ingredient with one or more of these additives, depending on the purpose of the formulation. In general, the ranges which may be employed are from 10 to 95%, from 0 to 90%, from 0 to 20% and from 0 to 70% for the active ingredient, filler, wet dispersing agent, binder and thermoplastic resin powder respectively.

A water-dispersible granular formulation can be prepared by mixing the active ingredients with one or more additives selected from fillers, wet dispersing agents and binders, as described above in relation to the dust coating formulation, and then pulverising the mixture. The pulverised mixture is then preferably added to an agitating fluidised bed granulator, water is added, and the whole is mixed and granulated, after which it is dried and sieved. The water-dispersible granules usually have a particle diameter from 63 to 1700 μm.

The carriers employed in such compositions may be natural or synthetic and organic or inorganic; they are generally employed to assist the active ingredient to reach the substrate to be treated, and to make it easier to store, transport or handle the active compound. They may be solid or liquid.

Suitable solid carriers include:

inorganic substances, such as clays (examples of which are bentonite, kaolinite, montmorillonite and attapulgite), talc, mica, agalmatolite, pyrophyllite, pumice, vermiculite, gypsum, calcium carbonate, dolomite, diatomaceous earth, magnesium carbonate, apatite, zeolite, silicic anhydride and synthetic calcium silicate; vegetable organic substances, such as nut shells (e.g. of walnuts or other nuts), soybean meal, tobacco powder, walnut powder, wheat flour, sawdust, starch and crystalline cellulose; synthetic or natural high molecular weight polymers, especially resins, such as coumarone resins, petroleum resins, alkyd resins, polyvinyl chloride, polyalkylene glycols, ketone resins, ester gums, xanthan gum, copal gum and dammar gum; waxes such as carnauba wax and beeswax; or urea.

Examples of suitable liquid carriers include:

paraffinic or naphthenic hydrocarbons, such as kerosene, mineral oil, spindle oil and white oil; aromatic hydrocarbons, such as benzene, toluene, xylene, solvent naphtha, ethylbenzene, cumene and methylnaphthalene; halogenated hydrocarbons, especially chlorinated hydrocarbons, such as carbon tetrachloride, chloroform, trichloroethylene, monochlorobenzene and o-chlorotoluene; ethers such as dioxane and tetrahydrofuran; ketones, such as acetone, methyl ethyl ketone, diisobutyl ketone, cyclohexanone, acetophenone and isophorone; esters such as ethyl acetate, amyl acetate, ethylene glycol acetate, diethylene glycol acetate, dibutyl maleate and diethyl succinate; alcohols such as methanol, ethanol, isopropanol, hexanol, ethylene glycol, diethylene glycol, cyclohexanol, and benzyl alcohol; ether alcohols, such as ethylene glycol monoethyl ether, ethylene glycol monophenyl ether, diethylene glycol monoethyl ether and diethylene glycol monobutyl ether; other polar solvents, such as dimethylformamide and dimethyl sulphoxide; and water.

The compositions of the present invention may contain one or more surface active agents and/or polymers to improve the properties of the compositions and help them to disperse, emulsify, spread, penetrate and bind or to control disintegration, improve fluidity or impart corrosion resistance to the composition, or to stabilise the active compound. Any of the conventional classes of surface active agent (non-ionic, anionic, cationic or amphoteric) may be employed, but it is preferred to employ non-ionic and/or anionic surface active agents whereby wetting, adhesion and absorption

and desired effects may be improved.

Examples of suitable non-ionic surface active agents include:

the polymerisation adducts of ethylene oxide with higher alcohols, such as lauryl alcohol, stearyl alcohol and oleyl alcohol; the polymerisation adducts of ethylene oxide with alkylphenols, such as isooctylphenol or nonylphenol; the polymerisation adducts of ethylene oxide with alkylnaphthols, such as butylnaphthol or octylnaphthol; the polymerisation adducts of ethylene oxide with higher fatty acids, such as palmitic acid, stearic acid or oleic acid; the polymerisation adducts of ethylene oxide with mono- or di- alkylphosphoric acids, such as stearylphosphoric acid or dilaurylphosphoric acid; the polymerisation adducts of ethylene oxide with amines, such as dodecylamine; amides or ethoxylated amides of higher fatty acids, such as stearamide; higher fatty acid esters of polyhydric alcohols, such as sorbitan, and the polymerisation adducts of ethylene oxide therewith; higher fatty acid esters of glycerol borates or of ethoxylated glycerol borates; glycerides and sucrose esters of fatty acids; and the polymerisation adducts of ethylene oxide with propylene oxide.

Examples of suitable anionic surface active agents include:

salts of higher fatty acids, i.e. soaps, e.g. sodium oleate; salts, e.g. sodium and calcium salts, of sulphonic acids and the acids themselves, e.g. lignin-sulphonic acid, and aryl sulphonate salts, such as sodium isopropylnaphthalenesulphonate, sodium methylenebisnaphthalenesulphonate, sodium lignin-sulphonate or sodium dodecylbenzenesulphonate, or alkyl sulphonate salts, especially sodium dialkyl sulphosuccinates, such as sodium dioctyl sulphosuccinate or sodium 2-ethylhexenesulphonate; salts, e.g. sodium, ammonium and amine salts, of polyoxyethylene alkyl aryl ether sulphates or of polyoxyethylene alkyl ether sulphates or the free acids; or salts of polyoxyethylene alkyl aryl ether phosphates or of polyoxyethylene alkyl phosphates; alkyl sulphate salts, such as sodium lauryl sulphate or oleyl sulphate amine salt;

Examples of suitable cationic surfactants include:

the higher aliphatic amines and ethylene oxide condensates with such amines; quaternary ammonium salts, e.g. chlorides; N-alkylamine acetates; and N-alkylamine oxides;

Examples of amphoteric surfactants include betaines and amino acid-type surfactants.

Moreover, the compositions of the present invention may be used in combination with high molecular weight compounds or other formulation agents, in order to assist formulation or to improve biological activity, for example: protective colloids, such as casein, gelatin, gum arabic, albumin, glue, sodium alginate, carboxymethylcellulose, methylcellulose, hydroxyethylcellulose or polyvinyl alcohol; dispersing agents, such as sodium polyphosphate; inorganic dispersing agents, such as bentonite or veegum; stabilisers; binding agents; and anti-freezing agents.

The above-mentioned carriers and various auxiliary agents may be used alone or in any desired combination, depending upon the type of preparation, the application and other factors. Similar factors will also be of importance in determining the concentration of the active compound in the formulation.

For example, dusts may conveniently contain from 0.1 to 25%, more preferably from 0.3 to 25%, by weight of the active compounds, the remainder being a solid carrier.

Wettable powders may conveniently contain, for example, from 1 to 90%, preferably from 25 to 80%, by weight of the active compounds, the remainder being a solid carrier and a dispersing and wetting agent, if required, together with a protective colloidal agent, a thixotropic agent and an anti-foaming agent.

Granules may conveniently contain from 0.3 to 35%, more preferably from 1 to 25%, by weight of the active compound, a major portion of the remainder being a solid carrier. The active compound is homogeneously admixed with the solid carrier or is adhered to or adsorbed onto the carrier surface; the diameter of each granule is preferably from 0.2 to 1.5 mm.

Liquid formulations, such as emulsifiable concentrates, may conveniently contain, for example, from 1 to 50%, more preferably from 5 to 50% by weight of the active compound and from 5 to 20% by weight of an emulsifying agent, the remainder being a liquid carrier, together with, if required, a corrosion inhibitor.

Oil preparations may conveniently contain from 0.5 to 5% by weight of the active compounds, the remainder being a liquid carrier such as kerosene.

The above examples apply to all compositions of the present invention.

The compositions of the present invention may be applied, for example, to paddy or other fields before or after emergence of disease in plants or to plants already infected with harmful fungi; a concentration of from 10 to 500 ppm for the active ingredient is usually suitable, especially for application to leaves and stems of plants and to soil, whereby effective control may be attained.

The composition of the present invention may be blended with further active ingredients and/or other conventional

agricultural or horticultural materials, if desired, such as: fungicides; insecticides; acaricides; nematocides; herbicides; plant growth regulators; seed disinfectants; manure or soil conditioners, to provide compositions having a wider range of applications and/or to reduce labor costs, but it will be appreciated that the amounts of such additional ingredients, if any, are not critical.

The amount of the compound of the present invention used varies depending upon the weather conditions, the type of preparation, the time of application, the method of application, the nature of the environment, the nature of the disease, the nature of the plant and various other known factors, but the compound may preferably be applied in an amount of from 0.01 to 1000 g of the effective ingredients per are, preferably from 0.1 to 100 g, and more preferably from 5 to 40 g. Emulsifiable concentrates, wettable powders, suspension concentrates and the like are preferably applied by diluting a prescribed amount with, for example, from 1 to 10 liters of water per are and granules are generally applied without dilution. If desired, other additives, such as spreaders, e.g. surface active agents, polyoxyethylene resin acid, ligninsulphonates, salts of abietic acid, dinaphthylmethanedisulphonate, paraffin, may be added to the water used for the dilution.

Where the compositions of the present invention are used as seed coatings, then a suitable amount of the active ingredients is from about 0.001 to about 50 g, preferably from about 0.01 to about 10 g, per 1 kg of seed.

Where the compositions of the present invention are used for the treatment of soil, then a suitable amount of the active ingredients is from about 0.01 to about 1000 g, preferably from about 0.1 to about 100 g, per are.

Where the compositions of the present invention are used for the surface treatment of water in a paddy field, for example, then a suitable amount of the active ingredients is from about 0.001 to about 40 kg, preferably from about 0.01 to about 10 kg, per hectare. For use in a nursery box, a suitable amount of the active ingredients is from about 0.1 to about 100 g, preferably from about 0.1 to about 50 g per box (assuming a measurement of 80 cm x 60 cm x 8 cm for each box). The compositions of the present invention may applied right through the life of the rice plant, from the nursery box through to harvest, without ill-effect.

The ratio of the active components in the compositions of the present invention is not critical, and suitable ratios will be readily apparent to those skilled in the art. In general, where two components are used, then a ratio of 1 part of a compound of formula (I) to 0.01 - 100 parts by weight of the second component may be employed. This ratio is preferably in the range of from 1 : 1 to 1 : 100, more preferably from 1 : 2 to 1 : 10.

Preferred ratios for given compositions are as follows:

for compositions containing a compound of formula (I) together with a compound from group A or group C, the preferred ratios are from 1 : 100 to 1 : 1, preferably from 1 : 10 to 1 : 2;

for compositions containing a compound of formula (I) together with a compound from group B, the preferred ratios are from 1 : 0.01 to 1 : 100, preferably from 1 : 0.1 to 1 : 10;

for compositions containing a compound of formula (I) together with a compound from group D, the preferred ratios are from 1 : 0.01 to 1 : 100, preferably from 1 : 0.5 to 1 : 10.

Where a composition comprises three components, in accordance with the definition provided for group C, then the ratios of the first two components may be substantially the same as given above, together with from 1 to 10 parts by weight of 1,2-benzisothiazolin-3-one and/or the copper compound.

The present invention is further illustrated by the following non-limiting Examples. Where the terms "%" and "parts" are used, then these are by weight, unless otherwise specified. In the Examples and Comparative Examples, Compound numbering, where used, is in accordance with the order of appearance as given in Table 1 above.

Examples 1 to 37 illustrate the preparation of various formulations of the present invention.

EXAMPLE 1

A dust formulation was prepared by blending:

1 part of Compound 3 (prepared as described in Preparation 2);
10 parts of 3-hydroxy-5-methylisoxazole; and
89 parts of Zeeklite NG (Trade Mark, product of Zeeklite Co., Ltd. - fine mineral powder primarily consisting of kaolinite and sericite)

and pulverising the resulting blend in a hammer mill to obtain the desired formulation.

EXAMPLE 2

Following a procedure similar to that of Example 1, a dust formulation was prepared from:

1 part of Compound 2 (prepared as described in Preparation 3);
10 parts of the calcium salt of 3-hydroxy-5-methylisoxazole (prepared as described in Preparation 40); and
89 parts of Zeeklite NG.

EXAMPLE 3

A wettable powder formulation was prepared by blending:

10 parts of Compound 3 (prepared as described in Preparation 2);
50 parts of the calcium salt of 3-hydroxy-5-methylisoxazole (prepared as described in Preparation 40);
2 parts of Gohsenol GL-05S (Trade Mark, polyvinyl alcohol, Product of Nippon Synthetic Chemical Industry, Co., Ltd.); and
38 parts of Carplex #80 (Trade Mark, product of Shionogi Pharmaceutical Co., Ltd., amorphous silicon dioxide hydrate)

and pulverising the resulting blend in a hammer mill to obtain the desired formulation.

EXAMPLE 4

Following a procedure similar to that of Example 3, a wettable powder formulation was prepared from:

10 parts of Compound 1 (prepared as described in Preparation 1);
50 parts of 3-hydroxy-5-methylisoxazole;
2 parts of Gohsenol GL-05S; and
38 parts of Carplex #80-S.

EXAMPLE 5

Following a procedure similar to that of Example 3, a wettable powder formulation was prepared from:

10 parts of Compound 11 (prepared as described in Preparation 12);
50 parts of 3-hydroxy-5-methylisoxazole;
2 parts of Gohsenol GL-05S; and
38 parts of Carplex #80-S.

EXAMPLE 6

A granular formulation was prepared by mixing together:

1 part of Compound 3 (prepared as described in Preparation 2);
5 parts of the calcium salt of 3-hydroxy-5-methylisoxazole (prepared as described in Preparation 40); and
8 parts of dimethylformamide

to form a solution. The resulting solution was then adsorbed onto 86 parts of Kagalite No. 2 (Trade Mark, pumice, product of Silver Industries) to obtain the desired formulation.

In Examples 7 to 18, Compounds Ia - Ie are as follows:

Ia. 2-(4-fluorophenyl)-1-(1H-1,2,4-triazol-1-yl)-3-trimethylsilyl-2-propanol (prepared as described in Preparation 2);
Ib. 2-(4-chlorophenyl)-1-(1H-1,2,4-triazol-1-yl)-3-trimethylsilyl-2-propanol (prepared as described in Preparation 3);
Ic. 2-(2,4-dichlorophenyl)-1-(1H-1,2,4-triazol-1-yl)-3-trimethylsilyl-2-propanol (prepared as described in Preparation 13);
Id. 2-(2,4-difluorophenyl)-1-(1H-1,2,4-triazol-1-yl)-3-trimethylsilyl-2-propanol (prepared as described in Preparation 12); and
Ie. 2-(4-chloro-2-fluorophenyl)-1-(1H-1,2,4-triazol-1-yl)-3-trimethylsilyl-2-propanol (prepared as described in Preparation 14);

and Compounds IIa - IIi are as follows:

IIa. 1,5-pentanedial;
IIb. 2,5-dimethoxytetrahydrofuran;
IIc. glyoxal;
IId. benzalkonium chloride;
IIe. 1,2-benzisothiazolin-3-one;
IIf. cupric hydroxide;
IIg. 4-chloro-2-xylenol;
IIh. 4-chloro-2-cresol; and
IIi. p-hydroxybenzoic acid ethyl ester.

Examples 7 to 18 illustrate the preparation of certain formulations of the present invention. In addition, Examples 17 and 18 illustrate methods of application of formulations of the invention.

EXAMPLE 7

45 Granular formulations were prepared by blending:

0.5 part of a compound selected from Compounds Ia - Ie;
1 to 3 parts, as required, of a compound selected from Compounds IIa - IIi;
1 part of synthetic silicon dioxide hydrate;
2 parts of calcium lignin sulphonate;
30 parts of bentonite; and
kaolin to a total of 100 parts

pulverising and thoroughly mixing the resulting blend, adding sufficient water to the blend to permit thorough kneading, followed by granulation and drying to obtain the desired formulation.

EXAMPLE 8

Following a procedure similar to that of Example 7, 45 granular formulations, each containing 6.2% of the active ingredients, were prepared from:

1.2 parts of a compound selected from Compounds Ia - Ie;
5 parts of a compound selected from Compounds IIa - IIi;
1 part of synthetic silicon dioxide hydrate;
2 parts of calcium lignin sulphonate;
80 parts of bentonite; and
60.8 parts of kaolin.

EXAMPLE 9

Following a procedure similar to that of Example 7, 45 granular formulations, each containing 3.5% of the active ingredients, were prepared from:

1.5 parts of a compound selected from Compounds Ia - Ie;
2 parts of a compound selected from Compounds IIa - IIi;
1 part of synthetic silicon dioxide hydrate;
2 parts of calcium lignin sulphonate;
80 parts of bentonite; and
68.5 parts of kaolin.

EXAMPLE 10

Following a procedure similar to that of Example 7, 45 granular formulations, each containing 19% of the active ingredients, were prepared from:

2 parts of a compound selected from Compounds Ia - Ie;

17 parts of a compound selected from Compounds IIa - IIi;
1 part of synthetic silicon dioxide hydrate;
2 parts of calcium lignin sulphonate;
25 parts of bentonite; and
53 parts of kaolin.

EXAMPLE 11

Following a procedure similar to that of Example 1, 45 dust formulations were prepared from:

0.1 part of a compound selected from Compounds Ia - Ie;
0.5 to 1.0 part, as required, of a compound selected from Compounds IIa - IIi;
11.2 parts of talc (Japanese Pharmacopoeia); and
kaolin to a total of 100 parts.

EXAMPLE 12

Following a procedure similar to that of Example 1, 45 dust formulations, each containing 1.5% of the active ingredients, were prepared from:

0.5 part of a compound selected from Compounds Ia - Ie;
1 part of a compound selected from Compounds IIa - IIi;
10.5 parts of talc; and
88 parts of kaolin.

EXAMPLE 13

Following a procedure similar to that of Example 1, 45 dust formulations, each containing 2.5% of the active ingredients, were prepared from:

1 part of a compound selected from Compounds Ia - Ie;
1.5 parts of a compound selected from Compounds IIa - IIi;
9.5 parts of talc; and
88 parts of kaolin.

EXAMPLE 14

45 Aqueous suspension formulations were prepared by blending:

5 parts of a compound selected from Compounds Ia - Ie;
20 parts of a compound selected from Compounds IIa - IIi;
3 parts of polyoxyethylene sorbitan monooleate;
3 parts of carboxymethyl cellulose; and
69 parts of water

and mixing and grinding the resulting blend until the mean particle size was 5 µm or lower to obtain the desired formulations, each of which contained 25% of the active ingredients.

EXAMPLE 15

45 Wettable powder formulations were prepared by blending:

10 parts of a compound selected from Compounds Ia - Ie;
50 parts of a compound selected from Compounds IIa - IIi;
35 parts of synthetic silicon dioxide hydrate;
3 parts of calcium lignin sulphonate; and
2 parts of sodium laurylsulphate

and pulverising and thoroughly mixing the resulting blend to obtain the desired formulations, each of which contained

60% of the active ingredients.

EXAMPLE 16

45 Emulsifiable concentrate formulations were prepared by blending:

10 parts of a compound selected from Compounds Ia - Ie;
30 parts of a compound selected from Compounds IIa - IIi;
14 parts of polyoxyethylenestyryl phenyl ether;
6 parts of calcium dodecylbenzenesulphonate; and
40 parts of xylene

and thoroughly mixing the resulting blend to obtain the desired formulation, each of which contained 40% of the active ingredients.

EXAMPLE 17

45 Pre-mix formulations were prepared by blending:

5 parts of a compound selected from Compounds Ia - Ie;
10 parts of a compound selected from Compounds IIa - IIi;
3 parts of talc; and
1 part of Carplex #80

and pulverising the resulting blend using a hammer mill.

66 Parts of expanded shirasu PB03 (Trade Mark, product of Silax Co., Ltd., pumice having 75 μm mean particle diameter) were placed in a ribbon blender, and 13 parts of Superoil C (Trade Mark, product of Nippon Oil Co., Ltd., raw liquid paraffin) were added and mixed to moisten the surface of the shirasu. Subsequently, 28 parts of a pre-mix formulation, prepared as described above, were added and mixed with the shirasu, followed by the addition of 2 parts of Surfinol 104 S (Trade Mark, product of Nisshin Chemical Industries Co., Ltd., a non-ionic acetylene group surfactant) to further coat the surface of the shirasu. The resulting coated granular product contained 15% of the active ingredients.

Packs made of hi-Selon C-200 (Trade Mark, product of Nichigo Film Co., Ltd., 40 μm thick PVA film) were made, each containing 50 g of the coated product. The packs were thrown into the centre of artificial paddy fields, each of which had an area of 2 x 2 m. The packs floated on the water surface and, as the PVA dissolved in the water, the granular formulations from inside the packs spread on the water surface and the active ingredients dispersed into the water.

EXAMPLE 18

45 Pulverised pre-mixes were prepared by blending and pulverising, in a hammer mill:

5 parts of a compound selected from Compounds Ia - Ie;
10 to 20 parts, as required, of a compound selected from Compounds IIa - IIi;
2.5 parts of Aerosil R 972 (Trade Mark, product of Japan Aerosil Co., Ltd., water-repellent silica); and
5 parts of Toxanon 50 P (Trade Mark, product of Sanyo Chemical Industries Co., Ltd., polycarboxylate sodium salt).

52.5 To 62.5 parts, as appropriate, of expanded Shirasu PB 10 (0.42 mm mean particle diameter) were placed in a polyethylene sack, and 15 parts of Superoil C were added to moisten the surface of the Shirasu. Subsequently, 31.5 parts of pulverised pre-mix was added and mixed with the shirasu. The resulting coated product contained from 15 to 25% of the active ingredients.

Following a procedure similar to that of Example 17, the coated product was divided into packs containing 50 g each of the product. The packs were thrown into the centre of artificial paddy fields, each of which had an area of 2 x 2 m. The packs floated on the water surface and, as the PVA dissolved in the water, the granular formulations from inside the packs spread on the water surface and the active ingredients dispersed into the water.

EXAMPLE 19

Following a procedure similar to that of Example 3, a wettable powder formulation was prepared from:

20 parts of benomyl;

20 parts of Compound 3 (prepared as described in Preparation 2);
20 parts of carbon white (silicon dioxide hydrate);
3 parts of sodium laurylsulphate;
2 parts of calcium lignin sulphonate; and
35 parts of kaolin.

EXAMPLE 20

Following a procedure similar to that of Example 3, a wettable powder formulation was prepared from:

20 parts of 2-(4-thiazolyl)benzimidazole;
10 parts of Compound 2 (prepared as described in Preparation 3);
10 parts of carbon white;
5 parts of Neopelex (Trade Mark, sodium dodecylbenzenesulphonate, Product of KAO Corporation); and
55 parts of kaolin.

EXAMPLE 21

Following a procedure similar to that of Example 3, a wettable powder formulation was prepared from:

50 parts of thiophanate-methyl;
5 parts of Compound 11 (prepared as described in Preparation 13);
5 parts of carbon white;
3 parts of polyoxyethylene nonyl phenyl ether;
2 parts of sodium naphthalenesulphonate; and
35 parts of kaolin.

EXAMPLE 22

Following a procedure similar to that of Example 3, a wettable powder formulation was prepared from:

10 parts of benomyl;
10 parts of 2-(4-thiazolyl)benzimidazole;
20 parts of Compound 3 (prepared as described in Preparation 2);
20 parts of carbon white;
3 parts of sodium laurylsulphate;
2 parts of calcium lignin sulphonate; and
35 parts of kaolin.

EXAMPLE 23

Following a procedure similar to that of Example 3, a wettable powder formulation was prepared from:

10 parts of benomyl;
10 parts of methyl 2-benzimidazole carbamate;
20 parts of Compound 3 (prepared as described in Preparation 2);
20 parts of carbon white;
3 parts of sodium laurylsulphate;
2 parts of calcium lignin sulphonate; and
35 parts of kaolin.

EXAMPLE 24

Following a procedure similar to that of Example 3, a wettable powder formulation was prepared from:

10 parts of benomyl;
20 parts of thiophanate-methyl;
20 parts of Compound 3 (prepared as described in Preparation 2);
20 parts of carbon white;

3 parts of sodium laurylsulphate;
2 parts of calcium lignin sulphonate; and
35 parts of kaolin.

EXAMPLE 25

Following a procedure similar to that of Example 3, a wettable powder formulation was prepared from:

10 parts of 2-(4-thiazolyl)benzimidazole;
10 parts of methyl 2-benzimidazole carbamate;
10 parts of Compound 2 (prepared as described in Preparation 3);
10 parts of carbon white;
5 parts of Neopelex; and
55 parts of kaolin.

EXAMPLE 26

A fluid formulation was prepared as follows. One part of polyoxyethylene nonyl phenyl ether and 4 parts of sodium lignin sulphonate were mixed with 45 parts of water and stirred well. 20 Parts of Compound 3 (prepared as described in Preparation 2) and 20 parts of methyl 2-benzimidazole carbamate were added to the resulting mixture and dispersed in a homogeniser. Subsequently, 10 parts of a 2% w/v aqueous solution of xanthan gum were added to the dispersion to obtain the desired formulation.

EXAMPLE 27

A granular formulation was prepared by blending:

1 part of methyl 2-benzimidazole carbamate;
0.5 part of Compound 3 (prepared as described in Preparation 2);
1 part of synthetic silicon hydroxide hydrate;
2 parts of calcium lignin sulphonate;
30 parts of bentonite; and
65.5 parts of kaolin

pulverising and thoroughly mixing the resulting blend, adding sufficient water to the blend to permit thorough kneading, followed by granulation and drying to obtain the desired formulation containing the active ingredient in an amount of 1.5% by weight.

EXAMPLE 28

Following a procedure similar to that of Example 3, a wettable powder formulation was prepared from:

20 parts of triadimenol;
20 parts of Compound 3 (prepared as described in Preparation 2);
20 parts of carbon white;
3 parts of sodium laurylsulphate;
2 parts of calcium lignin sulphonate; and
35 parts of kaolin.

EXAMPLE 29

Following a procedure similar to that of Example 3, a wettable powder formulation was prepared from:

20 parts of triflumizole;
10 parts of Compound 2 (prepared as described in Preparation 3);
10 parts of carbon white;
5 parts of Neopelex; and
55 parts of kaolin.

EXAMPLE 30

Following a procedure similar to that of Example 3, a wettable powder formulation was prepared from:

50 parts of tridemorph;
5 parts of Compound 11 (prepared as described in Preparation 13);
5 parts of carbon white;
3 parts of polyoxyethylenenonyl phenyl ether;
2 parts of sodium naphthalenesulphate; and
35 parts of kaolin.

EXAMPLE 31

Following a procedure similar to that of Example 3, a wettable powder formulation was prepared from:

10 parts of triadimenol;
10 parts of triflumizole;
20 parts of Compound 3 (prepared as described in Preparation 2);
20 parts of carbon white;
3 parts of sodium laurylsulphate;
2 parts of calcium lignin sulphonate; and
35 parts of kaolin.

EXAMPLE 32

Following a procedure similar to that of Example 3, a wettable powder formulation was prepared from:

10 parts of triadimenol;
10 parts of prochloraz;
20 parts of Compound 3 (prepared as described in Preparation 2);
20 parts of carbon white;
3 parts of sodium laurylsulphate;
2 parts of calcium lignin sulphonate; and
35 parts of kaolin.

EXAMPLE 33

Following a procedure similar to that of Example 3, a wettable powder formulation was prepared from:

10 parts of triadimenol;
20 parts of fenpropimorph;
20 parts of Compound 3 (prepared as described in Preparation 2);
20 parts of carbon white;
3 parts of sodium laurylsulphate;
2 parts of calcium lignin sulphonate; and
35 parts of kaolin.

EXAMPLE 34

Following a procedure similar to that of Example 3, a wettable powder formulation was prepared from:

10 parts of triflumizole;
10 parts of triadimenol;
10 parts of Compound 2 (prepared as described in Preparation 3);
10 parts of carbon white;
5 parts of Neopelex; and
55 parts of kaolin.

EXAMPLE 35

Following a procedure similar to that of Example 26, a fluid formulation was prepared from:

1 Part of polyoxyethylene nonyl phenyl ether;
4 parts of sodium lignin sulphonate;
20 parts of Compound 3 (prepared as described in Preparation 2);
20 parts of prochloraz; and
10 parts of a 2% w/v aqueous solution of xanthan gum.

EXAMPLE 36

A wettable powder dressing formulation was obtained by blending:

10 parts of Compound 3 (prepared as described in Preparation 2);
50 parts of the calcium salt of 3-hydroxy-5-methylisoxazole dihydrate (prepared as described in Preparation 40);
5 parts of 1,2-benzisothiazolin-3-one;
2 parts of Gohsenol GL-05S;
10 parts of Neopelex No. 6F Powder; and
23 parts of Carplex #80

and pulverising the resulting blend in an Eck sample mill, Type KII-I (a hammer-mill pulveriser, product of Fuji Paudal Co., Ltd.).

EXAMPLE 37

Following a procedure similar to that of Example 36, a wettable powder dressing formulation was prepared from:

10 parts of Compound 3 (prepared as described in Preparation 2);
50 parts of the calcium salt of 3-hydroxy-5-methylisoxazole dihydrate (prepared as described in Preparation 40);
5 parts of cupric hydroxide;
2 parts of Gohsenol GL-05S;
10 parts of Neopelex No. 6F Powder; and
23 parts of Carplex #80.

EXAMPLE 38

Following a procedure similar to that of Example 36, a wettable powder dressing formulation was prepared from:

10 parts of Compound 3 (prepared as described in Preparation 2);
50 parts of the calcium salt of 3-hydroxy-5-methylisoxazole dihydrate (prepared as described in Preparation 40);
2 parts of Gohsenol GL-05S;
10 parts of Neopelex No. 6F Powder;
23 parts of Carplex #80; and
5 parts of Zeeklite NG.

EXAMPLE 39

Following a procedure similar to that of Example 36, a wettable powder dressing formulation was prepared from:

10 parts of Compound 3 (prepared as described in Preparation 2);
5 parts of 1,2-benzisothiazolin-3-one;
2 parts of Gohsenol GL-05S;
10 parts of Neopelex No. 6F Powder;
23 parts of Carplex #80; and
50 parts of Zeeklite NG.

EXAMPLE 40

Following a procedure similar to that of Example 36, a wettable powder dressing formulation was prepared from:

10 parts of Compound 3 (prepared as described in Preparation 2);
1 part of cupric hydroxide;
2 parts of Gohsenol GL-05S;
10 parts of Neopelex No. 6F Powder;
23 parts of Carplex #80; and
54 parts of Zeeklite NG.

Comparative Examples 1 to 12 illustrate the preparation of comparative formulations which do not fall within the scope of the present invention.

COMPARATIVE EXAMPLE 1

Following a procedure similar to that of Example 1, a dust formulation was prepared from:

4 parts of 2-(4-fluorophenyl)-1-(1H-1,2,4-triazol-1-yl)-3-trimethylsilyl-2-propanol (prepared as described in Preparation 2); and
96 parts of Zeeklite NG.

COMPARATIVE EXAMPLE 2

Following a procedure similar to that of Example 1, a dust formulation was prepared from:

4 parts of 3-hydroxy-5-methylisoxazole; and
96 parts of Zeeklite NG.

COMPARATIVE EXAMPLE 3

Following a procedure similar to that of Example 3, a wettable powder formulation was prepared from:

10 parts of 2-(4-fluorophenyl)-1-(1H-1,2,4-triazol-1-yl)-3-trimethylsilyl-2-propanol (prepared as described in Preparation 2);
2 parts of Gohsenol GL-05S; and
88 parts of Carplex #80-S were blended.

COMPARATIVE EXAMPLE 4

Following a procedure similar to that of Example 3, a wettable powder formulation was prepared from:

50 parts of the calcium salt of 3-hydroxy-5-methylisoxazole (prepared as described in Preparation 40);
2 parts of Gohsenol GL-053S; and
48 parts of Carplex #80.

COMPARATIVE EXAMPLE 5

Following a procedure similar to that of Example 6, a granular formulation was prepared from:

1 part of 2-(4-fluorophenyl)-1-(1H-1,2,4-triazol-1-yl)-3-trimethylsilyl-2-propanol (prepared as described in Preparation 2);
5 parts of dimethylformamide; and
94 parts of Kagalite No. 2.

COMPARATIVE EXAMPLE 6

Following a procedure similar to that of Example 6, a granular formulation was prepared from:

4 parts of the calcium salt of 3-hydroxy-5-methylisoxazole (prepared as described in Preparation 40);
8 parts of dimethylformamide; and
88 parts of Kagalite No. 2.

COMPARATIVE EXAMPLE 7

Following a procedure similar to that of Example 36, a wettable powder dressing formulation was prepared from:

10 parts of Compound 3 (prepared as described in Preparation 2);
2 parts of Gohsenol GL-05S;
10 parts of Neopelex No. 6F Powder;
23 parts of Carplex #80; and
55 parts of Zeeklite NG.

COMPARATIVE EXAMPLE 8

Following a procedure similar to that of Example 36, a wettable powder dressing formulation was prepared from:

50 parts of the calcium salt of 3-hydroxy-5-methylisoxazole dihydrate (prepared as described in Preparation 40);
2 parts of Gohsenol GL-05S;
10 parts of Neopelex No. 6F Powder;
23 parts of Carplex #80; and
15 parts of Zeeklite NG.

COMPARATIVE EXAMPLE 9

Following a procedure similar to that of Example 36, a wettable powder dressing formulation was prepared from:

5 parts of 1,2-benzisothiazolin-3-one;
2 parts of Gohsenol GL-05S;
10 parts of neopelex No. 6F Powder;
23 parts of Carplex #80; and
60 parts of Zeeklite NG.

COMPARATIVE EXAMPLE 10

Following a procedure similar to that of Example 36, a wettable powder dressing formulation was prepared from:

1 part of cupric hydroxide;
2 parts of Gohsenol GL-05S;
10 parts of Neopelex No. 6F Powder;
23 parts of Carplex #80; and
64 parts of Zeeklite NG.

COMPARATIVE EXAMPLE 11

Following a procedure similar to that of Example 36, a wettable powder dressing formulation was prepared from:

50 parts of the calcium salt of 3-hydroxy-5-methylisoxazole dihydrate (prepared as described in Preparation 40);
5 parts of 1,2-benzisothiazolin-3-one;
2 parts of Gohsenol GL-05S;
10 parts of Neopelex No. 6F Powder;
23 parts of Carplex #80; and
10 parts of Zeeklite NG.

COMPARATIVE EXAMPLE 12

Following a procedure similar to that of Example 36, a wettable powder dressing formulation was prepared from:

50 parts of the calcium salt of 3-hydroxy-5-methylisoxazole dihydrate (prepared as described in Preparation 40);
1 part of cupric hydroxide;
2 parts of Gohsenol GL-05S;
10 parts of Neopelex No. 6F Powder;
23 parts of Carplex #80; and
14 parts of Zeeklite NG.

The following Preparations 1 to 40 illustrate the preparation of certain compounds useful in the present invention, while Preparations 41 and 42 illustrate the preparation of precursor compounds.

PREPARATION 1

2-Phenyl-1-(1H-1,2,4-triazol-1-yl)-3-trimethylsilyl-2-propanol (Compound No. 1)

0.505 g (2.7 mmole) of 2-(1H-1,2,4-triazol-1-yl)-acetophenone was added to 50 ml of diethyl ether. The solution was then stirred at room temperature under a stream of nitrogen, and 13.5 ml (13.5 mmole) of a 1 M tetrahydrofuran solution of trimethylsilylmethylmagnesium chloride were added dropwise at such a rate that the temperature of the reaction mixture did not rise higher than 25°C. After the addition was complete, the reaction mixture was stirred for 30 minutes at room temperature; it was then heated under reflux for 6 hours. At the end of this time, the reaction mixture was cooled, and it was then poured into 100 ml of ice-water. Its pH was adjusted to a value of 6 by the addition of 5% w/v aqueous hydrochloric acid, after which it was extracted three times, each time with 50 ml of ethyl acetate. The organic layers were collected, washed three times, each time with a saturated aqueous solution of sodium chloride and dried over anhydrous sodium sulphate, and then the solvent was removed by distillation under reduced pressure, to afford a crude oily product. 0.112 g (yield 15%) of the title compound, melting at 86 - 87°C, was obtained from this crude oily product by purification through a silica gel chromatography column, eluted with mixtures of ethyl acetate and hexane ranging from 1 : 1 to 2 : 1 by volume.

Nuclear Magnetic Resonance Spectrum ($CDC\ell_3$) δ ppm:
-0.20 (9H, singlet);
1.20 (1H, doublet, J = 14.5 Hz);
1.41 (1H, doublet, J = 14.5 Hz);
4.48 (1H, doublet, J = 14.8 Hz);
4.58 (1H, doublet, J = 14.8 Hz);
7.35 - 7.24 (5H, multiplet);
7.97 (1H, singlet);
8.59 (1H, singlet).
Mass spectrum (m/e): 276 ($M^+$), 260, 193.

PREPARATION 2

2-(4-Fluorophenyl)-1-(1H-1,2,4-triazol-1-yl)-3-trimethylsilyl-2-propanol Compound No. 3)

1.62 g (0.04 mole) of a 60% w/v dispersion of sodium hydride in mineral oil were added to 60 ml of dimethylformamide. Whilst the mixture was being stirred in an ice bath, 2.91 g (0.04 mole) of 1,2,4-triazole were added, and the mixture was stirred for a further 30 minutes at room temperature. At the end of this time, 5.5 g (0.021 mole) of 1-chloro-2-(4-fluorophenyl)-3-trimethylsilyl-2-propanol (prepared as described in Preparation 41) were added to the reaction mixture, which was then heated for 30 minutes at 90°C whilst stirring. The reaction mixture was cooled and then poured into 200 ml of ice-water, and the resulting mixture was extracted with 300 ml of ethyl acetate. The organic extract was washed three times, each time with 100 ml of a saturated aqueous solution of sodium chloride. It was then dried over anhydrous sodium sulphate, and the solvent was removed by distillation under reduced pressure, to afford a crude oily product. 2.9 g (yield 47%) of the title compound, melting at 118 - 119°C, were obtained by purification of this crude oily product by silica gel column chromatography, using mixtures of ethyl acetate and hexane in proportions of 1 : 5, 1 : 1 and 2 : 1 as the eluent.

Nuclear Magnetic Resonance Spectrum ($CDC\ell_3$) δ ppm:
-0.18 (9H, singlet);
1.16 (1H, doublet, J = 14.5 Hz);
1.33 (1H, doublet, J = 14.5 Hz);
4.36 (1H, doublet, J = 14.0 Hz);

4.43 (1H, doublet, J = 14.0 Hz);
6.93 - 7.01 (2H, multiplet);
7.26 - 7.31 (2H, multiplet);
7.91 (1H, singlet);
7.99 (1H, singlet).
Mass spectrum (m/e): 293 ($M^+$), 278, 211.

Following procedures similar to those of Preparations 1 or 2, as appropriate, the compounds of the following Preparations 3 to 30 were made.

PREPARATION 3

2-(4-Chlorophenyl)-1-(1H-1,2,4-triazol-1-yl)-3-trimethylsilyl-2-propanol (Compound No. 2)

20 mg - Yield 7%

Melting at: 108-110°C
Nuclear Magnetic Resonance Spectrum ($CDC\ell_3$) δ ppm:
-0.19 (9H, singlet);
1.15 (1H, doublet, J=14.5 Hz);
1.31 (1H, doublet, J=14.5 Hz);
4.35 (2H, singlet);
7.17-7.33 (4H, multiplet);
7.80 (1H, singlet);
7.88 (1H, singlet).
Mass spectrum m/e; 309 ($M^+$), 294, 227, 211.

PREPARATION 4

2-(4-Bromophenyl)-1-(1H-1,2,4-triazol-1-yl)-3-trimethylsilyl-2-propanol (Compound No. 4)

75 mg - Yield 11%

Melting at: 120-121°C
Nuclear Magnetic Resonance Spectrum ($CDC\ell_3$) δ ppm:
-0.18 (9H, singlet);
1.20 (1H, doublet, J=14.5 Hz);
1.35 (1H, doublet, J=14.5 Hz);
4.43 (1H, doublet, J=13.9 Hz);
4.51 (1H, doublet, J=13.9 Hz);
7.25 (2H, doublet, J=8.1 Hz);
7.41 (1H, doublet, J=8.1 Hz);
7.96 (1H, singlet);
8.50 (1H, singlet).
Mass spectrum m/e; 353 ($M^+$) , 273, 257.

PREPARATION 5

2-(4-Methylphenyl)-1-(1H-1,2,4-triazol-1-yl)-3-trimethylsilyl-2-propanol (Compound No. 5)

10 mg - Yield 4%

Melting at: 101°C
Nuclear Magnetic Resonance Spectrum ($CDC\ell_3$) δ ppm:
-0.19 (9H, singlet);
1.15 (1H, doublet, J=14.4 Hz);
1.36 (1H, doublet, J=14.4 Hz);
2.30 (3H, singlet);
4.35 (1H, doublet, J=14.0 Hz);

4.43 (1H, doublet, J=14.0 Hz);
7.07 (2H, doublet of doublets, J=8.3 & 1.8 Hz);
7.18 (2H, doublet of doublets, J=8 & 3Hz);
7.90 (2H, singlet).
Mass spectrum m/e; 289 ($M^+$), 274, 256 207.

PREPARATION 6

2-(4-Ethylphenyl)-1-(1H-1,2,4-triazol-1-yl)-3-trimethylsilyl-2-propanol (Compound No. 10)

13.7 mg - Yield 4.0%

Melting at: 80-81°C
Nuclear Magnetic Resonance Spectrum ($CDC\ell_3$) δ ppm:
-0.16 (9H, singlet);
1.23 (3H, triplet, J=7.6 Hz);
1.74 (1H, doublet, J=14.1 Hz);
1.95 (1H, doublet, J=14.1 Hz);
2.64 (2H, quartet, J=7.6 Hz);
4.11 (1H, doublet, J=12.1 Hz);
4.38 (1H, doublet, J=12.1 Hz);
7.05 (2H, doublet of doublets, J=8.5 & 2.0 Hz);
7.90 (2H, doublet of doublets, J=8.5 & 2.0 Hz);
8.11 (1H, singlet);
8.48 (1H, singlet).
Mass spectrum m/e; 303 ($M^+$), 272, 131.

PREPARATION 7

2-(4-Biphenylyl)-1-(1H-1,2,4-triazol-1-yl)-3-trimethylsilyl-2-propanol (Compound No. 8)

74.7 mg - Yield 16%

Melting at: 97-100°C
Nuclear Magnetic Resonance Spectrum ($CDC\ell_3$) δ ppm:
-0.17 (9H, singlet);
1.20 (1H, doublet, J=14.6 Hz);
1.42 (1H, doublet, J=14.6 Hz);
4.50 (2H, singlet);
7.33-7.62 (9H, multiplet);
7.96 (1H, singlet);
8.34 (1H, singlet).
Mass spectrum m/e; 351 ($M^+$), 269, 179.

PREPARATION 8

1-(1H-1,2,4-Triazol-1-yl)-2-(4-trifluoromethylphenyl)-3-trimethylsilyl-2-propanol (Compound No. 6)

26 mg - Yield 8%

Melting at: 144°C
Nuclear Magnetic Resonance Spectrum ($CDC\ell_3$) δ ppm:
-0.19 (9H, singlet);
1.20 (1H, doublet, J=14.5 Hz);
1.34 (1H, doublet, J=14.5 Hz);
4.44 (1H, doublet, J=14.8 Hz);
4.45 (1H, doublet, J=14.8 Hz);
7.93 (1H, singlet);
8.10 (1H, singlet).

Mass spectrum m/e; 344 $(M+1)^+$, 328, 261, 234, 171.

PREPARATION 9

2-(4-Methoxyphenyl)-1-(1H-1,2,4-triazol-1-yl)-3-trimethylsilyl-2-propanol (Compound No. 7)

22 mg - Yield 13%

Melting at: 85-87°C
Nuclear Magnetic Resonance Spectrum ($CDC\ell_3$) δ ppm:
-0.14 (9H, singlet);
1.72 (1H, doublet, J=14.5 Hz);
1.93 (1H, doublet, J=14.5 Hz);
4.11 (2H, doublet, J=11.9 Hz);
4.33 (2H, doublet, J=11.9 Hz);
6.88 (2H, doublet of doublets, J=9.0 & 2.2 Hz);
7.08 (2H, doublet of doublets, J=9.0 & 2.2 Hz);
8.01 (1H, singlet);
8.19 (1H, singlet).
Mass spectrum m/e; 305 $(M^+)$, 290, 274, 133.

PREPARATION 10

2-(3-Methoxyphenyl)-1-(1H-1,2,4-triazol-1-yl)-3-trimethylsilyl-2-propanol (Compound No. 21)

112 mg - Yield 12%

Melting at: 91-92°C
Nuclear Magnetic Resonance Spectrum ($CDC\ell_3$) δ ppm:
-0.17 (9H, singlet);
1.15 (1H, doublet, J=14.4 Hz);
1.25 (1H, doublet, J=14.4 Hz);
3.77 (3H, singlet);
4.39 (2H, singlet);
6.78 (1H, multiplet);
6.86 (2H, multiplet);
7.22 (1H, multiplet);
7.84 (1H, singlet);
7.89 (1H, singlet).
Mass spectrum m/e; 305 $(M^+)$, 290, 275, 221.

PREPARATION 11

2-(2-Methoxyphenyl)-1-(1H-1,2,4-triazol-1-yl)-3-trimethylsilyl-2-propanol (Compound No. 15)

64 mg - Yield 12%

Melting at: 135-136°C
Nuclear Magnetic Resonance Spectrum ($CDC\ell_3$) δ ppm:
-0.197 (9H, singlet);
1.78 (1H, doublet, J=14.1 Hz);
2.26 (1H, doublet, J=14.1 Hz);
3.60 (3H, singlet);
4.02 (1H, doublet, J=11.7 Hz);
4.56 (1H, doublet, J=11.7 Hz);
6.85-7.02 (2H, multiplet);
7.14-7.33 (2H, multiplet);
7.92 (1H, singlet);
8.25 (1H, singlet).

Mass spectrum m/e; 305 ($M^+$), 290, 275, 221.

PREPARATION 12

2-(2,4-Difluorophenyl)-1-(1H-1,2,4-triazol-1-yl)-3-trimethylsilyl-2-propanol (Compound No. 12)

742 mg - Yield 26.5%

Melting at: 112-114°C
Nuclear Magnetic Resonance Spectrum ($CDC\ell_3$) δ ppm:
-0.17 (9H, singlet);
1.23 (1H, doublet, J=14.5 Hz);
1.48 (1H, doublet of doublets, J=14.5 & 2.0 Hz);
4.41 (1H, doublet, J=13.7 Hz);
4.43-4.72 (1H, broad);
4.469 (1H, doublet, J=13.7 Hz);
6.69-6.79 (1H, multiplet);
7.40-7.49 (1H, multiplet);
7.83 (1H, singlet);
7.87 (1H, singlet).
Mass spectrum m/e; 312 $(M+1)^+$, 296, 229.

PREPARATION 13

2-(2,4-Dichlorophenyl)-1-(1H-1,2,4-triazol-1-yl)-3-trimethylsilyl-2-propanol (Compound No. 11)

35 mg - Yield 4.1%

Melting at: 136-137°C
Nuclear Magnetic Resonance Spectrum ($CDC\ell_3$) δ ppm:
-0.10 (9H, singlet);
1.36 (1H, doublet, J=14.5 Hz);
2.04 (1H, doublet, J=14.5 Hz);
4.6 (1H, doublet, J=14.0 Hz);
5.38 (1H, doublet, J=14.0 Hz);
7.3 (1H, doublet of doublets, J=8.1 & 2.1 Hz);
7.42-7.5 (1H, multiplet);
7.78 (1H, doublet, J=8.1 Hz);
7.98 (1H, singlet);
8.04 (1H, singlet).
Mass spectrum m/e; 344 ($M^+$), 326, 261, 214.

PREPARATION 14

2-(4-Chloro-2-fluorophenyl)-1-(1H-1,2,4-triazol-1-yl)-3-trimethylsilyl-2-propanol (Compound No. 14)

19 mg - Yield 6%

Melting at: 129-130°C
Nuclear Magnetic Resonance Spectrum ($CDC\ell_3$) δ ppm:
-0.164 (9H, singlet);
1.20 (1H, doublet, J=14.6 Hz);
1.50 (1H, doublet of doublets, J=14.6 & 1.9 Hz);
4.48 (1H, doublet, J=13.7 Hz);
4.74 (1H, doublet, J=13.8 Hz);
4.51-4.77 (1H, broad);
6.99-7.05 (2H, multiplet);
7.37-7.45 (1H, multiplet);
7.87 (1H, singlet);

8.21 (1H, singlet).
Mass spectrum m/e; 327 ($M^+$), 312, 245, 155.

PREPARATION 15

2-(2-Chloro-4-fluorophenyl)-1-(1H-1,2,4-triazol-1-yl)-3-trimethylsilyl-2-propanol (Compound No. 13)

40 mg - Yield 5%

Melting at: 139-140°C
Nuclear Magnetic Resonance Spectrum ($CDC\ell_3$) δ ppm:
-0.17 (9H, singlet);
1.20 (1H, doublet, J=14.6 Hz);
2.04 (1H, doublet, J=14.6 Hz);
4.53 (1H, doublet, J=14.0 Hz);
5.34 (1H, doublet, J=14.0 Hz);
6.87 (1H, doubled doublet of doublets, J=9.0 & 8.2, & 6.3 Hz);
7.06 (1H, doublet of doublets, J=8.2 & 2.7 Hz);
7.65 (1H, doublet of doublets, J=9.0 & 6.3 Hz);
7.86 (1H, singlet);
8.23 (1H, singlet).
Mass spectrum m/e; 327 ($M^+$), 312, 245, 155.

PREPARATION 16

2-(4-Fluorophenyl)-1-(1H-1,3-imidazol-1-yl)-3-trimethylsilyl-2-propanol (Compound No. 41)

15 mg - Yield 5%
Title compound obtained as an amorphous solid

Nuclear Magnetic Resonance Spectrum ($CDC\ell_3$) δ ppm:
-0.18 (9H, singlet);
1.21 (1H, doublet, J=16.1 Hz);
1.42 (1H, doublet, J=16.1 Hz);
3.95 (2H, broad singlet);
6.95-7.05 (2H, multiplet);
7.12 (2H, singlet);
7.25-7.35 (2H, multiplet);
7.72 (1H, singlet).
Mass spectrum m/e; 293 $(M+1)^+$, 277, 211, 203.

PREPARATION 17

2-(3,4-Dichlorophenyl)-1-(1H-1,2,4-triazol-1-yl)-3-trimethylsilyl-2-propanol (Compound No. 29)

180 mg - Yield 27%.

Melting at 127 - 128°C.
Mass spectrum (m/e): 343, 328, 261, 245, 171.

PREPARATION 18

2-(2,4-Difluorophenyl)-1-(1H-1,3-imidazol-1-yl)-3-trimethylsilyl-2-propanol (Compound No. 50)

140 mg - Yield 97%.

Melting at 147 - 148°C.
Nuclear Magnetic Resonance Spectrum ($CDC\ell_3$) δ ppm:
-0.19 (9H, singlet);

1.12 (1H, doublet, J = 15.0 Hz);
1.64 (1H, doublet, J = 15.0 Hz);
4.19 (1H, doublet, J = 14.2 Hz);
4.31 (1H, doublet, J = 14.2 Hz);
6.72 - 6.89 (4H, multiplet);
7.38 - 7.50 (2H, multiplet).
Mass spectrum (m/e): 310, 295, 229, 139.

PREPARATION 19

2-Phenyl-1-(1H-1,3-imidazol-1-yl)-3-trimethylsilyl-2-propanol (Compound No. 39)

512 mg - Yield 93%.

Melting at 154 - 156°C.
Nuclear Magnetic Resonance Spectrum ($CDC\ell_3$) δ ppm:
-0.195 (9H, singlet);
1.19 (1H, doublet, J = 14.7 Hz);
1.42 (1H, doublet, J = 14.7 Hz);
4.09 (1H, doublet, J = 14.0 Hz);
4.17 (1H, doublet, J = 14.0 Hz);
6.63 (1H, singlet);
6.90 (1H, singlet);
7.23 (1H, singlet);
7.29 - 7.35 (5H, multiplet).
Mass spectrum (m/e): 275, 259, 193, 185, 103.

PREPARATION 20

2-(4-Chlorophenyl)-1-(1H-1,3-imidazol-1-yl)-3-trimethylsilyl-2-propanol (Compound No. 40)

522 mg - Yield 84%.

Melting at 173 - 174°C.
Nuclear Magnetic Resonance Spectrum ($CDC\ell_3$) δ ppm:
-0.173 (9H, singlet);
1.19 (2H, doublet, J = 14.8 Hz);
1.39 (1H, doublet, J = 14.8 Hz);
4.09 (2H, singlet);
6.66 (1H, singlet);
6.92 (1H, singlet);
7.25 (1H, singlet);
7.29 - 7.35 (4H, multiplet).
Mass spectrum (m/e): 309, 293, 227, 219, 137.

PREPARATION 21

2-(2,4-Dichlorophenyl)-1-(1H-1,3-imidazol-1-yl)-3-trimethylsilyl-2-propanol (Compound No. 49)

408 mg - Yield 59%.

Melting at 154 - 156°C.
Nuclear Magnetic Resonance Spectrum ($CDC\ell_3$) δ ppm:
-0.177 (9H, singlet);
1.08 (1H, doublet, J = 15.1 Hz);
2.12 (1H, doublet, J = 15.1 Hz);
4.30 (1H, doublet, J = 14.3 Hz);
4.64 (1H, doublet, J = 14.3 Hz);
6.74 (1H, singlet);

6.89 (1H, singlet);
7.21 (1H, doublet of doublets, J = 2.2 & 8.6 Hz);
7.34 (1H, singlet);
7.40 (1H, doublet, J = 2.2 Hz);
7.63 (1H, doublet, J = 8.6 Hz).
Mass spectrum (m/e): 343, 327, 253.

PREPARATION 22

1-(1H-1,3-Imidazol-1-yl)-2-(4-methylphenyl)-3-trimethylsilyl-2-propanol (Compound No. 43)

515 mg - Yield 89%.

Melting at 172 - 173°C.
Nuclear Magnetic Resonance Spectrum ($CDC\ell_3$) δ ppm:
-0.186 (9H, singlet);
1.17 (1H, doublet, J = 14.7 Hz);
1.41 (1H, doublet, J = 14.7 Hz);
2.34 (3H, singlet);
4.06 (1H, doublet, J = 15.0 Hz);
4.14 (1H, doublet, J = 15.0 Hz);
6.67 (1H, singlet);
6.93 (1H, singlet);
7.22 - 7.11 (5H, multiplet).
Mass spectrum (m/e): 288, 273, 207, 199, 117.

PREPARATION 23

2-(2-Fluorophenyl)-1-(1H-1,2,4-triazol-1-yl)-3-trimethylsilyl-2-propanol (Compound No. 17)

44 mg - Yield 20%.

Melting at 97 - 98°C.
Nuclear Magnetic Resonance Spectrum ($CDC\ell_3$) δ ppm:
-0.18 (9H, singlet);
1.19 (1H, doublet, J = 14.4 Hz);
1.52 (1H, doublet of doublets, J = 14.4 & 1.7 Hz);
4.43 (1H, doublet, J = 13.7 Hz);
4.49 (1H, doublet, J = 1.7 Hz);
4.76 (1H, doublet, J = 13.7 Hz);
6.92 - 7.06 (3H, multiplet);
7.15 - 7.21 (1H, multiplet);
7.41 - 7.45 (1H, multiplet);
7.81 (1H, singlet);
7.82 (1H, singlet).
Mass spectrum (m/e): 293, 278, 211.

PREPARATION 24

2-(2-Chlorophenyl)-1-(1H-1,2,4-triazol-1-yl)-3-trimethylsilyl-2-propanol (Compound No. 16)

3.8 mg - Yield 2.3%.

Melting at 109 - 111°C.
Nuclear Magnetic Resonance Spectrum ($CDC\ell_3$) δ ppm:
-0.18 (9H, singlet);
1.21 (1H, doublet, J = 14.6 Hz);
1.93 (1H, doublet of doublets, J = 14.6 & 1.9 Hz);
4.46 (1H, doublet, J = 13.9 Hz);

4.65 (1H, doublet, J = 1.9 Hz);
5.28 (1H, doublet, J = 13.9 Hz);
7.11 - 7.16 (2H, multiplet);
7.26 - 7.31 (1H, multiplet);
7.62 - 7.67 (1H, multiplet);
7.80 (1H, singlet);
7.84 (1H, singlet).
Mass spectrum (m/e): 309, 294, 227, 137.

PREPARATION 25

2-(3-Bromophenyl)-1-(1H-1,2,4-triazol-1-yl)-3-trimethylsilyl-2-propanol (Compound No. 61)

345 mg - Yield 49%.

Melting at 90 - 91°C.
Nuclear Magnetic Resonance Spectrum ($CDC\ell_3$) δ ppm:
-0.17 (9H, singlet);
1.13 (1H, doublet, J = 14.5 Hz);
1.30 (1H, doublet, J = 14.5 Hz);
4.23 (1H, singlet);
4.36 (2H, singlet);
7.15 - 7.38 (3H, multiplet);
7.51 - 7.53 (1H, multiplet);
7.78 (1H, singlet);
7.91 (1H, singlet).
Mass spectrum (m/e): 353, 340, 271, 181.

PREPARATION 26

2-(3-Methylphenyl)-1-(1H-1,2,4-triazol-1-yl)-3-trimethylsilyl-2-propanol (Compound No. 62)

60 mg - Yield 13%.

Melting at 106 - 109°C.
Nuclear Magnetic Resonance Spectrum ($CDC\ell_3$) δ ppm:
-0.19 (9H, singlet);
1.12 (1H, doublet, J = 14.5 Hz);
1.34 (1H, doublet, J = 14.5 Hz);
2.31 (3H, singlet);
3.94 (1H, singlet);
4.37 (2H, singlet);
6.99 - 7.14 (4H, multiplet);
7.72 (1H, singlet);
7.89 (1H, singlet).
Mass spectrum (m/e): 289, 274, 207, 117.

PREPARATION 27

2-(2,5-Dichlorophenyl)-1-(1H-1,2,4-triazol-1-yl)-3-trimethylsilyl-2-propanol (Compound No. 63)

7.2 mg - Yield 2.7%.

Melting at 105 - 107°C.
Nuclear Magnetic Resonance Spectrum ($CDC\ell_3$) δ ppm:
-0.14 (9H, singlet);
1.20 (1H, doublet, J = 14.6 Hz);
1.86 (1H, doublet, J = 14.6 Hz);
4.45 (1H, doublet, J = 13.9 Hz);

4.82 (1H, singlet);
5.24 (1H, doublet, J = 13.9 Hz);
7.11 (1H, doublet of doublets, J = 2.5 & 8.4 Hz);
7.19 (1H, doublet, J = 8.4 Hz);
7.69 (1H, doublet, J = 2.5 Hz);
7.48 (1H, singlet);
7.87 (1H, singlet).
Mass spectrum (m/e): 343, 328, 261, 173.

PREPARATION 28

1-(1H-1,2,4-Triazol-1-yl)-2-(2,3,4-trichlorophenyl)-3-trimethylsilyl-2-propanol (Compound No. 64)

11.4 mg - Yield 5%.

Melting at 170 - 172°C.
Nuclear Magnetic Resonance Spectrum ($CDC\ell_3$) δ ppm:
-0.15 (9H, singlet);
1.24 (1H, doublet, J = 14.7 Hz);
1.90 (1H, doublet of doublets, J = 14.7 & 1.8 Hz);
4.45 (1H, doublet, J = 14.1 Hz);
4.96 (1H, doublet, J = 1.8 Hz);
5.28 (1H, doublet, J = 14.1 Hz);
7.27 (1H, doublet, J = 8.8 Hz);
7.59 (1H, doublet, J = 8.8 Hz);
7.82 (1H, singlet);
7.86 (1H, singlet).
Mass spectrum (m/e): 378, 362, 295, 207.

PREPARATION 29

1-(1H-1,2,4-Triazol-1-yl)-2-(2,4,5-trichlorophenyl)-3-trimethylsilyl-2-propanol (Compound No. 65)

9.9 mg - Yield 4.4%.

Melting at 139 - 141°C.
Nuclear Magnetic Resonance Spectrum ($CDC\ell_3$) δ ppm:
-0.13 (9H, singlet);
1.21 (1H, doublet, J = 14.7 Hz);
1.80 (1H, doublet, J = 14.7 Hz);
4.42 (1H, doublet, J = 14.0 Hz);
4.93 (1H, singlet);
5.18 (1H, doublet, J = 14.0 Hz);
7.40 (1H, singlet);
7.80 (1H, singlet);
7.86 (1H, singlet);
7.89 (1H, singlet).
Mass spectrum (m/e): 378, 363, 297, 252.

PREPARATION 30

2-(3,4-Methylenedioxyphenyl)-1-(1H-1,2,4-triazol-1-yl)-3-trimethylsilyl-2-propanol (Compound No. 66)

49 mg - Yield 22%.

Melting at 156 - 157°C.
Nuclear Magnetic Resonance Spectrum ($CDC\ell_3$) δ ppm:
-0.118 (9H, singlet);
1.68 (1H, doublet, J = 14.6 Hz);

1.89 (1H, doublet, J = 14.6 Hz);
2.98-3.50 (1H, broad);
4.25 (1H, doublet, J = 7.1 Hz);
4.15 (1H, doublet, J = 7.1 Hz);
5.97 (2H, singlet);
6.58 (1H, doublet, J = 2.2 Hz);
6.61 (1H, doublet of doublets, J = 2.2 & 8.4 Hz);
6.78 (1H, doublet, J = 8.4 Hz);
7.99 (1H, singlet);
8.18 (1H, singlet).

Mass spectrum (m/e): 319, 304, 288, 147.

PREPARATION 31

2-(4-Fluorophenyl)-1-(1H-1,2,4-triazol-1-yl)-3-trimethylsilyl-2-propanol oxalate (Compound No. 74)

9 mg (0.0001 mole) of oxalic acid were added at room temperature to 2 ml of a diethyl ether solution containing 59 mg (0.0002 mole) of 2-(4-fluorophenyl)-1-(1H-1,2,4-triazol-1-yl)-3-trimethylsilyl-2-propanol (prepared as described in Preparation 2). The crystals which separated were collected by filtration and washed with diethyl ether, to obtain 50 mg (yield 74%) of the title compound as crystals, melting at 162 - 163°C.

Nuclear Magnetic Resonance Spectrum (tetradeuterated methanol) δ ppm:
-0.199 (9H, singlet);
1.31 (1H, doublet, J = 14.8 Hz);
1.56 (1H, doublet, J = 14.8 Hz);
4.58 (1H, doublet, J = 14.0 Hz);
4.71 (1H, doublet, J = 14.0 Hz);
6.97 - 7.06 (2H, multiplet);
7.40 - 7.47 (2H, multiplet);
8.40 (1H, singlet);
9.04 (1H, singlet).

PREPARATION 32

2-(4-Fluorophenyl)-1-(1H-1,2,4-triazol-1-yl)-3-trimethylsilyl-2-propanol nitrate (Compound No. 75)

Following a procedure similar to that described in Preparation 31, but using an equivalent amount of nitric acid in place of the oxalic acid, 60 mg (yield 86%) of the title compound were obtained as crystals, melting at 158 - 160°C.

Nuclear Magnetic Resonance Spectrum (tetradeuterated methanol) δ ppm:
-0.21 (9H, singlet);
1.29 (1H, doublet, J = 14.7 Hz);
1.49 (1H, doublet, J = 14.7 Hz);
4.45 (1H, doublet, J = 14.1 Hz);
4.55 (1H, doublet, J = 14.1 Hz);
6.95 - 7.04 (2H, multiplet);
7.37 - 7.44 (2H, multiplet);
7.85 (1H, singlet);
8.17 (1H, singlet).

PREPARATION 33

Adduct of 2-(4-fluorophenyl)-1-(1H-1,2,4-triazol-1-yl)-3-trimethylsilyl-2-propanol with saccharin (Compound No. 78)

147 mg (0.0005 mole) of 2-(4-fluorophenyl)-1-(1H-1,2,4-triazol-1-yl)-3-trimethylsilyl-2-propanol (prepared as described in Preparation 2) and 92 mg (0.0005 mole) of saccharin were dissolved in 5 ml of methanol whilst stirring at room temperature. The methanolic reaction solution was then condensed by evaporation under reduced pressure, to give 238 mg (yield 100%) of the title compound, as crystals, melting at 107 - 108°C.

Nuclear Magnetic Resonance Spectrum (tetradeuterated methanol) δ ppm:
-0.21 (9H, singlet);
1.24 (1H, doublet, J = 14.6 Hz);
1.48 (1H, doublet, J = 14.6 Hz);
4.48 (1H, doublet, J = 15.2 Hz);
4.54 (1H, doublet, J = 15.2 Hz);
6.94 - 7.03 (2H, multiplet);
7.37 - 7.44 (2H, multiplet);
7.84 (1H, singlet);
7.87 - 8.03 (4H, multiplet).

PREPARATION 34

Adduct of 2-(4-chlorophenyl)-1-(1H-1,2,4-triazol-1-yl)-3-trimethylsilyl-2-propanol with saccharin (Compound No. 83)

Following a procedure similar to that described in Preparation 33, but using an equivalent amount of 2-(4-chlorophenyl)-1-(1H-1,2,4-triazol-1-yl)-3-trimethylsilyl-2-propanol (prepared as described in Preparation 3) in place of the 2-(4-fluorophenyl)-1-(1H-1,2,4-triazol1-yl)-3-trimethylsilyl-2-propanol, 247 mg (yield 100%) of the title compound were obtained as crystals, melting at 208 - 210°C.

Nuclear Magnetic Resonance Spectrum (tetradeuterated methanol) δ ppm:
-0.202 (9H, singlet);
1.25 (1H, doublet, J = 14.7 Hz);
1.48 (1H, doublet, J = 14.7 Hz);
4.44 (1H, doublet, J = 14.1 Hz);
4.55 (1H, doublet, J = 14.1 Hz);
7.24 - 7.40 (4H, multiplet);
7.84 (1H, singlet);
7.84 - 8.05 (4H, multiplet);
8.17 (1H, singlet).

PREPARATIONS 35 TO 38

The following compounds were synthesised in a similar manner to that described in Preparation 2.

PREPARATION 35

2-(4-Chlorophenyl)-3-dimethylphenylsilyl-1-(1H-1,2,4-triazol-1-yl)-2-propanol (Compound No. 67)

44.8 mg - Yield 20%.

Melting at 73 - 82°C.
Nuclear Magnetic Resonance Spectrum ($CDC\ell_3$) δ ppm:
0.038 (3H, singlet);
0.16 (3H, singlet);
1.39 (1H, doublet, J = 14.6 Hz);
1.56 (1H, doublet, J = 14.6 Hz);
4.31 (1H, doublet, J = 11.0 Hz);
4.33 (1H, doublet, J = 11.0 Hz);
7.26 - 7.35 (9H, multiplet);
7.83 (2H, singlet).
Mass spectrum (m/e): 371, 356, 269, 211, 135.

PREPARATION 36

3-Dimethylphenylsilyl-2-(4-fluorophenyl)-1-(1H-1,2,4-triazol-1-yl)-2-propanol (Compound No. 68)

30.6 mg - Yield 15%.
Oily substance.

Nuclear Magnetic Resonance Spectrum ($CDC\ell_3$) δ ppm:
0.02 (3H, singlet);
0.15 (3H, singlet);
1.39 (1H, doublet, J = 14.6 Hz);
1.57 (1H, doublet, J = 14.6 Hz);
4.29 (1H, doublet, J = 13.0 Hz);
4.30 (1H, doublet, J = 13.0 Hz);
6.90 (2H, doublet of doublets, J = 8.70 & 8.70 Hz);
7.17 - 7.35 (7H, multiplet);
7.73 (1H, singlet);
7.84 (1H, singlet).
Mass spectrum (m/e): 355, 340, 273, 196, 137.

PREPARATION 37

3-[(4-Chlorophenyl)dimethylsilyl]-2-(4-fluorophenyl)-1-(1H-1,2,4-triazol-1-yl)-2-propanol (Compound No. 69)

93 mg - Yield 11%.
Title compound obtained as an amorphous solid.

Nuclear Magnetic Resonance Spectrum ($CDC\ell_3$) δ ppm:
0.02 (3H, singlet);
0.16 (3H, singlet);
1.38 (1H, doublet, J = 4.6 Hz);
1.53 (1H, doublet, J = 4.6 Hz);
4.31 (2H, singlet);
6.90 (2H, doublet of doublets, J = 8.7 & 8.7 Hz);
7.20 (2H, doublet of doublets, J = 8.7 & 5.3 Hz);
7.25 (4H, singlet);
7.72 (1H, singlet);
7.87 (1H, singlet).
Mass spectrum (m/e): 389, 374, 307, 276, 195.

PREPARATION 38

3-Dimethylethylsilyl-2-(4-fluorophenyl)-1-(1H-1,2,4-triazol-1-yl)-2-propanol (Compound No. 70)

71 mg - Yield 29%.

Melting at 74 - 76.5°C.
Nuclear Magnetic Resonance Spectrum ($CDC\ell_3$) δ ppm:
-0.26 (3H, singlet);
-0.19 (3H, singlet);
0.32 (1H, quartet, J = 7.8 Hz);
0.30 (1H, quartet, J = 7.8 Hz);
0.79 (3H, triplet, J = 7.8 Hz);
1.14 (1H, doublet, J = 4.6 Hz);
1.31 (1H, doublet, J = 4.6 Hz);
4.20 (1H, singlet);
4.35 (2H, singlet);
6.97 (2H, doublet of doublets, J = 8.8 & 8.8 Hz);
7.30 (2H, doublet of doublets, J = 8.8 & 5.1 Hz);
7.73 (1H, singlet);
7.88 (1H, singlet).
Mass spectrum (m/e): 292, 276, 225.

PREPARATION 39

2-(4-Fluorophenyl)-1-(1H-1,2,4-triazol-1-yl)-3-trimethylsilyl-2-propanol (Compound No. 3)

0.237 g (6.18 mmole) of a 60% w/v dispersion of sodium hydride in mineral oil was added to 10 ml of dimethylacetamide. The mixture was then cooled in an ice-water bath, after which 0.854 g (12.37 mmole) of 1,2,4-triazole was added, whilst stirring. The reaction mixture was stirred for 30 minutes, and then 1.4 g (6.24 mmole) of 2-(4-fluorophenyl)-2-trimethylsilylmethyloxirane (prepared as described in Preparation 42) were added. The mixture was stirred for a further 2 hours at 80°C, after which it was cooled, and the mixture was poured into 50 ml of ice water and extracted with 100 ml of ethyl acetate. The organic extract was washed twice, each time with 50 ml of a saturated aqueous solution of sodium chloride, and then dried over anhydrous sodium sulphate. The solvent was then removed by distillation under reduced pressure, to obtain crude crystals. These crystals were recrystallised from diisopropyl ether, to give 1.01 g (yield 55%) of the title compound, as crystals, melting at 118 - 119°C.

PREPARATION 40

The calcium salt of 3-hydroxy-5-methylisoxazole dihydrate Compound (IIa1)

5.7 Litres of water, 0.57 kg of calcium hydroxide and 1.4 kg of 3-hydroxy-5-methylisoxazole were combined in a 10 litre glass flask and heated to 80°C to form a solution. The resulting solution was then filtered while warm and the filtrate was cooled to 0°C. Crystals were allowed to settle out of solution and were collected by filtration. The crystals were dried for 2 hours at 55°C and 1.0 kg of raw white crystals was obtained. Recrystallisation of the crystals from water followed by drying for 2 hours at 55°C afforded white crystals of the target compound which melted at 280°C with decomposition.

The identity of the title compound was confirmed by the following analyses:

| Elemental analysis for $C_8H_8N_2O_4Ca.4H_2O$ | | | |
|---|---|---|---|
| Calculated (%) | C: 31.17; | H: 5.23; | N: 9.09. |
| Found (%) | C: 31.09; | H: 5.24; | N: 9.07. |

Infrared Absorption Spectrum (KBr) $\nu_{max}$ $cm^{-1}$:
3377(s), 3220(w), 1650(w), 1626(s), 1510(s), 1410(s), 1255(s), 1150(s), 1025(s), 900(s),

wherein the letters in parentheses are abbreviations for strong (s) and weak (w) respectively.

Nuclear Magnetic Resonance Spectrum ($D_2O$) δ ppm:
2.11 (3H, doublet, J=0.8 Hz);
5.36 (1H, quartet, J=0.8 Hz).
Mass spectrum m/e; 276 ($M^+$), 260, 193

Analysis of the water content of the title compound was performed by the Karl-Fischer method:

| Calculated for $C_8H_8N_2O_4Ca.4H_2O$ | |
|---|---|
| Calculated (%) | 23.37 |
| Found (%) | 23.62 |

PREPARATION 41

1-Chloro-2-(4-fluorophenyl)-3-trimethylsilyl-2-propanol

8.63 g (0.05 mole) of 2-chloro-4'-fluoroacetophenone were dissolved in 60 ml of diethyl ether. The solution was stirred under a stream of nitrogen, and 200 ml (0.057 mole) of a diethyl ether solution of trimethylsilylmethylmagnesium chloride were added dropwise at such a rate that the temperature of the reaction mixture did not rise above 15°C - 20°C. The reaction mixture was then stirred for a further 1 hour at room temperature, after which it was poured into 200 ml of ice water, and its pH was adjusted to a value of 6 - 7 by the addition of 5% w/v aqueous hydrochloric acid. It was then extracted with 100 ml of ethyl acetate. The organic extract was washed twice, each time with 50 ml of a saturated aqueous solution of sodium chloride. It was then dried over anhydrous sodium sulphate, and the solvent was removed by distillation under reduced pressure, to afford a crude oily product. This crude oily product was purified by silica gel column chromatography, using mixtures of ethyl acetate and hexane ranging from 1 : 10 to 1 : 5 by volume, to give 8.8 g (yield 67.7%) of the title compound as an oily substance.

| Elemental analysis: | | | | |
|---|---|---|---|---|
| Calculated for $C_{12}H_{18}C\ell FOSi$: | C, 55.26%; | H, 6.96%; | Cℓ, 13.59%; | F, 7.26%. |
| Found: | C, 55.02%; | H, 6.96%; | Cℓ, 13.58%; | F, 7.43%. |

Nuclear Magnetic Resonance Spectrum ($CDC\ell_3$) δ ppm:
-0.18 (9H, singlet);
1.23 (1H, doublet, J = 14.7 Hz);
1.45 (1H, doublet, J = 14.7 Hz);
3.70 (1H, doublet, J = 11.0 Hz);
3.80 (1H, doublet, J = 11.0 Hz);
6.99 - 7.09 (2H, multiplet);
7.35 - 7.43 (2H, multiplet).

PREPARATION 42

2-(4-Fluorophenyl)-2-trimethylsilylmethyloxirane

1.068 g (6.2 mmole) of 2-chloro-4'-fluoroacetophenone were dissolved in 20 ml of diethyl ether, and the ethereal solution was stirred under a stream of nitrogen, whilst 7.5 ml of an ethereal solution containing 7.4 mmole of trimethylsilylmethylmagnesium chloride was added dropwise at such a rate that the temperature of the reaction mixture did not exceed -10°C to -5°C. The reaction mixture was then stirred for a further 15 minutes whilst being kept within this temperature range. At the end of this time, 3.5 ml of dimethylformamide were added dropwise to the reaction solution at such a rate that the temperature of the reaction mixture did not exceed -10°C to -5°C. The reaction mixture was then stirred for a further 10 minutes and, whilst it was being kept within this temperature range, 6 ml of hexane and then 6 ml of water were added. The reaction mixture was then stirred for 5 minutes, after which it was poured into 10 ml of water and extracted with 100 ml of hexane. The organic extract was washed with 50 ml of a saturated aqueous solution of sodium chloride and dried over anhydrous sodium sulphate. The solvent was then removed by distillation under reduced pressure, to give 1.39 g (yield 100%) of the title compound, as an oily substance.

Nuclear Magnetic Resonance Spectrum ($CDC\ell_3$), δ ppm:
-0.082 (9H, singlet);
1.31 (1H, doublet, J = 14.7 Hz);
1.44 (1H, doublet, J = 14.7 Hz);
2.78 (1H, doublet, J = 5.3 Hz);
2.90 (1H, doublet, J = 5.3 Hz);
6.96 - 7.05 (2H, multiplet);
7.32 - 7.39 (2H, multiplet).
Mass spectrum (m/e): 224, 209, 195, 135.

In the following Biological Examples, comparative formulations lacking one or more ingredients (by comparison with the test formulations) were prepared by simple ommission of the relevant ingredient(s) from the cited formulation Example, unless otherwise specified.

BIOLOGICAL EXAMPLE 1

Activity of Dust Formulations of the Invention against Cucumber Damping-off and Tomato Fusarium Wilt

Soil-borne plant pathogens:
Fusarium oxysporum f. sp. cucumerinum (cucumber);
Fusarium oxysporum f. sp. lycopersici (tomato);
Pythium aphanidermatum; and
Rhizoctonia solani,
were each cultured for 2 weeks at 28°C on an oat grain medium. Samples of each cultured pathogen were then uniformly mixed with soil samples to provide cultivation substrates. A dust formulation according to the present invention was then mixed with the test substrates in a uniform fashion. Seeds either of cucumber (variety: Sagami-hanjiro) or tomato (variety: Shinfukuju) were then sown onto the substrates straight after mixing.

Induced damage was determined after 3 and 5 weeks by calculating the number of diseased plants in every plot. Disease control (control value) was calculated according to the following equation:

$$\text{Control value} = \frac{\text{No. diseased crops in untreated plot - No. diseased crops in treated plot}}{\text{No. diseased crops in untreated plot}}$$

The dust formulation prepared in Example 1 was tested and compared with the dust formulations prepared in Comparative Examples 1 and 2.

In addition to Fusarium wilt, powdery mildew was also observed in the cucumber tests. Accordingly, the disease area (sporulation) was also examined. Tables 2, 3 and 4 show the results.
In Tables 2 to 20 that follow, the following abbreviations and conventions are used:

| | |
|---|---|
| Cpd - | compound; |
| TPN - | tetrachloroisophthalonitrile; |
| ThMe - | thiophanate-methyl; |
| MBC - | methyl 2-benzimidazolecarbamate |
| TBZ - | 2-(4-thiazolyl)benzimidazole |
| Polyoxin AL - | polyoxin complex |
| Thiram - | bis(dimethylthiocarbamoyl) disulphide |
| Podigrol - | (or pyrifenox) is 2,4-dichloro-2-(3-pyridyl)acetophenone (EZ)-methyloxime |
| Propiconazole - | 1-{[2-(2,4-dichlorophenyl)-4-propyl-1,3-dioxolan-2-yl]methyl}-1H-1,2,4-triazole |
| a.i. - | active ingredient |
| "g a.i./10a" = | grams of active ingredient/10 ares |
| "g/10 a" = | grams/ 10 ares. |

Where they occur, values in parentheses show the degree of disease (%) observed in the untreated plots, unless otherwise specified.

Table 2

| Effect against Fusarium: Cucumber: 90 seeds per plot in average of 2 plots: | | | | |
|---|---|---|---|---|
| Test cpd; g a.i./10a | | Fusarium disease Control value | | Powdery mildew (disease area, %) |
| Cpd (I) | Cpd (II) | After 3 weeks | After 5 weeks | After 5 weeks |
| 100 | 1000 | 100 | 100 | 0 |
| 50 | 500 | 100 | 90 | 0 |
| 200 | - | 62 | 45 | 0 |
| 100 | - | 33 | 25 | 0 |
| 50 | - | 28 | 10 | 15 |
| - | 2000 | 90 | 45 | 100 |
| - | 1000 | 85 | 38 | 100 |
| - | 500 | 40 | 10 | 100 |
| Untreated | | 0 | 0 | 100 |

Table 3

| Effect against Fusarium: Tomato: 90 seeds per plot in average of 2 plots: | | | |
|---|---|---|---|
| Test cpd; g a.i./10a | | Fusarium disease (Control value) | |
| Cpd (I) | Cpd (II) | After 3 weeks | After 5 weeks |
| 100 | 1000 | 100 | 100 |
| 50 | 500 | 100 | 95 |
| 200 | - | 75 | 51 |
| 100 | - | 44 | 40 |
| 50 | - | 39 | 15 |
| - | 2000 | 95 | 40 |
| - | 1000 | 88 | 30 |
| - | 500 | 50 | 5 |
| | Untreated | 0 | 0 |

Table 4

| Effect against Rhizoctonia and Pythium: Cucumber Average of 2 plots, 90 seeds per plot | | | | | |
|---|---|---|---|---|---|
| Test cpd; g a.i./10 | | Control value | | | |
| Cpd (I) | Cpd (II) | Rhizoctonia damping-off | | Pythium damping-off | |
| | | After 3 weeks | After 5 weeks | After 3 weeks | After 5 weeks |
| 100 | 1000 | 100 | 98 | 95 | 95 |
| 50 | 500 | 98 | 90 | 96 | 90 |
| 200 | - | 85 | 55 | 0 | 0 |
| 100 | - | 75 | 60 | 0 | 0 |
| 50 | - | 60 | 45 | 0 | 0 |
| - | 2000 | 65 | 40 | 100 | 80 |
| - | 1000 | 30 | 25 | 95 | 73 |
| - | 500 | 25 | 15 | 90 | 50 |
| Untreated | | 0 | 0 | 0 | 0 |

## BIOLOGICAL EXAMPLE 2

### Activity against Sugar beet damping-off Wettable powder Formulation

Aphanomyces cochlioides and Rhizoctonia solani mycelia were obtained by culture in corn meal agar medium with added cholesterol. The mycelia were then fragmented using a blender and separately inoculated into sterilised soil. The samples of inoculated soil were packed into plastic pots, each of 30 x 40 cm in surface area and 20 cm in depth.

The wettable powder formulations of Example 3 and Comparative Examples 3 and 4 were applied to sugar beet (variety: Monomidori) seeds which were then sown at a rate of 60 seeds a pot, three pots per treatment. After culture for 6 weeks in a glass house, the percentage of healthy seedlings was calculated. Table 5 shows the result as the mean value per 3 pots.

Table 5

| Test cpd (g a.i./seed wt) | | Healthy plants (%) | |
|---|---|---|---|
| Cpd (I) | Cpd (II) | Aphanomyces damping-off | Rhizoctonia damping-off |
| 0.01 | 0.05 | 88.9 | 90.0 |
| 0.03 | 0.15 | 97.2 | 95.6 |
| 0.10 | 0.5 | 100.0 | 100.0 |
| 0.01 | - | 0.0 | 45.6 |
| 0.03 | - | 0.0 | 50.6 |
| 0.10 | - | 2.8 | 83.3 |
| - | 0.05 | 61.7 | 6.7 |
| - | 0.15 | 72.2 | 22.7 |
| - | 0.5 | 86.7 | 45.6 |
| | Untreated | 0.0 | 0.0 |
| No phytotoxicity was observed in any of the plots. | | | |

BIOLOGICAL EXAMPLE 3

Rice Sheath Blight

A paddy field of mechanically transplanted rice plants (variety: Kinmaze) was divided into sufficient test plots of 30 $m^2$ to provide three test plots for each formulation to be tested. The plants were cultivated by conventional means. Sheath blight pathogen (Rhizoctonia solani) was cultured on wheat bran rice husk medium and scattered evenly on the paddy field. When sheath blight had become evident on the plants, granular formulations (prepared by a procedure similar to that described in Example 7 or Example 27) as defined in Tables 6 and 7 were applied to the water surface. 50 days after treatment, lesion height was measured in 50 plants per plot, and the efficacy of the treatment (preventive value) was calculated from the equation below.

$$\text{Preventive value (\%)} = (X - Y) / 100X$$

X: The mean lesion height in the untreated plot (cm)
Y: The mean lesion height in the treated plot (cm)

The results are shown in Tables 6 and 7.

Table 6

| Test compound | Formulation (granule) | Amount active ingredient applied (g/10 a) | Preventive value (%) |
|---|---|---|---|
| Compound Ia | 0.5% | 20 | 57 |
| Compound Ib | 0.5% | 20 | 43 |
| Compound Id | 0.5% | 20 | 46 |
| Compound Ie | 0.5% | 20 | 41 |
| Compound IIa | 2.5% | 80 | 0 |
| Compound IIe | 1.5% | 80 | 0 |
| Compounds Ia + IIa | 0.5% + 2.0% | 20 + 80 | 98 |
| Compounds Ia + IIe | 0.5% + 2.0% | 20 + 80 | 97 |
| Compounds Ib + IIa | 0.5% + 2.0% | 20 + 80 | 89 |
| Compounds Ib + IIe | 0.5% + 2.0% | 20 + 80 | 90 |
| Compounds Id + IIa | 0.5% + 2.0% | 20 + 80 | 88 |
| Compounds Id + IIe | 0.5% + 2.0% | 20 + 80 | 90 |
| Compounds Ie + IIa | 0.5% + 2.0% | 20 + 80 | 87 |
| Compounds Ie + IIe | 0.5% + 2.0% | 20 + 80 | 91 |
| Untreated | - | - | 0 |
| No phytotoxicity was observed in any of these plots. | | | |

Table 7

| Test plot | Agrochemical | Amount of the active ingredients applied (g/10 a) | Control value (%) |
|---|---|---|---|
| Plot treated with Compounds of Invention | Benomyl + Cpd 3 | 80 + 40 | 99 |
| | | 40 + 20 | 96 |
| | MBC + Cpd 3 | 80 + 40 | 98 |
| | | 40 + 20 | 95 |
| | ThMe + Cpd 3 | 80 + 40 | 98 |
| | | 40 + 20 | 96 |
| Plot sprayed with only one compound | Benomyl | 80 | 48 |
| | | 40 | 21 |
| | MBC | 80 | 41 |
| | | 40 | 15 |
| | ThMe | 80 | 43 |
| | | 40 | 11 |
| | Cpd 3 | 40 | 75 |
| | | 20 | 49 |
| Untreated plot | | --- | 0 (49.6)* |
| No phytotoxicity was observed in any plot. | | | |

* The mean lesion height, in cm, in the untreated plot

BIOLOGICAL EXAMPLE 4

Rice Sheath Blight

A paddy field of mechanically transplanted rice plants (variety: Kinmaze) was divided into sufficient test plots of 100 $m^2$ to provide two plots for each formulation to be tested. The plants were cultivated by conventional means. Sheath blight pathogen (Rhizoctonia solani) was cultured on wheat bran rice husk medium and scattered evenly on the paddy field. When sheath blight had become evident on the plants, pack formulations (prepared by a procedure similar to that described in Example 17) as defined in Table 8 were applied to the water surface at a rate of one pack per plot. 50 days after treatment, lesion height was measured in 100 plants per plot, and the efficacy of the treatment (preventive value) was calculated according to the equation given in Biological Example 3.

Table 8

| Control of Rice Sheath Blight Pack Formulation | | | |
|---|---|---|---|
| Test compound | Formulation (Pack) | Amount active ingredient applied (g/10 a) | Preventive value (%) |
| Compound Ia | 5.0% | 25 | 60 |
| Compound Ic | 5.0% | 25 | 47 |
| Compound Id | 5.0% | 25 | 51 |
| Compound IIa | 10.0% | 50 | 0 |
| Compound IIe | 10.0% | 50 | 0 |
| Compounds Ia + IIa | 5.0% + 10.0% | 25 + 50 | 93 |
| Compounds Ia + IIe | 5.0% + 10.0% | 25 + 50 | 91 |
| Compounds Ic + IIa | 5.0% + 10.0% | 25 + 50 | 87 |
| Compounds Ic + IIe | 5.0% + 10.0% | 25 + 50 | 88 |
| Compounds Id + IIa | 5.0% + 10.0% | 25 + 50 | 86 |
| Compounds Id + IIe | 5.0% + 10.0% | 25 + 50 | 88 |
| Untreated | - | - | 0 |
| No phytotoxicity was observed in any of these plots. | | | |

BIOLOGICAL EXAMPLE 5

Effect against Rice Blast

A paddy field of mechanically transplanted rice plants (variety: Koshihikari) was divided into sufficient test plots of 30 $m^2$ to provide three plots per formulation to be tested. The plants were cultivated by conventional means. Leaves infected with the rice blast pathogen Pyricularia oryzae were scattered evenly over the test plots to cause rice blast. Seven days later, granular formulations (prepared by a procedure similar to that described in Example 7) as defined in Table 9 below were applied to the water surface. 28 Days after treatment, the degree of blast formation according to the criteria shown below was established, and the efficacy of the treatment (preventive value) was calculated from the equation below.

Rice blast indices of the leaves

- 0 healthy
- 1 1 to 3 lesions per leaf
- 2 4 to 10 lesions per leaf
- 3 more than 10 lesions per leaf

$$\text{Degree of rice blast} = 100 \times [(1 \times n^1) + (2 \times n^2) + (3 \times n^3)] / (3 \times N)$$

N: The number of leaves examined

$n^1$, $n^2$ and $n^3$: The number of leaves showing a blast index of 1, 2 and 3, respectively

$$\text{Preventive value (\%)} = \text{(degree of rice blast in untreated plot - degree of rice blast in treated plot) / (degree of rice blast in untreated plot)} \times 100$$

Table 9 shows the results obtained.

Table 9

| Effect against Rice Blast Granule Formulation | | | |
|---|---|---|---|
| Test compound | Formulation (granule) | Amount active ingredient applied (g/10 a) | Preventive value (%) |
| Compound Ia | 0.5% | 20 | 49 |
| Compound Ib | 0.5% | 20 | 38 |
| Compound IIa | 2.5% | 100 | 5 |
| Compound IIb | 2.5% | 100 | 0 |
| Compound IIc | 2.5% | 100 | 5 |
| Compound IIe | 2.5% | 100 | 10 |
| Compound IIi | 2.5% | 100 | 0 |
| Compounds Ia + IIa | 0.5% + 2.5% | 20 + 100 | 89 |
| Compounds Ia + IIb | 0.5% + 2.5% | 20 + 100 | 88 |
| Compounds Ia + IIc | 0.5% + 2.5% | 20 + 100 | 87 |
| Compounds Ia + IIe | 0.5% + 2.5% | 20 + 100 | 91 |
| Compounds Id + IIi | 0.5% + 2.5% | 20 + 100 | 86 |
| Compounds Ib + IIa | 0.5% + 2.5% | 20 + 100 | 86 |
| Compounds Ib + IIb | 0.5% + 2.5% | 20 + 100 | 84 |
| Compounds Ib + IIc | 0.5% + 2.5% | 20 + 100 | 81 |
| Compounds Ib + IIe | 0.5% + 2.5% | 20 + 100 | 89 |
| Compounds Ib + IIi | 0.5% + 2.5% | 20 + 100 | 82 |
| Untreated | - | - | 0 |
| No phytotoxicity was observed in any of these plots. | | | |

BIOLOGICAL EXAMPLE 6

Effect against Rice Blast

A paddy field of mechanically transplanted rice plants (variety: Koshihikari) was divided into sufficient test plots of 100 $m^2$ to provide two test plots per formulation to be tested. The plants were cultivated by conventional means. Leaves infected with the rice blast pathogen Pyricularia oryzae were scattered evenly over the test plots to cause rice blast. Seven days later, pack formulations (prepared by a procedure similar to that described in Example 18) as defined in Table 10 below were applied to the water surface at the rate of one pack per plot. 28 Days after treatment, the degree of blast formation according to the criteria defined in Biological Example 5 was established, and the efficacy of the treatment (preventive value) was calculated from the equation defined in Biological Example 5.

Results are shown in Table 10.

Table 10

| Effect against Rice Blast Pack Formulation | | | |
|---|---|---|---|
| Test compound | Formulation (Pack) | Amount active ingredient applied (g/10 a) | Preventive value (%) |
| Compound Ia | 5% | 25 | 38 |
| Compound Ib | 5% | 25 | 29 |
| Compound IIa | 20% | 10 | 8 |
| Compound IIe | 20% | 100 | 8 |
| Compounds Ia + IIa | 5% + 20% | 25 + 100 | 86 |
| Compounds Ia + IIe | 5% + 20% | 25 + 100 | 89 |
| Compounds Ib + IIa | 5% + 20% | 25 + 100 | 81 |
| Compounds Ib + IIe | 5% + 20% | 25 + 100 | 81 |
| Untreated | - | - | 0 |
| No phytotoxicity was observed in any of the plots. | | | |

BIOLOGICAL EXAMPLE 7

Effect against Rice Blast

A paddy field of mechanically transplanted rice plants (variety: Koshihikari) was divided into sufficient test plots of 20 $m^2$ to provide three plots per formulation to be tested. The plants were cultivated by conventional means. Leaves infected with the rice blast pathogen Pyricularia oryzae were scattered evenly over the test plots to cause rice blast. Seven days later, dust formulations (prepared by a procedure similar to that described in Example 11) as defined in Table 11 below were applied evenly to the plants by spraying the leaves. 28 Days after treatment, the degree of blast formation according to the criteria defined in Biological Example 5 was established using 50 plants per plot, and the efficacy of the treatment (preventive value) was calculated from the equation defined in Biological Example 5.

Results are shown in Table 11.

Table 11

| Effect against Rice Blast Dust Formulation | | | |
|---|---|---|---|
| Test compound | Formulation (Dust) | Amount active ingredient applied (g/10 a) | Preventive value (%) |
| Compound Ia | 0.1% | 4 | 31 |
| Compound IIa | 1.0% | 40 | 27 |
| Compound IIb | 1.0% | 40 | 27 |
| Compound IIc | 0.5% | 20 | 15 |
| Compound IId | 1.0% | 40 | 14 |
| Compound IIf | 1.0% | 40 | 35 |
| Compound IIg | 1.0% | 40 | 15 |
| Compound IIh | 1.0% | 40 | 19 |
| Compound IIi | 0.5% | 20 | 17 |
| Compounds Ia + IIa | 0.1% + 1.0% | 4 + 40 | 81 |
| Compounds Ia + IIb | 0.1% + 1.0% | 4 + 40 | 80 |
| Compounds Ia + IIc | 0.1% + 0.5% | 4 + 20 | 71 |
| Compounds Ia + IId | 0.1% + 1.0% | 4 + 40 | 82 |
| Compounds Ia + IIf | 0.1% + 1.0% | 4 + 40 | 88 |
| Compounds Ia + IIg | 0.1% + 1.0% | 4 + 40 | 79 |
| Compounds Ia + IIh | 0.1% + 1.0% | 4 + 40 | 77 |
| Compounds Ia + IIi | 0.1% + 0.5% | 4 + 20 | 72 |
| Untreated | - | - | 0 |
| No phytotoxicity was observed in any of these plots. | | | |

BIOLOGICAL EXAMPLE 8

Effect against Sugar Beet Damping-off

Cultured mycelia of the sugar beet damping-off pathogens Aphanomyces cochlioides, Phoma betae and Fusarium sp. were obtained by culture in corn meal agar medium with added cholesterol, and fragmented using a blender. The resulting fragmented preparations were mixed and inoculated onto sterilised soil which was then packed into plastic pots, each measuring 30 x 40 cm in surface area and 20 cm in depth.

Wettable powder formulations (prepared by a procedure similar to that described in Example 15) were applied to sugar beet seeds (variety: Monomidori) by coating the seeds with 5 parts of a 2% aqueous solution of gum arabic per 100 parts of seeds, coating the seeds with wettable powder, and then sowing the seeds at a rate of 100 seeds per pot, two pots per formulation to be tested. Each pot was cultivated for 6 weeks in a glass house at 25°C, after which the percentage of healthy seedlings was calculated.

The results are shown in Table 12.

Table 12

| Test compound | Formulation (wettable powder) | Amount active ingredient applied (%/seed weight) | Diseased plants (%) |
|---|---|---|---|
| Compound Ia | 10% | 0.01 | 98 |
| Compound Ia | 10% | 0.03 | 82 |
| Compound IIa | 50% | 0.05 | 93 |
| Compound IIa | 50% | 0.15 | 82 |
| Compound IIe | 50% | 0.05 | 95 |
| Compound IIe | 50% | 0.15 | 80 |
| Compounds Ia + IIa | 10% + 50% | 0.01 + 0.05 | 11 |
| Compounds Ia + IIe | 10% + 50% | 0.01 + 0.05 | 10 |
| Compounds Ia + IIa | 10% + 50% | 0.03 + 0.15 | 3 |
| Compounds Ia + IIe | 10% + 50% | 0.03 + 0.15 | 1 |
| Untreated | - | - | 100 |
| No phytotoxicity was observed in any of these plots. | | | |

BIOLOGICAL EXAMPLE 9

Effect against Rice Bacterial Grain Rot

Preparations of unhulled rice seeds infected with Pseudomonas glumae were soaked for 24 hours in dilute solutions of the wettable powder formulations (prepared by a procedure similar to that described in Example 15), and then sown in plastic pots packed with seed compost. The pots were cultivated at 30°C for 3 days in a seedling cabinet, and then the resulting rice plants were cultivated for 14 days in a glass house. After this time, the degree of infection was calculated. Disease incidence was calculated from the equation below.

Disease incidence = (% of diseased seedlings in treated pots) / (% of diseased seedlings in untreated pots) x 100

The results are shown in Table 13.

Table 13

| Effect against Rice Bacterial Grain Rot | | | |
|---|---|---|---|
| Test compound | Formulation (wettable powder) | Amount active ingredient applied (% ai/seed weight) | Diseased seedlings (%) |
| Compound Ia | 10% | 0.01 | 100 |
| Compound Ia | 10% | 0.03 | 100 |
| Compound Ib | 10% | 0.01 | 100 |
| Compound Ib | 10% | 0.03 | 100 |
| Compound IIe | 50% | 0.05 | 48 |
| Compound IIe | 50% | 0.15 | 59 |
| Compounds Ia + IIe | 10% + 50% | 0.01 + 0.05 | 19 |
| Compounds Ia + IIf | 10% + 50% | 0.01 + 0.05 | 8 |
| Compounds Ia + IIe | 10% + 50% | 0.03 + 0.15 | 8 |
| Compounds Ia + IIf | 10% + 50% | 0.03 + 0.15 | 3 |
| Untreated | - | - | 100 |
| No phytotoxicity was observed in any of these plots. | | | |

BIOLOGICAL EXAMPLE 10

Effect against Anthracnose in Cyclamen Seedlings

Cyclamen seedlings (variety: Schubert) were individually raised in 15 cm diameter pots in a greenhouse, until they first developed flower buds. Fluid formulations (prepared by a procedure similar to that described in Example 26) were diluted to specific concentrations, and 150 ml of each dilution were administered to plots each having three seedlings (i.e. three pots) on a rotating table using a hand spraying device. Preventive spraying was performed one day before infection with conidia of Colletoricum sp., while therapeutic spraying was performed five days after infection. The conidia of Colletoricum sp. were obtained by isolation from infected plants and were prepared by culture on PSA (potato sucrose agar) medium and suspension in distilled water. 10 ml of the resulting suspension was then administered direct to the whole body of each plant. After inoculation with the conidial suspension, the plants were protected with vinyl sheeting every night, in order to promote fungal growth. Twelve days after inoculation, the occurrence of disease was determined by the examination of 15 leaves from each plant, and the disease severity calculated according to the criteria set out below. The degree of disease which had been induced was calculated using the formula below. By comparing data from the treated plots with data from untreated plots, the % efficacy (control value) of the compositions of the invention could be established (equation below).

Disease severity index (disease rating)

0: No disease is induced
1: Disease is induced in a leaf area of less than 10%
2: Disease is induced in a leaf area of from 10% to less than 25%
3: Disease is induced in a leaf area of from 25% to less than 50%
4: Disease is induced in a leaf area of from 50% to less than 75%
5: Disease is induced in a leaf area of not less than 75%

Disease severity (%) = [(disease severity index x no. leaves) / (4 x total number of the leaves examined)] x 100

Control value (%) = [1 - (disease severity in treated plot / disease severity in untreated plot)] x 100

No phytotoxicity was observed in any plot.
The results are shown in Table 14.

Table 14

| Test plot | Agrochemical used | Conc'n (ppm) of agro-chemical sprayed | Control value (%) | |
|---|---|---|---|---|
| | | | Preventive | Therapeutic |
| Plot sprayed with Compounds of Invention | Benomyl + Cpd 3 | 200 + 200 | 100 | 100 |
| | | 100 + 100 | 100 | 100 |
| | MBC + Cpd 3 | 200 + 200 | 100 | 100 |
| | | 100 + 100 | 100 | 100 |
| | TBZ + Cpd 3 | 200 + 200 | 100 | 100 |
| | | 100 + 100 | 100 | 100 |
| | ThMe + Cpd 3 | 200 + 200 | 100 | 100 |
| | | 100 + 100 | 100 | 100 |
| Plot sprayed with only one compound | Benomyl | 200 | 51 | 49 |
| | | 100 | 40 | 31 |
| | MBC | 200 | 49 | 43 |
| | | 100 | 41 | 32 |
| | TBZ | 200 | 43 | 46 |
| | | 100 | 32 | 37 |
| | ThMe | 200 | 44 | 43 |
| | | 100 | 31 | 29 |
| | Cpd 3 | 200 | 51 | 50 |
| | | 100 | 35 | 32 |
| Reference plot | TPN | 400 | 64 | 0 |
| Untreated plot | --- | --- | 0 (41.3) | 0 (45.6) |

BIOLOGICAL EXAMPLE 11

Efficacy against Cucumber Gray Mould

Cucumber seedlings (variety: Sagami-hanjiro) were planted out and cultivated by conventional means on an upland field in a vinyl plastic hot house. The seedlings were planted in rows at intervals of 30 cm, with 60 cm between rows. The tests were performed on plots of six plants, and each test was performed on three plots. Wettable powder formulations (prepared by a procedure similar to that described in Example 19) were made up to various specific concentrations by dilution with water and administered to the plants by spraying when gray mould first developed on the plants. The plants were sprayed at a rate of 250 litres per 10 ares on four occasions at intervals of 7 days, using a small shoulder-mounted sprayer.

The progress of the disease was monitored on four occasions at intervals of 7 days, once after each spraying, by cropping the fruits and counting the numbers of healthy ripe fruits and the numbers of diseased fruits. The numbers of cropped fruits in every examination were summed to provide a total number of cropped fruits, and the total number of diseased fruits was also calculated. The incidence of disease (%) was obtained by calculating the ratio of diseased fruits to the total number of harvested fruits. The % efficacy (control value) of the compositions was obtained in accordance with the formula:

Control value (%) = [1-(disease incidence in sprayed plot / disease incidence in untreated plot)] x 100

No phytotoxicity was observed in any of the plots.
The results are shown in Table 15.

Table 15

| Test plot | Agrochemical | Conc. of agrochemical sprayed (ppm) | Control value (%) |
|---|---|---|---|
| Plot sprayed with Compounds of Invention | Benomyl + Cpd 3 | 100 + 100 | 100 |
| | | 50 + 50 | 99 |
| | MBC + Cpd 3 | 100 + 100 | 100 |
| | | 50 + 50 | 100 |
| | TBZ + Cpd 3 | 100 + 100 | 100 |
| | | 50 + 50 | 98 |
| | ThMe + Cpd 3 | 100 + 100 | 100 |
| | | 50 + 50 | 98 |
| Plot sprayed with only one compound | Benomyl | 100 | 43 |
| | | 50 | 29 |
| | MBC | 100 | 41 |
| | | 50 | 28 |
| | TBZ | 100 | 41 |
| | | 50 | 31 |
| | ThMe | 100 | 39 |
| | | 50 | 28 |
| | Cpd 3 | 100 | 32 |
| | | 50 | 25 |
| Reference plot | Polyoxin AL | 100 | 59 |
| Untreated plot | --- | --- | 0 |

From the above Table, we calculated the ratio of benomyl-sensitive and benomyl-resistant strains of cucumber gray mould observed in the test field, and found the result to be 6 : 4.

BIOLOGICAL EXAMPLE 12

Efficacy against Sugar Beet Cercospora Leaf Spot

Test plots of 5 $m^2$ were established in a field, each plot containing 10 sugar beet plants (variety: Monohiru) at the 6-leaf stage. Each test (see Table 16) was performed on three plots.

Leaves infected with Cercospora leaf spot mould were taken from a field which had been continuously treated with benzimidazole. The infected leaves were cut up and scattered over the whole area of the test field. Fifteen days later, and twice subsequently at intervals of 14 days, the plots were treated with pre-determined aqueous dilutions of wettable powder or fluid formulations (prepared in a manner similar to that described in Example 19 or Example 35). Twenty days after the final application, the degree of infection by Cercospora was determined. The degree of leaf spot infection was rated in accordance with the following index, and the % degree of induced disease was calculated. The % efficacy (control value) for each composition tested was obtained by comparison with the degree of disease induced in the untreated

plot.

Disease index:

- 0: No disease spots
- 1: Disease spots observed in a leaf area of less than 10%
- 2: Disease spots observed in a leaf area of from 10% to less than 40%
- 3: Disease spots observed in a leaf area of from 40% to less than 70%
- 4: Disease spots observed in a leaf area of not less than 70%

Degree of induced disease (%) = [(disease index x no. of leaves infected) / (4 x total no. leaves examined)] x 100

Control value (%) = [1-(degree of disease in treated plot / degree of disease in untreated plot)] x 100

No phytotoxicity was observed in any of the plots.

The results are shown in Table 16. Where two values are provided under "Control Value", the first value applies to the granular formulations and the second applies to the fluid formulations.

Table 16

| Test field | Agro-chemical | Conc. of agrochemical sprayed (ppm) | Control value (%) |
| --- | --- | --- | --- |
| Plot sprayed with Compounds of Invention | Benomyl + Cpd 3 | 400 + 200 | 100 |
| | | 200 + 100 | 100 |
| | MBC + Cpd 3 | 400 + 200 | 100 |
| | | 200 + 100 | 100 |
| | TBZ + Cpd 3 | 400 + 200 | 100 |
| | | 200 + 100 | 100 |
| | ThMe + Cpd 3 | 400 + 200 | 100 |
| | | 200 + 100 | 100 |
| | Triadimenol + Cpd No.3 | 200 + 200 | 100 |
| | | 100 + 100 | 100 |
| | Prochloraz + Cpd No.3 | 200 + 200 | 100 |
| | | 100 + 100 | 100 |

Table 16 (cont'd)

| Test field | Agro-chemical | Conc. of agrochemical sprayed (ppm) | Control value (%) |
|---|---|---|---|
| | Triflumizole + Cpd No.3 | 200 + 200<br>100 + 100 | 100<br>100 |
| | Fenpropimorph + Cpd No.3 | 400 + 200<br>200 + 100 | 100<br>100 |
| Plot sprayed with one compound | Benomyl | 400<br>200 | 49<br>30 |
| | MBC | 400<br>200 | 47<br>31 |
| | TBZ | 400<br>200 | 48<br>33 |
| | ThMe | 400<br>200 | 43<br>28 |
| | Cpd 3 | 200<br>100 | 47/30<br>41/13 |

Table 16 (cont'd)

| Test field | Agro-chemical | Conc. of agrochemical sprayed (ppm) | Control value (%) |
|---|---|---|---|
| | Triadimenol | 200 | 27 |
| | | 100 | 13 |
| | Prochloraz | 200 | 45 |
| | | 100 | 30 |
| | Triflumizol | 200 | 22 |
| | | 100 | 8 |
| | Fenpropimorph | 400 | 32 |
| | | 200 | 10 |
| Control plot | Triphenyltin hydroxide | 170 | 65/71 |
| Untreated plot | --- | --- | 0 (53.2/49.3) |

BIOLOGICAL EXAMPLE 13

Efficacy of pre-treatment of Rice Seeds infected with *Gibberella fujikuroi*

Rice seeds inoculated with either benomyl-resistant or benomyl-sensitive or triflumizole-resistant or triflumizole-sensitive *Gibberella fujikuroi* (the causative agent of bakanae disease) were obtained by spraying rice plants (variety:

Nihonbare) with the appropriate spore suspensions during the flowering period, and harvesting the infected grains. Gibberella fujikuroi which had been cultured in a steam-sterilised rice straw medium was used to prepare the spore suspensions, and the rice plants were sprayed on two occasions while flowering. Four types of seed infected with bakanae disease were obtained - those infected with benomyl-resistant mould, those infected with benomyl-sensitive mould, those infected with triflumizole-resistant mould and those infected with triflumizole-sensitive mould.

The infected seeds were soaked for 24 hours at 20°C in an equivalent volume of a specific dilution of an aqueous solution of the test compound(s) (as detailed in Tables 17 and 18). The test compounds were prepared by a procedure similar to that described in Example 21 or Example 28 (wettable powder formulations). After this time, the solutions of the test compounds were removed, and the seeds were soaked for a further 3 days at 20°C in 2 parts tap water to 1 part of rice seeds by volume. Germination of the seeds was then accelerated by maintaining the seeds at 30°C for 24 hours, after which time the seeds were sown on Kumiai granular culture soil which was divided into plots of 180 $cm^2$, at a rate of 5 g a plot, three plots per composition tested. The plots were subjected to germination treatment at 32°C for 2 days, and then the soil samples were transferred into a glasshouse for further cultivation.

Thirty days after sowing, the numbers of diseased seedlings (showing such symptoms of bakanae disease as unhealthy elongation or withering), and the numbers of healthy seedlings were counted, respectively, and the % rate of diseased seedlings was calculated. The total number of seedlings per plot was 350, on average. By comparing the % occurrence of disease in the treated and untreated plots, the % success rate of seed disinfection was calculated, using the equation below. The germination rate and the degree of growth were also measured.
No phytotoxicity was observed in any of the plots.

Rate of diseased seedlings (%) = (no. diseased seedlings / total no. of seedlings examined) x 100

Rate of seed disinfection (%) = [1-(rate of diseased seedlings in treated plot / rate of diseased seedlings in untreated plot)] x 100

The results are shown in Tables 17 and 18.

Table 17

| Activity against Benomyl-resistant/sensitive Bakanae Disease | | | | |
|---|---|---|---|---|
| Test plot | Agrochemical | Conc'n of active ingredient (ppm) | Control value (%) | |
| | | | Resistant | Sensitive |
| Plot sprayed with Compounds of Invention | Benomyl + Cpd 3 | 500 + 50 | 100 | 100 |
| | | 250 + 25 | 100 | 100 |
| | MBC + Cpd 3 | 500 + 50 | 100 | 100 |
| | | 250 + 25 | 100 | 100 |
| | TBZ + Cpd 3 | 500 + 50 | 100 | 100 |
| | | 250 + 25 | 100 | 100 |
| | ThMe + Cpd 3 | 500 + 50 | 100 | 100 |
| | | 250 + 25 | 100 | 100 |
| Plot sprayed with only one compound | Benomyl | 500 | 12 | 91 |
| | | 250 | 7 | 68 |
| | MBC | 500 | 11 | 89 |
| | | 250 | 5 | 61 |
| | TBZ | 500 | 19 | 88 |
| | | 250 | 11 | 58 |
| | ThMe | 500 | 16 | 79 |
| | | 250 | 7 | 53 |
| | Cpd 3 | 50 | 53 | 69 |
| | | 25 | 41 | 51 |
| Reference plot | Benomyl + Thiram | 1000 + 1000 | 63 | |
| Untreated plot | - | - | 0 (87.2) | 0 (81.3) |

Table 18

| Activity against Triflumizole-resistant/sensitive Bakanae Disease | | | | |
|---|---|---|---|---|
| Test field | Agrochemical | Conc. of agrochemical Active ingredient (ppm) | Seed disinfection rate (%) | |
| | | | Low-sensitive fungi infected rice seeds | Sensitive fungi infected rice seeds |
| Plot sprayed with Compounds of Invention | Triadimenol + Cpd No.3 | 100 + 100 | 100 | 100 |
| | | 50 + 50 | 100 | 100 |
| | Triflumizol + Cpd No.3 | 100 + 100 | 100 | 100 |
| | | 50 + 50 | 100 | 100 |
| | Prochloraz + Cpd No.3 | 100 + 100 | 100 | 100 |
| | | 50 + 50 | 100 | 100 |
| | Perflurazoate + Cpd No.3 | 100 + 100 | 100 | 100 |
| | | 50 + 50 | 100 | 100 |
| Plot sprayed with only one compound | Triadimenol | 100 | 10 | 55 |
| | | 50 | 0 | 20 |
| | Triflumizol | 100 | 15 | 88 |
| | | 50 | 3 | 73 |
| | Prochloraz | 100 | 22 | 90 |
| | | 50 | 8 | 63 |
| | Cpd No.3 | 100 | 15 | 80 |
| | | 50 | 5 | 33 |
| Reference plot | Benomyl + Thiram | 1000 + 1000 | 18 | 88 |
| Untreated plot | - | - | 0 (93.0) | 0 (95.3) |

BIOLOGICAL EXAMPLE 14

Efficacy against Powdery Mildew in Barley

Barley seedlings (variety: Sekishinriki) at the single leaf stage were treated by spraying with wettable powder compositions (prepared by a procedure similar to that described in Examples 28 or 30) which had been diluted with water to pre-determined concentrations. On the day after spraying, the seedlings were inoculated with conidia of Erysiphe graminis f. sp. hordei by dusting. The seedlings were cultivated in a glass house for 10 days at a temperature in the region of from 15°C to 20°C. At the end of this time, the first leaves were examined to establish the area covered by powdery mildew lesions. Following a similar procedure to that of Biological Example 12, the control value was calculated.

The results are shown in Table 19.

Table 19

| Test Field | Agrochemical | Concentration of agrochemical sprayed (ppm) | Control value (%) |
|---|---|---|---|
| Plot sprayed with Cpds of Invention | Propiconazole + Cpd No. 3 | 0.1 + 0.1 | 100 |
| | | 0.05 + 0.05 | 100 |
| | Podigrol + Cpd No. 3 | 0.1 + 0.1 | 100 |
| | | 0.05 + 0.05 | 100 |
| | Tridemorph + Cpd No. 3 | 10.0 + 0.1 | 100 |
| | | 5.0 + 0.05 | 100 |
| Plot sprayed with only one compound | Propiconazole | 0.1 | 55 |
| | | 0.05 | 8 |
| | Podigrol | 0.1 | 45 |
| | | 0.05 | 0 |
| | Tridemorph | 10.0 | 15 |
| | | 5.0 | 0 |
| | Cpd No. 3 | 0.1 | 40 |
| | | 0.05 | 3 |
| Untreated plot | | -- | (85.0) |

BIOLOGICAL EXAMPLE 15

Efficacy against Sugar Beet Damping-off

Aphanomyces cochlioides mycelia were obtained by culture on corn meal agar medium supplemented with cholesterol. Rhizoctonia solani mycelia were obtained by culture on oat grain medium supplemented with cholesterol. The mycelia were prepared by fragmentation in a blender and were used to inoculate sterilised soil in experimental plots each having an area of 10 $m^2$.

Sugar beet seeds (variety: Monomidori) were coated with an aqueous solution of 2% gum arabic and then with a wettable powder formulation (prepared by a procedure similar to that described in Examples 36 or 37, or Comparative Examples 7 to 15). The coated seeds were sown in the inoculated soil and cultivated for 6 weeks. Each formulation was tested on three plots. After this time, the % occurrence of healthy seedlings was determined.

The results are shown in Table 20.

Table 20

| Test Formulation (%) | (% compound/seed weight) | | | | Healthy seedling rate | |
|---|---|---|---|---|---|---|
| | (I) | (IIa1) | (IIIa) | (IIIb) | Damping-off | |
| | | | | | Aph. | Rhiz. |
| Example 36 | 0.1 | 0.05 | 0.005 | - | 100.0 | 100.0 |
| | 0.005 | 0.025 | 0.0025 | - | 100.0 | 100.0 |
| Example 37 | 0.01 | 0.05 | - | 0.001 | 100.0 | 100.0 |
| | 0.005 | 0.025 | - | 0.0005 | 100.0 | 100.0 |
| Comparative Example 7 | 0.01 | - | - | - | 0.0 | 15.0 |
| | 0.005 | - | - | - | 0.0 | 3.3 |
| Comparative Example 8 | - | 0.05 | - | - | 35.0 | 12.0 |
| | - | 0.025 | - | - | 8.0 | 0.0 |
| Comparative Example 9 | - | - | 0.005 | - | 0.0 | 0.0 |
| | - | - | 0.0025 | - | 0.0 | 0.0 |
| Comparative Example 10 | - | - | - | 0.001 | 2.1 | 0.0 |
| | - | - | - | 0.0005 | 0.0 | 0.0 |
| Comparative Example 11 | 0.01 | 0.05 | - | - | 75.0 | 82.0 |
| | 0.005 | 0.025 | - | - | 40.5 | 51.0 |
| Comparative Example 12 | 0.01 | - | 0.005 | - | 0.0 | 18.0 |
| | 0.005 | - | 0.0025 | - | 0.0 | 15.5 |
| Comparative Example 13 | 0.01 | - | - | 0.001 | 0.0 | 25.0 |
| | 0.005 | - | - | 0.0005 | 0.0 | 10.8 |
| Comparative Example 14 | - | 0.05 | 0.005 | - | 58.0 | 25.3 |
| | - | 0.025 | 0.0025 | - | 35.5 | 15.0 |
| Comparative Example 15 | - | 0.05 | - | 0.001 | 48.0 | 16.0 |
| | - | 0.025 | - | 0.0005 | 23.3 | 13.8 |
| | Untreated | | | | 0.0 | 0.0 |

Note:
Aph = Aphanomyces
Rhiz = Rhizoctonia
No phytotoxicity was observed in any of the plots.

## Claims

1. An agrochemical composition which comprises at least one compound of formula (I):

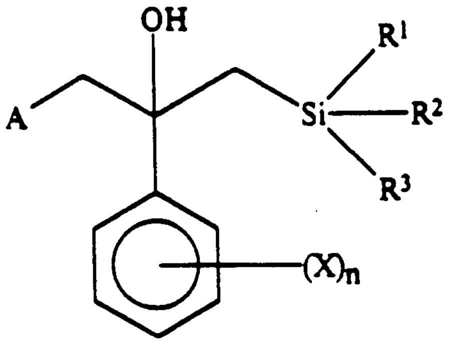

(I)

[wherein:

A represents a 1,2,4-triazol-1-yl group or an imidazol-1-yl group;

n represents 0, 1, 2 or 3, and, when n represents 2 or 3, the groups represented by X may be the same or different;

X represents a halogen atom, a phenyl group, an alkyl group having from 1 to 6 carbon atoms, a haloalkyl group having from 1 to 6 carbon atoms and having at least one halogen atom, an alkoxy group having from 1 to 6 carbon atoms, or a haloalkoxy group having from 1 to 6 carbon atoms and having at least one halogen atom, or $(X)_n$ represents an alkylenedioxy group having 1 or 2 carbon atoms;

$R^1$ represents an alkyl group having from 1 to 4 carbon atoms or a phenyl group which is unsubstituted or is substituted by at least one halogen atom; and

$R^2$ and $R^3$ are independently selected from alkyl groups having from 1 to 4 carbon atoms;

or an agrochemically acceptable salt thereof]
in admixture with or in association with at least one antimicrobial agent and/or further antifungal agent other than a compound of formula (I) or an agrochemically acceptable salt of a compound of formula (I).

2. An agrochemical composition according to Claim 1, wherein, in the compound of formula (I), A represents a 1,2,4-triazol-1-yl group.

3. An agrochemical composition according to Claim 1 or Claim 2, wherein, in the compound of formula (I), n is 0, 1 or 2.

4. An agrochemical composition according to Claim 1 or 2, wherein, in the compound of formula (I), n is 3 and X is at the 2, 4 and 6 positions on the benzene ring.

5. An agrochemical composition according to Claim 1 or Claim 2, wherein, in the compound of formula (I), n is 2 and X is at the 2 and 4 positions on the benzene ring.

6. An agrochemical composition according to Claim 1 or Claim 2, wherein, in the compound of formula (I), n is 1 and X is at the 2 or the 4 position on the benzene ring.

7. An agrochemical composition according to Claim 1, wherein, in the compound of formula (I):

A represents a 1,2,4-triazol-1-yl group;

n is 1 or 2, and X represents a fluorine atom, a chlorine atom, a bromine atom, an unsubstituted alkyl group

having from 1 to 4 carbon atoms, a substituted alkyl group which has from 1 to 4 carbon atoms and which is substituted by from 1 to 3 halogen atoms, an unsubstituted alkoxy group having from 1 to 4 carbon atoms, or a substituted alkoxy group which has from 1 to 4 carbon atoms and which is substituted by from 1 to 3 halogen atoms;
or

n is 0; and

$R^1$, $R^2$ and $R^3$ are the same or different and each represents an alkyl group having from 1 to 4 carbon atoms.

**8.** An agrochemical composition according to Claim 1, wherein, in the compound of formula (I):

A represents a 1,2,4-triazol-1-yl group;

n is 1 or 2, and X represents a fluorine atom, a chlorine atom, a bromine atom, a trifluoromethyl gorup or a methoxy group, and the substituent represented by X is at the 2-position and/or the 4-position of the benzene ring;
or

n is 0; and

$R^1$, $R^2$ and $R^3$ are the same or different and each represents a methyl group or an ethyl group.

**9.** An agrochemical composition according to Claim 1, wherein, in the compound of formula (I):

A represents a 1,2,4-triazol-1-yl group;

n is 1 or 2, and X represents a fluorine atom, a chlorine atom or a bromine atom, and the substituent represented by X is at the 2-position and/or the 4-position of the benzene ring;
or

n is 0; and

$R^1$, $R^2$ and $R^3$ are the same or different and each represents a methyl group or an ethyl group.

**10.** An agrochemical composition according to Claim 1, wherein, in the compound of formula (I):

A represents a 1,2,4-triazol-1-yl group;

n is 1 or 2, and X represents a fluorine atom, or a chlorine atom, and the substituent represented by X is at the 2-position and/or the 4-position of the benzene ring;
and

each of $R^1$, $R^2$ and $R^3$ is a methyl group.

**11.** An agrochemical composition according to Claim 1, wherein the compound of formula (I) is 2-(4-chlorophenyl)-1-(1H-1,2,4-triazol-1-yl)-3-trimethylsilyl-2-propanol or a salt thereof.

**12.** An agrochemical composition according to Claim 1, wherein the compound of formula (I) is 2-(4-fluorophenyl)-1-(1H-1,2,4-triazol-1-yl)-3-trimethylsilyl-2-propanol or a salt thereof.

**13.** An agrochemical composition according to Claim 1, wherein the compound of formula (I) is 2-(2,4-difluorophenyl)-1-(1H-1,2,4-triazol-1-yl)-3-trimethylsilyl-2-propanol or a salt thereof.

**14.** An agrochemical composition according to any preceding Claim, wherein the further agent comprises 3-hydroxy-5-methylisoxazole or a salt thereof.

**15.** An agrochemical composition according to Claim 14, wherein the further agent comprises an alkali metal or alkaline earth metal salt of 3-hydroxy-5-methylisoxazole.

16. An agrochemical composition according to Claim 15, wherein the salt is the sodium, potassium or calcium salt.

17. An agrochemical composition according to Claim 15, wherein the salt is the dihydrate of the calcium salt of 3-hydroxy-5-methylisoxazole.

18. An agrochemical composition according to any of Claims 1 to 13, wherein the further agent comprises:

IIa. 1,5-pentanedial;
IIb. 2,5-dimethoxytetrahydrofuran;
IIc. glyoxal;
IId. benzalkonium chloride;
IIe. 1,2-benzisothiazolin-3-one;
IIf. cupric hydroxide;
IIg. 4-chloro-2-xylenol;
IIh. 4-chloro-2-cresol; and/or
IIi. p-hydroxybenzoic acid ethyl ester.

19. An agrochemical composition according to Claim 18, wherein the further agent is 1,5-pentanedial, 1,2-benzisothiazolin-3-one and/or cupric hydroxide.

20. An agrochemical composition according to any of Claims 1 to 13, wherein the further agent comprises: methyl 1-(butylcarbamoyl)-2-benzimidazolecarbamate; methyl 2-benzimidazolecarbamate; 2-(4-thiazolyl)-1H-benzimidazole; and/or 1,2-bis(3-methoxycarbonyl-2-thioureido)benzene.

21. An agrochemical composition according to any of Claims 1 to 13, wherein the further agent comprises:

(1RS,2RS;1RS,2SR)-1-(4-chlorophenoxy)-3,3-dimethyl-1-(1H-1,2,4-triazol-1-yl)butan-2-ol;
1-{[2-(2,4-dichlorophenyl)-4-propyl-1,3-dioxolan-2-yl]-methyl}-1H-1,2,4-triazole;
(RS)-2-(2,4-dichlorophenyl)-1-(1H-1,2,4-triazol-1-yl)-hexan-2-ol;
bis(4-fluorophenyl)methyl(1H-1,2,4-triazol-1-ylmethyl)-silane;
(E)-4-chloro-α,α,α-trifluoro-N-(1-imidazol-1-yl-2-propoxyethylidene)-O-toluidine;
N-propyl-N-[2-(2,4,6-trichlorophenoxy)ethyl]-1H-imidazole-1-carboxamide;
cis-4-[3-(4-tert-butylphenyl)-2-methylpropyl]-2,6-dimethylmorpholine;
(1RS,5RS;1RS,5SR)-5-(4-chlorobenzyl)-2,2-dimethyl-1-(1H-1,2,4-triazol-1-ylmethyl)cyclopentanol;
2,2-dimethyl-4-chloro-5-(4-chlorobenzylidene)-1-cyclopentanone;
(2RS,3RS;2RS,3SR)-2-(4-chlorophenyl)-3-cyclopropyl-1-(1H-1,2,4-triazol-1-yl)butan-2-ol;
4-chlorobenzyl N-2,4-dichlorophenyl-2-(1H-1,2,4-triazol-1-yl)thioacetamidate;
2-(4-chlorophenyl)-2-(1H-1,2,4-triazol-1-ylmethyl)hexanenitrile;
pent-4-enyl N-furfuryl-N-imidazol-1-ylcarbonyl-DL-homoalaninate;
2',4'-dichloro-2-(3-pyridyl)acetophenone-O-methyloxime;
(RS)-1-(4-chlorophenyl)-4,4-dimethyl-3-(1H-1,2,4-triazol-1-ylmethyl)pentan-3-ol;
1-(4-chlorophenoxy)-3,3-dimethyl-1-(1H-1,2,4-triazol-1-yl)-2-butanone; and/or
2,6-dimethyl-4-tridecylmorpholine.

22. An agrochemical composition according to any preceding Claim, wherein the composition further comprises 1,2-benzisothiazolin-3-one and/or at least one of cupric hydroxide, copper sulphate and/or copper-8-quinolate, provided that, where the composition already comprises a copper compound, then the composition contains 1,2-benzisothiazolin-3-one.

23. An agrochemical composition according to Claim 22, comprising cupric hydroxide.

24. An agrochemical composition according to Claim 22, comprising 1,2-benzisothiazolin-3-one.

25. An agrochemical composition according to Claim 22, wherein, in the compound of formula (I):

A represents a 1,2,4-triazol-1-yl group;

n is 1 or 2, and X represents a fluorine atom, a chlorine atom or a bromine atom, and the substituent represented by X is at the 2-position and/or the 4-position of the benzene ring;

and

each of $R^1$, $R^2$ and $R^3$ is a methyl group.

**26.** An agrochemical composition according to Claim 22, wherein the compound of formula (I) is 2-(4-fluorophenyl)-1-(1H-1,2,4-triazol-1-yl)-3-trimethylsilyl-2-propanol.

**27.** An agrochemical composition according to any of Claims 22 to 26, comprising 3-hydroxy-5-methylisoxazole or a salt thereof.

**28.** An agrochemical composition according to any of Claims 22 to 27, comprising the dihydrate of the calcium salt of 3-hydroxy-5-methylisoxazole.

**29.** A composition according to any preceding Claim, wherein the ratio between the compounds of the composition is so chosen as to exhibit synergistic antifungal and/or antimicrobial activity.

**30.** An agricultural preparation for the protection of plants and plant reproductive matter from attack by pathogenic microorganisms, which preparation comprises a composition as defined in any preceding Claim, in admixture with an agricultural carrier or diluent.

**31.** A method of protecting plants and plant reproductive matter from fungal attack, which method comprises applying to the plants or plant reproductive matter or to a locus including the same a composition as defined in any of Claims 1 to 29 or preparation as defined in Claim 30.

**32.** Use of a combination of compounds as defined in any of Claims 1 to 29 in the manufacture of an agricultural preparation for the treatment and/or prophylaxis of fungal and/or microbial infections of plants.

**33.** Plant reproductive matter coated at least partially with a composition or preparation as defined in any of Claims 1 to 30.

**34.** Plant reproductive matter according to Claim 33, wherein said matter consists of seeds.

**Patentansprüche**

**1.** Agrochemische Zusammensetzung, die mindestens eine Verbindung der Formel (I)

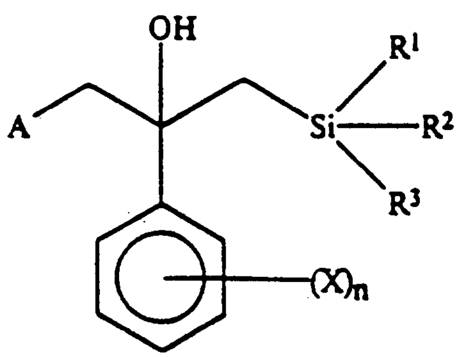

(I)

worin

A eine 1,2,4-Triazol-1-yl-Gruppe oder eine Imidazol-1-yl-Gruppe bedeutet,

n 0, 1, 2 oder 3 bedeutet und, wenn n 2 oder 3 bedeutet, die durch X dargestellten Gruppen gleich oder verschieden sein können,

X ein Halogenatom, eine Phenylgruppe, eine Alkylgruppe mit 1 bis 6 Kohlenstoffatomen, eine Halogenalkylgruppe mit 1 bis 6 Kohlenstoffatomen, die mindestens ein Halogenatom aufweist, eine Alkoxygruppe mit 1 bis 6 Kohlenstoffatomen oder eine Halogenalkoxygruppe mit 1 bis 6 Kohlenstoffatomen, die mindestens ein Halogenatom aufweist, bedeutet, oder $(X)_n$ eine Alkylendioxygruppe mit 1 oder 2 Kohlenstoffatomen darstellt,

$R^1$ eine Alkylgruppe mit 1 bis 4 Kohlenstoffatomen oder eine Phenylgruppe, die unsubstituiert ist oder die mit mindestens einem Halogenatom substituiert ist, bedeutet und

$R^2$ und $R^3$ unabhängig voneinander unter Alkylgruppen mit 1 bis 4 Kohlenstoffatomen ausgewählt sind,

oder ein agrochemisch geeignetes Salz dieser Verbindung
im Gemisch mit oder assoziiert mit mindestens einem antimikrobiellen Mittel und/oder einem weiteren fungiziden Mittel, das verschieden von einer Verbindung der Formel (I) oder einem agrochemisch geeigneten Salz einer Verbindung der Formel (I) ist, enthält.

**2.** Agrochemische Zusammensetzung nach Anspruch 1, wobei in der Verbindung der Formel (I) A eine 1,2,4-Triazol-1-yl-Gruppe bedeutet.

**3.** Agrochemische Zusammensetzung nach Anspruch 1 oder Anspruch 2, wobei in der Verbindung der Formel (I) n 0, 1 oder 2 bedeutet.

**4.** Agrochemische Zusammensetzung nach Anspruch 1 oder Anspruch 2, wobei in der Verbindung der Formel (I) n 3 ist und X in der 2-, 4- und 6-Stellung des Benzolrings vorliegt.

**5.** Agrochemische Zusammensetzung nach Anspruch 1 oder Anspruch 2, wobei in der Verbindung der Formel (I) n 2 ist und X in der 2- und 4-Stellung des Benzolrings vorliegt.

**6.** Agrochemische Zusammensetzung nach Anspruch 1 oder Anspruch 2, wobei in der Verbindung der Formel (I) n 1 ist und X in 2- und 4-Stellung des Benzolrings vorliegt.

**7.** Agrochemische Zusammensetzung nach Anspruch 1, wobei in der Verbindung der Formel (I)

A eine 1,2,4-Triazol-1-yl-Gruppe bedeutet,

n 1 oder 2 ist und X ein Fluoratom, ein Chloratom, ein Bromatom, eine unsubstituierte Alkylgruppe mit 1 bis 4 Kohlenstoffatomen, eine substituierte Alkylgruppe, die 1 bis 4 Kohlenstoffatome aufweist und die mit 1 bis 3 Halogenatomen substituiert ist, eine unsubstituierte Alkoxygruppe mit 1 bis 4 Kohlenstoffatomen oder eine substituierte Alkoxygruppe, die 1 bis 4 Kohlenstoffatome aufweist und die mit 1 bis 3 Halogenatomen substituiert ist, bedeutet,
oder n für 0 steht und

$R^1$, $R^2$ und $R^3$ gleich oder verschieden sind und jeweils eine Alkylgruppe mit 1 bis 4 Kohlenstoffatomen bedeuten.

**8.** Agrochemische Zusammensetzung nach Anspruch 1, wobei in der Verbindung der Formel (I)

A eine 1,2,4-Triazol-1-yl-Gruppe bedeutet,

n 1 oder 2 ist und X ein Fluoratom, ein Chloratom, ein Bromatom, eine Trifluormethylgruppe oder eine Methoxygruppe bedeutet und der durch X verkörperte Substituent in 2-Stellung und/oder in 4-Stellung des Benzolrings vorliegt,
oder n für 0 steht und

$R^1$, $R^2$ und $R^3$ gleich oder verschieden sind und jeweils eine Methylgruppe oder eine Ethylgruppe bedeuten.

**9.** Agrochemische Zusammensetzung nach Anspruch 1, wobei in der Verbindung der Formel (I)

A eine 1,2,4-Triazol-1-yl-Gruppe bedeutet,

n 1 oder 2 ist und X ein Fluoratom, ein Chloratom oder ein Bromatom bedeutet und der durch X verkörperte Substituent in 2-Stellung und/oder in 4-Stellung des Benzolrings vorliegt,
oder n 0 ist und

$R^1$, $R^2$ und $R^3$ gleich oder verschieden sind und jeweils eine Methylgruppe oder eine Ethylgruppe bedeuten.

**10.** Agrochemische Zusammensetzung nach Anspruch 1, wobei in der Verbindung der Formel (I)

A eine 1,2,4-Triazol-1-yl-Gruppe bedeutet,

n 1 oder 2 ist und X ein Fluoratom oder ein Chloratom bedeutet und der durch X verkörperte Substituent in 2-Stellung und/oder in 4-Stellung des Benzolrings vorliegt, und

jedes von $R^1$, $R^2$ und $R^3$ eine Methylgruppe bedeutet.

**11.** Agrochemische Zusammensetzung nach Anspruch 1, wobei die Verbindung der Formel (I) 2-(4-Chlorphenyl)-1-(1H-1,2,4-triazol-1-yl)-3-trimethylsilyl-2-propanol oder ein Salz davon ist.

**12.** Agrochemische Zusammensetzung nach Anspruch 1, wobei die Verbindung der Formel (I) 2-(4-Fluorphenyl)-1-(1H-1,2,4-triazol-1-yl)-3-trimethylsilyl-2-propanol oder ein Salz davon ist.

**13.** Agrochemische Zusammensetzung nach Anspruch 1, wobei die Verbindung der Formel (I) 2-(2,4-Difluorphenyl)-1-(1H-1,2,4-triazol-1-yl)-3-trimethylsilyl-2-propanol oder ein Salz davon ist.

**14.** Agrochemische Zusammensetzung nach einem der vorhergehenden Patentansprüche, wobei als weiteres Mittel 3-Hydroxy-5-methylisoxazol oder ein Salz davon vorhanden ist.

**15.** Agrochemische Zusammensetzung nach Anspruch 14, wobei als weiteres Mittel ein Alkalimetallsalz oder Erdalkalimetallsalz von 3-Hydroxy-5-methylisoxazol vorliegt.

**16.** Agrochemische Zusammensetzung nach Anspruch 15, wobei das Salz das Natrium-, Kalium- oder Calciumsalz ist.

**17.** Agrochemische Zusammensetzung nach Anspruch 15, wobei das Salz das Dihydrat des Calciumsalzes von 3-Hydroxy-5-methylisoxazol ist.

**18.** Agrochemische Zusammensetzung nach einem der Ansprüche 1 bis 13, wobei das weiter Mittel umfaßt:

IIa. 1,5-Pentandial;
IIb. 2,5-Dimethoxytetrahydrofuran;
IIc. Glyoxal;
IId. Benzalkoniumchlorid;
IIe. 1,2-Benzisothiazolin-3-on;
IIf. Kupfer-II-hydroxid;
IIg. 4-Chlor-2-xylenol;
IIh. 4-Chlor-2-cresol; und/oder
IIi. p-Hydroxybenzoesäure-ethylester.

**19.** Agrochemische Zusammensetzung nach Anspruch 18, wobei das weitere Mittel 1,5-Pentandial, 1,2-Benzisothiazolin-3-on und/oder Kupfer-II-hydroxid ist.

**20.** Agrochemische Zusammensetzung nach einem der Ansprüche 1 bis 13, wobei das weitere Mittel umfaßt:

Methyl-1-(butylcarbamoyl)-2-benzimidazolcarbamat;
Methyl-2-benzimidazolcarbamat;
2-(4-Thiazolyl)-1H-benzimidazol und/oder
1,2-Bis(3-methoxycarbonyl-2-thioureido)benzol.

**21.** Agrochemische Zusammensetzung nach einem der Ansprüche 1 bis 13, wobei das weitere Mittel umfaßt:

(1RS,2RS;1RS,2SR)-1-(4-Chlorphenoxy)-3,3-dimethyl-1-(1H-1,2,4-triazol-1-yl)butan-2-ol;
1-{[2-(2,4-Dichlorphenyl)-4-propyl-1,3-dioxolan-2-yl]-methyl}-1H-1,2,4-triazol;
(RS)-2-(2,4-Dichlorphenyl)-1-(1H-1,2,4-triazol-1-yl)hexan-2-ol;
Bis(4-fluorphenyl)methyl(1H-1,2,4-triazol-1-ylmethyl)silan;
(E)-4-Chlor-α,α,α-trifluor-N-(1-imidazol-1-yl-2-propoxyethyliden)-O-toluidin;
N-Propyl-N-[2-(2,4,6-trichlorphenoxy)ethyl]-1H-imidazol-1-carboxamid;
cis-4-[3-(4-tert-Butylphenyl)-2-methylpropyl]-2,6-dimethylmorpholin;
(1RS,5RS;1RS,5SR)-5-(4-Chlorbenzyl)-2,2-dimethyl-1-(1H-1,2,4-triazol-1-ylmethyl)cyclopentanol;
2,2-Dimethyl-4-chlor-5-(4-chlorbenzyliden)-1-cyclopentanon;
(2RS,3RS;2RS,3SR)-2-(4-Chlorphenyl)-3-cyclopropyl-1-(1H-1,2,4-triazol-1-yl)butan-2-ol;
4-Chlorbenzyl N-2,4-dichlorphenyl-2-(1H-1,2,4-triazol-1-yl)thioacetamidat;
2-(4-Chlorphenyl)-2-(1H-1,2,4-triazol-1-ylmethyl)hexannitril;
Pent-4-enyl-N-furfuryl-N-imidazol-1-ylcarbonyl-DL-homoalaninat;
2',4'-Dichlor-2-(3-pyridyl)acetophenon-O-methyloxim;
(RS)-1-(4-Chlorphenyl)-4,4-dimethyl-3-(1H-1,2,4-triazol-1-ylmethyl)pentan-3-ol;
1-(4-Chlorphenoxy)-3,3-dimethyl-1-(1H-1,2,4-triazol-1-yl)-2-butanon und/oder
2,6-Dimethyl-4-tridecylmorpholin.

**22.** Agrochemische Zusammensetzung nach einem der vorhergehenden Patentansprüche, wobei die Zusammensetzung weiterhin 1,2-Benzisothiazolin-3-on und/oder mindestens eine der Verbindungen Kupfer-II-hydroxid, Kupfersulfat und/oder Kupfer-8-chinolat enthält, mit der Maßgabe daß dann, wenn die Zusammensetzung bereits eine Kupferverbindung enthält, die Zusammensetzung 1,2-Benzisothiazolin-3-on enthält.

**23.** Agrochemische Zusammensetzung nach Anspruch 22, die Kupfer-II-hydroxid enthält.

**24.** Agrochemische Zusammensetzung nach Anspruch 22, die 1,2-Benzisothiazolin-3-on enthält.

**25.** Agrochemische Zusammensetzung nach Anspruch 22, wobei in der Verbindung der Formel (I)

A eine 1,2,4-Triazol-1-yl-Gruppe bedeutet,

n 1 oder 2 ist und X ein Fluoratom, ein Chloratom oder ein Bromatom bedeutet und der durch X verkörperte Substituent in 2-Stellung und/oder in 4-Stellung des Benzolrings vorliegt und

jedes von $R^1$, $R^2$ und $R^3$ eine Methylgruppe bedeutet.

**26.** Agrochemische Zusammensetzung nach Anspruch 22, wobei die Verbindung der Formel (I) 2-(4-Fluorphenyl)-1-(1H-1,2,4-triazol-1-yl)-3-trimethylsilyl-2-propanol ist.

**27.** Agrochemische Zusammensetzung nach einem der Ansprüche 22 bis 26, die 3-Hydroxy-5-methylisoxazol oder ein Salz davon enthält.

**28.** Agrochemische Zusammensetzung nach einem der Ansprüche 22 bis 27, welche das Dihydrat des Calciumsalzes von 3-Hydroxy-5-methylisoxazol enthält.

**29.** Zusammensetzung nach einem der vorhergehenden Patentansprüche, wobei das Verhältnis zwischen den Verbindungen der Zusammensetzung so gewählt ist, daß eine synergistische fungizide und/oder antimikrobielle Aktivität erzielt wird.

**30.** Für die Landwirtschaft bestimmte Zubereitung zum Schutz von Pflanzen und pflanzlichem Vermehrungsgut gegen den Angriff durch pathogene Mikroorganismen, enthaltend eine Zusammensetzung gemäß der Definition in einem der vorhergehenden Patentansprüche im Gemisch mit einem landwirtschaftlich geeigneten Trägermaterial oder Verdünnungsmittel.

**31.** Verfahren zum Schutz von Pflanzen und pflanzlichem Vermehrungsgut gegen den Angriff durch Pilze, welches darin besteht, daß auf die Pflanzen oder das pflanzliche Vermehrungsgut oder auf einen diese enthaltenden Ort eine Zusammensetzung gemäß der Definition in einem der Ansprüche 1 bis 29 oder eine Zubereitung gemäß der Definition in Anspruch 30 aufgetragen wird.

32. Verwendung einer Kombination von Verbindungen gemäß der Definition in einem der Ansprüche 1 bis 29 bei der Herstellung einer für die Landwirtschaft bestimmten Zusammensetzung zur Behandlung und/oder Prophylaxe von durch Pilze und/oder Mikroben verursachten Infektionen von Pflanzen.

33. Vermehrungsgut von Pflanzen, das mindestens teilweise mit einer Zusammensetzung oder Zubereitung gemäß der Definition in einem der Ansprüche 1 bis 30 überzogen ist.

34. Pflanzliches Vermehrungsgut nach Anspruch 33, wobei das Vermehrungsgut aus Samen besteht.

## Revendications

1. Composition agrochimique, comprenant au moins un composé de formule (I) :

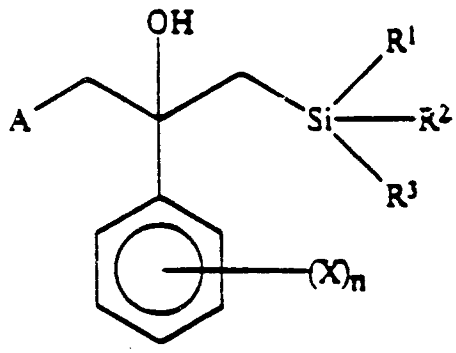

(I)

(dans laquelle :

A représente un groupe 1,2,4-triazol-1-yle ou un groupe imidazol-1-yle ;
n est égal à 0, 1, 2 ou 3, et lorsque n est égal à 2 ou 3, les groupes représentés par X peuvent être identiques ou différents ;
X représente un atome d'halogène, un groupe phényle, un groupe alkyle comportant de 1 à 6 atomes de carbone, un groupe haloalkyle comportant de 1 à 6 atomes de carbone et comportant au moins un atome d'halogène, un groupe alkoxy comportant de 1 à 6 atomes de carbone, ou un groupe haloalkoxy comportant de 1 à 6 atomes de carbone et comportant au moins un atome d'halogène, ou $(X)_n$ représente un groupe alkylènedioxy comportant 1 ou 2 atomes de carbone ;
$R^1$ représente un groupe alkyle comportant de 1 à 4 atomes de carbone ou un groupe phényle non substitué ou substitué par au moins un atome d'halogène ; et
$R^2$ et $R^3$ sont indépendamment choisis parmi les groupes alkyle comportant de 1 à 4 atomes de carbone ; ou

un sel agrochimiquement acceptable de celui-ci)
en mélange ou en association avec au moins un agent anti-microbien et/ou autre agent antifongique différent d'un composé de formule (I) ou d'un sel agrochimiquement acceptable d'un composé de formule (I).

2. Composition agrochimique selon la revendication 1, dans laquelle, dans le composé de formule (I), A représente un groupe 1,2,4-triazol-1-yle.

3. Composition agrochimique selon la revendication 1 ou la revendication 2, dans laquelle, dans le composé de formule (I), n est égal à 0, 1 ou 2.

4. Composition agrochimique selon la revendication 1 ou 2, dans laquelle, dans le composé de formule (I), n est égal à 3 et les groupes X sont aux positions 2, 4 et 6 du cycle benzénique.

5. Composition agrochimique selon la revendication 1 ou la revendication 2, dans laquelle, dans le composé de formule (I), n est égal à 2 et les groupes X sont aux positions 2 et 4 du cycle benzénique.

6. Composition agrochimique selon la revendication 1 ou la revendication 2, dans laquelle, dans le composé de formule (I), n est égal à 1 et X est à la position 2 ou 4 du cycle benzénique.

7. Composition agrochimique selon la revendication 1, dans laquelle, dans le composé de formule (I) :

   A représente un groupe 1,2,4-triazol-1-yle ;
   n est égal à 1 ou 2, et X représente un atome de fluor, un atome de chlore, de brome, un groupe alkyle non substitué comportant de 1 à 4 atomes de carbone, un groupe alkyle substitué comportant de 1 à 4 atomes de carbone, et substitué par 1 à 3 atomes d'halogène, un groupe alkoxy non substitué comportant de 1 à 4 atomes de carbone, ou un groupe alkoxy substitué comportant de 1 à 4 atomes de carbone et substitué par 1 à 3 atomes d'halogène ; ou
   n est égal à 0 ; et
   $R^1$, $R^2$ et $R^3$ sont identiques ou différents et représentent chacun un groupe alkyle comportant de 1 à 4 atomes de carbone.

8. Composition agrochimique selon la revendication 1, dans laquelle, dans le composé de formule (I) :

   A représente un groupe 1,2,4-triazol-1-yle ;
   n est égal à 1 ou 2, et X représente un atome de fluor, de chlore, de brome, un groupe trifluorométhyle ou méthoxy, et le ou les substituants représentés par X sont à la position 2 et/ou à la position 4 du cycle benzénique ; ou
   n est égal à 0 ; et
   $R^1$, $R^2$ et $R^3$ sont identiques ou différents, et représentent chacun un groupe méthyle ou éthyle.

9. Composition agrochimique selon la revendication 1, dans laquelle, dans le composé de formule (I) :

   A représente un groupe 1,2,4-triazol-1-yle ;
   n est égal à 1 ou 2, et X représente un atome de fluor, de chlore ou de brome, et le ou les substituants représentés par X sont à la position 2 et/ou à la position 4 du cycle benzénique ; ou
   n est égal à 0 ; et
   $R^1$, $R^2$ et $R^3$ sont identiques ou différents, et représentent chacun un groupe méthyle ou éthyle.

10. Composition agrochimique selon la revendication 1, dans laquelle, dans le composé de formule (I) :

   A représente un groupe 1,2,4-triazol-1-yle ;
   n est égal à 1 ou 2, et X représente un atome de fluor ou de chlore, et le ou les substituants représentés par X sont à la position 2 et/ou la position 4 du cycle benzénique ; et
   chacun des groupes $R^1$, $R^2$ et $R^3$ représente un groupe méthyle.

11. Composition agrochimique selon la revendication 1, dans laquelle le composé de formule (I) est le 2-(4-chlorophényl)-1-(1H-1,2,4-triazol-1-yl)-3-triméthylsilyl-2-propanol ou un sel de celui-ci.

12. Composition agrochimique selon la revendication 1, dans laquelle le composé de formule (I) est le 2-(4-fluorophényl)-1-(1H-1,2,4-triazol-1-yl)-3-triméthylsilyl-2-propanol ou un sel de celui-ci.

13. Composition agrochimique selon la revendication 1, dans laquelle le composé de formule (I) est le 2-(2,4-difluorophényl)-1-(1H-1,2,4-triazol-1-yl)-3-triméthylsilyl-2-propanol ou un sel de celui-ci.

14. Composition agrochimique selon l'une quelconque des revendications précédentes, dans laquelle l'autre agent comprend le 3-hydroxy-5-méthylisoxazole ou un sel de celui-ci.

15. Composition agrochimique selon la revendication 14, dans laquelle l'autre agent comprend un sel de métal alcalin ou de métal alcalino-terreux de 3-hydroxy-5-méthylisoxazole.

16. Composition agrochimique selon la revendication 15, dans lequel le sel est le sel de sodium, de potassium ou de calcium.

17. Composition agrochimique selon la revendication 15, dans laquelle le sel est le dihydrate du sel de calcium du 3-hydroxy-5-méthylisoxazole.

18. Composition agrochimique selon l'une quelconque des revendications 1 à 13, dans laquelle l'autre agent comprend :

IIa. le 1,5-pentanedial ;
IIb. le 2,5-diméthoxytétrahydrofuranne ;
IIc. le glyoxal ;
IId. le chlorure de benzalkonium ;
IIe. la 1,2-benzisothiazolin-3-one ;
IIf. l'hydroxyde cuivrique ;
IIg. le 4-chloro-2-xylénol ;
IIh. le 4-chloro-2-crésol ; et/ou
IIi. l'ester éthylique de l'acide p-hydroxybenzoïque.

19. Composition agrochimique selon la revendication 18, dans laquelle l'autre agent comprend le 1,5-pentanedial, la 1,2-benzisothiazolin-3-one et/ou l'hydroxyde cuivrique.

20. Composition agrochimique selon l'une quelconque des revendications 1 à 13, dans laquelle l'autre agent comprend : le 1-(butylcarbamoyl)-2-benzimidazolecarbamate de méthyle ; le 2-benzimidazolecarbamate de méthyle ; le 2-(4-thiazolyl)-1H-benzimidazole ; et/ou le 1,2-bis(3-méthoxycarbonyl-2-thiouréido)benzène.

21. Composition agrochimique selon l'une quelconque des revendications 1 à 13, dans laquelle l'autre agent comprend :

le (1RS,2RS;1RS,2SR)-1-(4-chlorophénoxy)-3,3-diméthyl-1-(1H-1,2,4-triazol-1-yl)butan-2-ol ;
le 1-{[2-(2,4-dichlorophényl)-4-propyl-1,3-dioxolan-2-yl]méthyl}-1H-1,2,4-triazole ;
le (RS)-2-(2,4-dichlorophényl)-1-(1H-1,2,4-triazol-1-yl)hexan-2-ol ;
le bis(4-fluorophényl)méthyl(1H-1,2,4-triazol-1-ylméthyl)silane ;
la (E)-4-chloro-$\alpha,\alpha,\alpha$-trifluoro-N-(1-imidazol-1-yl-2-propoxyéthylidène)-O-toluidine ;
le N-propyl-N-[2-(2,4,6-trichlorophénoxy)éthyl]-1H-imidazole-1-carboxamide ;
la cis-4-[3-(4-tert-butylphényl)-2-méthylpropyl]-2,6-diméthylmorpholine ;
le (1RS,5RS;1RS,5SR)-5-(4-chlorobenzyl)-2,2-diméthyl-1-(1H-1,2,4-triazol-1-ylméthyl)cyclopentanol ;
la 2,2-diméthyl-4-chloro-5-(4-chlorobenzylidène)-1-cyclopentanone ;
le (2RS,3RS;2RS,3SR)-2-(4-chlorophényl)-3-cyclopropyl-1-(1H-1,2,4-triazol-1-yl)butan-2-ol ;
le N-2,4-dichlorophényl-2-(1H-1,2,4-triazol-1-yl)thioacétamidate de 4-chlorobenzyle ;
le 2-(4-chlorophényl)-2-(1H-1,2,4-triazol-1-ylméthyl)hexane-nitrile ;
le N-furfuryl-N-imidazol-1-ylcarbonyl-DL-homoalaninate de pent-4-ényle ;
la 2',4'-dichloro-2-(3-pyridyl)acétophénone-O-méthyloxime ;
le (RS)-1-(4-chlorophényl)-4,4-diméthyl-3-(1H-1,2,4-triazol-1-ylméthyl)pentan-3-ol ;
la 1-(4-chlorophénoxy)-3,3-diméthyl-1-(1H-1,2,4-triazol-1-yl)-2-butanone ; et/ou
la 2,6-diméthyl-4-tridécylmorpholine.

22. Composition agrochimique selon l'une quelconque des revendications précédentes, dans laquelle la composition comprend en outre de la 1,2-benzisothiazolin-3-one et/ou au moins un composé choisi parmi l'hydroxyde cuivrique, le sulfate de cuivre et/ou le 8-quinoléate de cuivre, à condition que lorsque la composition comprend déjà un composé cuprique, la composition contienne alors de la 1,2-benzisothiazolin-3-one.

23. Composition agrochimique selon la revendication 22, comprenant de l'hydroxyde cuivrique.

24. Composition agrochimique selon la revendication 22, comprenant de la 1,2-benzisothiazolin-3-one.

25. Composition agrochimique selon la revendication 22, dans laquelle, dans le composé de formule (I) :

A représente un groupe 1,2,4-triazol-1-yle ;
n est égal à 1 ou 2, et X représente un atome de fluor, de chlore ou de brome, et le ou les substituants représentés par X sont à la position 2 et/ou à la position 4 du cycle benzénique ; et
chacun des groupes $R^1$, $R^2$ et $R^3$ représente un groupe méthyle.

26. Composition agrochimique selon la revendication 22, dans laquelle le composé de formule (I) est le 2-(4-fluorophényl)-1-(1H-1,2,4-triazol-1-yl)-3-triméthylsilyl-2-propanol.

27. Composition agrochimique selon l'une quelconque des revendications 22 à 26, comprenant le 3-hydroxy-5-méthylisoxazole ou un sel de celui-ci.

28. Composition agrochimique selon l'une quelconque des revendications 22 à 27, comprenant le dihydrate du sel de calcium du 3-hydroxy-5-méthylisoxazole.

29. Composition selon l'une quelconque des revendications précédentes, dans laquelle le rapport entre les composés de la composition est choisi de façon à procurer une activité antifongique et/ou antimicrobienne synergique.

30. Produit agricole pour la protection de plantes et d'un organe de reproduction végétale contre une attaque par des micro-organismes pathogènes, ce produit comprenant une composition telle que définie dans l'une quelconque des revendications précédentes, en mélange avec un véhicule ou un diluant agricole.

31. Procédé de protection de plantes et d'un organe de reproduction végétale contre une attaque fongique, selon lequel on applique sur les plantes ou l'organe de reproduction végétale ou à un emplacement les comprenant, une composition définie selon l'une quelconque des revendications 1 à 29, ou un produit tel que défini dans la revendication 30.

32. Utilisation d'une composition de composés telle que définie dans l'une quelconque des revendications 1 à 29, pour la fabrication d'un produit agricole destiné au traitement et/ou la prophylaxie d'infections fongiques et/ou microbiennes de plantes.

33. Organe de reproduction végétale au moins partiellement revêtu d'une composition ou d'un produit tel que défini dans l'une quelconque des revendications 1 à 30.

34. Organe de reproduction végétale selon la revendication 33, dans lequel cet organe consiste en une graine.